# EUROPEAN PATENT SPECIFICATION

(11) **EP 3 173 457 B1**
(45) Date of publication and mention of the grant of the patent: **05.06.2019**
(21) Application number: 15824361.8
(22) Date of filing: 14.07.2015
(51) Int. Cl.: C09K 19/42, C09K 19/12, C09K 19/14, C09K 19/16, C09K 19/18, C09K 19/20, C09K 19/24, C09K 19/30, C09K 19/32, C09K 19/34, C09K 19/38, G02F 1/13, C09K 19/54, G02F 1/1341

(54) **LIQUID-CRYSTAL COMPOSITION AND LIQUID-CRYSTAL DISPLAY ELEMENT OBTAINED USING SAME**
FLÜSSIGKRISTALLZUSAMMENSETZUNG UND DARAUS GEWONNENES FLÜSSIGKRISTALLANZEIGEELEMENT
COMPOSITION À CRISTAUX LIQUIDES ET ÉLÉMENT D'AFFICHAGE À CRISTAUX LIQUIDES OBTENU PAR SON UTILISATION

(30) Priority: 25.07.2014 JP 2014151814
(43) Date of publication of application: 31.05.2017
(73) Proprietor: DIC Corporation, Tokyo 174-8520 (JP)
(72) Inventor: HIRATA Shinichi, Kitaadachi-gun Saitama 362-8577 (JP); SUDO Go, Kitaadachi-gun Saitama 362-8577 (JP)
(74) Representative: TBK
(86) International application number: PCT/JP2015/070132
(87) International publication number: WO 2016/013449

(56) References cited:
- EP-A1- 0 945 418
- EP-A1- 1 026 143
- WO-A1-99/21816
- WO-A1-99/52871
- CN-A- 101 519 594
- JP-A- 2000 053 602
- JP-A- 2000 256 307
- JP-A- 2001 031 685
- JP-A- 2001 139 511

## Description

### Technical Field

The present invention relates to a liquid crystal composition and liquid crystal display device which are useful for producing a liquid crystal display apparatus or another apparatus.

### Background Art

### Citation List

### Patent Literature

PTL 1: U.S. Patent No. 5,204,019
PTL 2: U.S. Patent No. 5,279,764
PTL 3: German Patent Application Publication No. 2290787
PTL 4: EP 0 945 418 A1
PTL 5: EP 1 026 143 A1
PTL 6: CN 101519594 A
PTL 7: WO 9921816 A1
PTL 8: JP 2000-053602 A
PTL 9: WO 9952871 A1
PTL 10: JP 2000-256307 A
PTL 11: JP 2001-031685 A
PTL 12: JP 2001-139511 A

Liquid crystal display devices are applied to, for example, watches, calculators, a variety of household electrical appliances, measuring equipment, panels used in automobiles, word processors, electronic notebooks, printers, computers, and television sets. Representative examples of types of liquid crystal display devices include a TN (twisted nematic) type, an STN (super twisted nematic) type, a DS (dynamic scattering) type, a GH (guest·host) type, an IPS (in-plane switching) type, an OCB (optically compensated birefringence) type, an ECB (electrically controlled birefringence) type, a VA (vertical alignment) type, a CSH (color super homeotropic) type, and an FLC (ferroelectric liquid crystal) type. Examples of a drive system include static driving, multiplex driving, a passive matrix, and an active matrix (AM) in which, for example, a TFT (thin film transistor) or a TFD (thin film diode) is used for driving.

Among these types of liquid crystal display devices, an IPS type, an ECB type, a VA type, and a CSH type are characterized in that a liquid crystal material having a negative Δε is used. In particular, a VA type with AM driving is applied to display devices that need to quickly operate and to have a wide viewing angle, such as television sets.

Nematic liquid crystal compositions used in, for instance, display devices of a VA type need to enable driving at low voltage, a quick response, and a broad range of operating temperature. In other words, a liquid crystal composition having a negative Δε with a large absolute value, low viscosity, and a high nematic phase-isotropic liquid phase transition temperature (Tₙᵢ) has been demanded. In order to control Δn × d that is the product of refractive index anisotropy (Δn) and a cell gap (d) to be a predetermined value, the Δn of a liquid crystal material needs to be adjusted to be in a proper range on the basis of the cell gap. In addition, a quick response is important in liquid crystal display devices applied to television sets or other apparatuses, which generates a need for a liquid crystal material having a low viscosity (η).

Any type of liquid crystal display devices needs to have a high reliability. Liquid crystal display devices are exposed to UV light in a production process thereof and in use thereof; however, such UV exposure should not cause any impairment, or, if any, display quality should not be affected. In order to produce a liquid crystal composition and liquid crystal display device having a high reliability that defective display, such as image-sticking and uneven display, does not occur or is less likely to occur, it is generally believed that a voltage holding ratio (VHR) needs to be kept high. Techniques for enhancing the reliability have been studied, in which a liquid crystal composition itself and compounds that are the components of the liquid crystal composition are purified to reduce impairment brought about by UV exposure (see Patent Literatures 1 to 3). Such studies can bring some enhancements in the reliability; however, a liquid crystal composition with further enhanced reliability needs to be developed as advanced liquid crystal display devices have been demanded these days.

PTL 4 discloses liquid crystalline compounds, liquid crystal compositions comprising the liquid crystalline compound, and liquid crystal display devices fabricated by using the liquid crystal composition. The liquid crystalline compounds which exhibit a negative dielectric anisotropy value, have an extremely high voltage holding ratio and a low threshold voltage, are remarkably small in their dependency on temperature, hardly exhibit smectic phase, and are excellent in miscibility with other liquid crystal materials.

PTL 5 is directed to liquid crystalline compounds having 2,3-difluorophenyl moiety, liquid crystal compositions comprising the liquid crystalline compound, and liquid crystal display devices fabricated by using the liquid crystal composition.

In PTL 6, a liquid crystal mixture and a liquid crystal display part containing the same are mentioned. The liquid crystal mixture has large negative dielectric anisotropy, broad nematic phase range, high resistivity and low viscosity. The display part using the liquid crystal mixture has low threshold voltage, low electricity consumption, high reliability and excellent response performance.

PTL 7 discloses a liquid-crystal compositing containing liquid crystal compounds having a 2,3-difluorophenyl moiety and a liquid-crystal display element formed from the liquid-crystal composition.

PTL 8 relates to a liquid crystalline compound, a liquid crystal composition, and a liquid crystal display element using the liquid crystalline compound which has an alkenyl group and a 2,3-difluoro phenyl group.

In PTL 9, a liquid crystal composition comprising a liquid crystalline compound having piperidine ring, and a liquid crystal display element is mentioned. The liquid crystalline compound exhibits great anisotropy with respect to permittivity and refractive index, has a low viscosity and is excellent in compatibility at a low temperature.

PTL 10 relates to a liquid crystal composition having a compound which has simultaneously in a molecule a thioether bond and 2,3-difluorophenylene and liquid crystal display element. The compound has not only the large absolute value of a negative value of permittivity anisotropy but also a proper value of refractive index anisotropy, good compatibility and high chemical and physical stabilities.

In PTL 11, a silicone compound, a liquid crystal composition and a liquid crystal displaying element are disclosed. The liquid crystal display element uses dihydrosilicon compound which is low viscosity and has low threshold voltage.

PTL 12 is directed to a 2,3-difluorophenyl derivative as a liquid crystal compound having a large minus dielectric anisotropic value and a small optical anisotropic value, and good in compatibility with other liquid crystal materials, a liquid crystal composition containing the liquid crystal compound, and a liquid crystal display element constituted by using the liquid crystal composition.

### Summary of Invention

### Technical Problem

It is an object of the present invention to provide a liquid crystal composition having the following properties without suffering reductions in refractive index anisotropy (Δn) and nematic phase-isotropic liquid phase transition temperature (Tni): sufficiently low viscosity (η), sufficiently low rotational viscosity (γ₁), a large elastic constant (K₃₃), a high voltage holding ratio after UV exposure (VHR (UV)), and a negative dielectric anisotropy (Δε) with a large absolute value. It is another object of the present invention to provide a liquid crystal display device of, for example, a VA type, PSVA type, PSA type, FFS type, IPS type, or ECB type that uses such a liquid crystal composition and that has a high response speed and excellent display quality with defective display being eliminated or reduced.

### Solution to Problem

The inventors have studied the constitution of a variety of liquid crystal compositions and found that use of a specific liquid crystal compound enables the above-mentioned objects to be achieved, thereby accomplishing the present invention.

The present invention provides a liquid crystal composition containing at least one compound represented by General Formula (a). 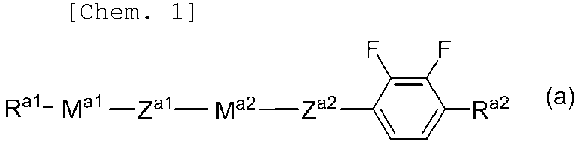
(in the formula, R^{a1} and R^{a2} each independently represent an alkyl group having 1 to 10 carbon atoms or an alkenyl group having 2 to 10 carbon atoms; in the alkyl group or alkenyl group, one -CH₂- or at least two -CH₂-'s not adjoining each other are each independently optionally substituted with -O- or -S-, and one or more hydrogen atoms are each independently optionally substituted with a fluorine atom or a chlorine atom;
M^{a1} and M^{a2} each independently represent a group selected from the group consisting of
   (b) a 1,4-phenylene group (in which one -CH= or two or more -CH='s not adjoining each other are each optionally substituted with -N=), and
   (c) a naphthalene-2,6-diyl group (in which one -CH= or two or more -CH='s not adjoining each other are each optionally substituted with -N=);
the groups (b) and (c) are each independently optionally substituted with a cyano group, a fluorine atom, or a chlorine atom, wherein at least one compound is represented by General Formula (a) in which M^{a1} and M^{a2} are each an unsubstituted 1,4-phenylene group; and
Z^{a1} and Z^{a2} each independently represent a single bond or-CH₂CH₂-, and at least any one of Z^{a1} and Z^{a2} is not a single bond)
The present invention also provides a liquid crystal display device that uses such a liquid crystal composition.

### Advantageous Effects of Invention

The liquid crystal composition of the present invention has the following properties without suffering reductions in refractive index anisotropy (Δn) and nematic phase-isotropic liquid phase transition temperature (Tni): sufficiently low viscosity (η), sufficiently low rotational viscosity (γ₁), a large elastic constant (K₃₃), a negative dielectric anisotropy (Δε) with a large absolute value, and a high voltage holding ratio (VHR); hence, a liquid crystal display device of a VA type, PSVA type, PSA type, or FFS type, which uses such a liquid crystal composition, has a high response speed and excellent display quality with defective display being eliminated or reduced.

### Description of Embodiments

The liquid crystal composition of the present invention contains at least one compound represented by General Formula (a).

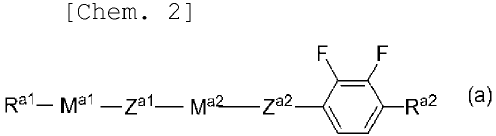

The compound represented by General Formula (a) is preferably a compound having a negative Δε with an absolute value greater than three.

In General Formula (a), R^{a1} is preferably an alkyl group having 1 to 8 carbon atoms, an alkoxy group having 1 to 8 carbon atoms, an alkenyl group having 2 to 8 carbon atoms, or an alkenyloxy group having 2 to 8 carbon atoms; also preferably an alkyl group having 1 to 5 carbon atoms, an alkoxy group having 1 to 5 carbon atoms, an alkenyl group having 2 to 5 carbon atoms, or an alkenyloxy group having 2 to 5 carbon atoms; more preferably an alkyl group having 1 to 5 carbon atoms or an alkenyl group having 2 to 5 carbon atoms; further preferably an alkyl group having 1 to 3 carbon atoms or an alkenyl group having 3 to 5 carbon atoms; and especially preferably an alkyl group having 1 carbon atom (methyl group), an alkyl group having 2 carbon atoms (ethyl group), an alkyl group having 3 carbon atoms (propyl group), an alkenyl group having 4 carbon atoms (butenyl group), or an alkenyl group having 5 carbon atoms (pentenyl group). R^{a1} is preferably linear. R^{a2} is preferably an alkyl group having 1 to 8 carbon atoms, an alkoxy group having 1 to 8 carbon atoms, an alkenyl group having 2 to 8 carbon atoms, or an alkenyloxy group having 2 to 8 carbon atoms; also preferably an alkyl group having 1 to 5 carbon atoms, an alkoxy group having 1 to 5 carbon atoms, an alkenyl group having 2 to 5 carbon atoms, or an alkenyloxy group having 2 to 5 carbon atoms; and more preferably an alkoxy group having 1 to 4 carbon atoms. R^{a2} is preferably linear.

The alkenyl group is preferably any group selected from groups represented by Formulae (R1) to (R9), and especially preferably the group represented by Formula (R8) or (R9) (the black point in each of the formulae represents the carbon atom of the ring structure to which R^{a1} or R^{a2} links).

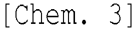

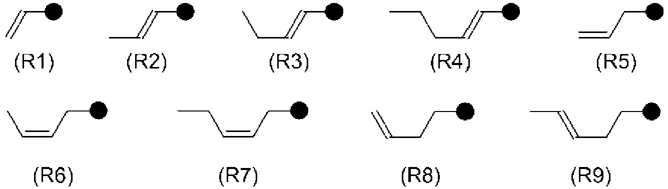

The alkenyloxy group is preferably any group selected from groups represented by Formulae (OR1) to (OR9), and especially preferably the group represented by Formula (OR8) or (OR9) (the black point in each of the formulae represents the carbon atom of the ring structure to which R^{a1} or R^{a2} links).

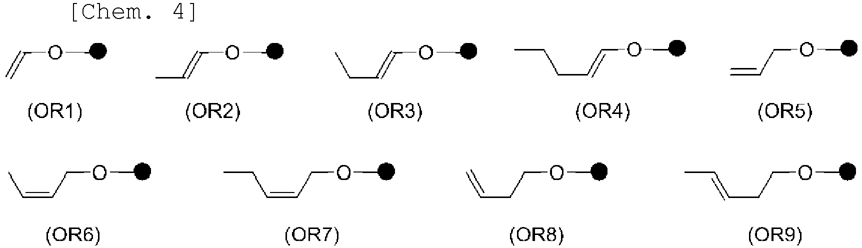

Z^{a1} represents -CH₂CH₂-; and Z^{a2} represents a single bond or -CH₂CH₂-.

M^{a1} and M^{a2} each represent an unsubstituted 1,4-phenylene group.

In General Formula (a), M^{a1} and M^{a2} represent an unsubstituted 1,4-phenylene group. The compound is preferably any of compounds represented by General Formula (a1) . 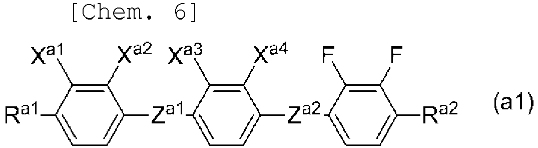 (in the formula, X^{a1} to X^{a4} each independently represent a hydrogen atom; and R^{a1}, R^{a2}, Z^{a1}, and Z^{a2} independently have the same meanings as R^{a1}, R^{a2}, Z^{a1}, and Z^{a2} in General Formula (a), respectively)
The compound represented by General Formula (a1) is preferably any of compounds represented by General Formula (a11) . 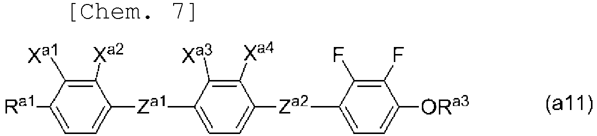 (in the formula, R^{a3} represents an alkyl group having 2 to 8 carbon atoms; X^{a1} to X^{a4} each independently represent a hydrogen atom; and R^{a1}, Z^{a1}, and Z^{a2} independently have the same meanings as R^{a1}, Z^{a1}, and Z^{a2} in General Formula (a), respectively)
At least one of such compounds is preferably used.

In particular, at least one of compounds represented by General Formulae (a-1) to (a-8) is preferably used as the compound represented by General Formula (a). 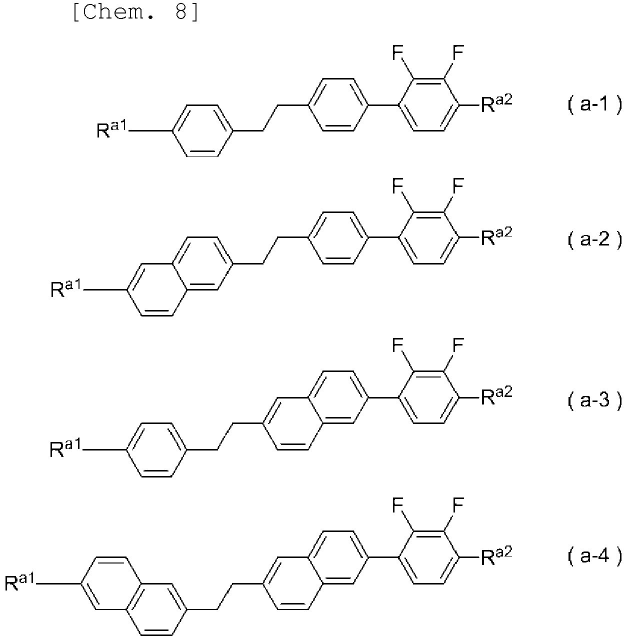 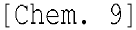 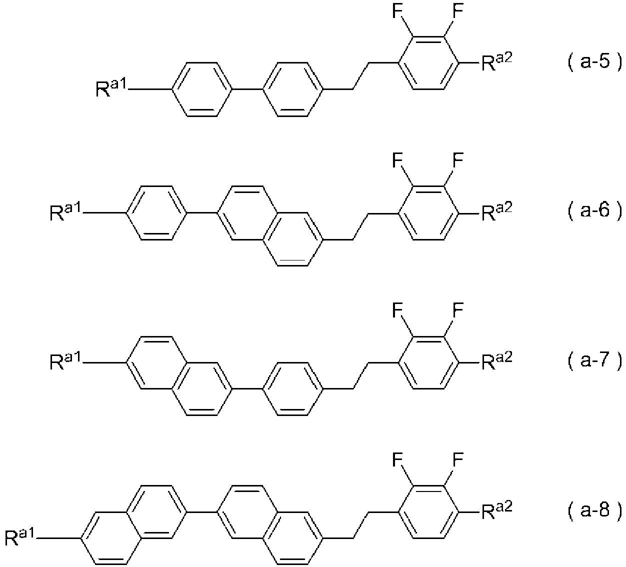 (in each of the formulae, R^{a1} and R^{a2} independently have the same meanings as R^{a1} and R^{a2} in General Formula (a), respectively)
The liquid crystal composition of the present invention contains at least one compound represented by General Formula (a), and preferably two to ten compounds.

The lower limit of the total amount of the compounds represented by General Formula (a) in the composition is preferably not less than 0.1 mass% (the term "%" used in the description of the composition hereinafter refers to mass%), also preferably not less than 0.5%, also preferably not less than 1%, also preferably not less than 3%, also preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, and also preferably not less than 40%. The upper limit thereof is preferably not more than 70%, also preferably not more than 68%, also preferably not more than 65%, also preferably not more than 63%, also preferably not more than 60%, also preferably not more than 55%, also preferably not more than 50%, also preferably not more than 40%, also preferably not more than 38%, also preferably not more than 35%, also preferably not more than 33%, also preferably not more than 30%, also preferably not more than 28%, also preferably not more than 25%, also preferably not more than 23%, also preferably not more than 20%, also preferably not more than 18%, also preferably not more than 15%, and also preferably not more than 10%.

The liquid crystal composition of the present invention preferably further contains at least one compound selected from the group consisting of compounds represented by General Formulae (LC3) to (LC5). 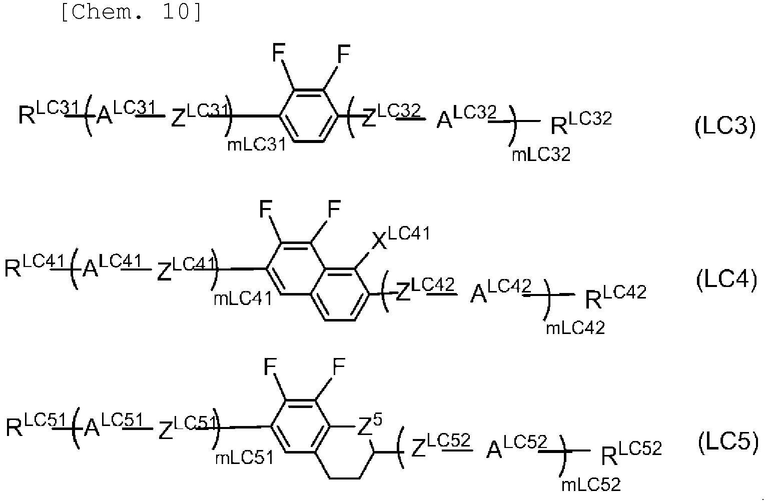 (in the formulae, R^{LC31}, R^{LC32}, R^{LC41}, R^{LC42}, R^{LC51}, and R^{LC52} each independently represent an alkyl group having 1 to 10 carbon atoms; at least one -CH₂- in the alkyl group is optionally substituted with -O-, -S-, -CH=CH-, -CO-, -OCO-, -COO-, -C≡C-, -CF₂O-, or -OCF₂- such that oxygen atoms are not directly bonded to each other; one or more hydrogen atoms in the alkyl group are each independently optionally substituted with a fluorine atom or a chlorine atom; A^{LC31}, A^{LC32}, A^{LC41}, A^{LC42}, A^{LC51}, and A^{LC52} each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=); the groups (a) to (c) are each independently optionally substituted with a cyano group, a fluorine atom, or a chlorine atom; Z^{LC31}, Z^{LC32}, Z^{LC41}, Z^{LC42}, Z^{LC51}, and Z^{LC52} each independently represent a single bond -CH=CH-, -C≡C-,-CH₂CH₂-, -(CH₂)₄-, -COO-, -OCO-, -OCH₂-, -CH₂O-, -OCF₂-, or-CF₂O-; Z⁵ represents -CH₂- or an oxygen atom; X^{LC41} represents a hydrogen atom or a fluorine atom; m^{LC31}, m^{LC32}, m^{LC41}_{,} m^{LC42}, m^{LC51}, and m^{LC52} each independently represent an integer from 0 to 3; m^{LC31} + m^{LC32}, m^{LC41} + m^{LC42}, and m^{LC51} + m^{LC52} are each 1, 2, or 3; in the case where A^{LC31} and Z^{LC31} are multiple, the corresponding ones of them may be the same as or different from each other; in the case where A^{LC32} and Z^{LC32} are multiple, the corresponding ones of them may be the same as or different from each other; in the case where A^{LC41} and Z^{LC41} are multiple, the corresponding ones of them may be the same as or different from each other; in the case where A^{LC42} and Z^{LC42} are multiple, the corresponding ones of them may be the same as or different from each other; in the case where A^{LC51} and Z^{LC51} are multiple, the corresponding ones of them may be the same as or different from each other; in the case where A^{LC52} and Z^{LC52} are multiple, the corresponding ones of them may be the same as or different from each other; the compounds represented by General Formulae (LC3) to (LC5) exclude the compound represented by General Formula (a); the compounds represented by General Formulae (LC4) and (LC5) exclude the compound represented by General Formulae (LC3); and the compound represented by General Formula (LC5) excludes the compound represented by General Formula (LC4))

The compounds represented by General Formulae (LC3), (LC4), and (LC5) are preferably compounds each having a negative Δε with an absolute value greater than three.

R^{LC31}, R^{LC32}, R^{LC41}, R^{LC42}, R^{LC51}, and R^{LC52} in General Formulae (LC3), (LC4), and (LC5) are preferably each independently an alkyl group having 1 to 8 carbon atoms, an alkoxy group having 1 to 8 carbon atoms, an alkenyl group having 2 to 8 carbon atoms, or an alkenyloxy group having 2 to 8 carbon atoms; also preferably an alkyl group having 1 to 5 carbon atoms, an alkoxy group having 1 to 5 carbon atoms, an alkenyl group having 2 to 5 carbon atoms, or an alkenyloxy group having 2 to 5 carbon atoms; more preferably an alkyl group having 1 to 5 carbon atoms or an alkenyl group having 2 to 5 carbon atoms; further preferably an alkyl group having 2 to 5 carbon atoms or an alkenyl group having 2 or 3 carbon atoms; and especially preferably an alkenyl group having 3 carbon atoms (propenyl group).

In the case where the ring structures bonded to R^{LC31}, R^{LC32}, R^{LC41}, R^{LC42}, R^{LC51}, and R^{LC52} are phenyl groups (aromatics), R^{LC31}, R^{LC32}, R^{LC41}, R^{LC42}, R^{LC51}, and R^{LC52} are each preferably a linear alkyl group having 1 to 5 carbon atoms, a linear alkoxy group having 1 to 4 carbon atoms, or an alkenyl group having 4 or 5 carbon atoms; in the case where the ring structures bonded to them are saturated rings such as cyclohexane, pyran, and dioxane, they are each preferably a linear alkyl group having 1 to 5 carbon atoms, a linear alkoxy group having 1 to 4 carbon atoms, or a linear alkenyl group having 2 to 5 carbon atoms. In order to produce a stable nematic phase, the total number of carbon atoms or, if any, oxygen atoms is preferably five or less, and R^{LC31}, R^{LC32}, R^{LC41}, R^{LC42}, R^{LC51}, and R^{LC52} are preferably linear.

The alkenyl group is preferably any group selected from groups represented by Formulae (R1) to (R9) (the black point in each of the formulae represents a carbon atom of the ring structure).

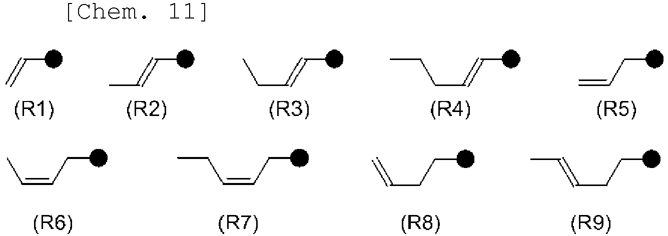

A^{LC31}, A^{LC32}, A^{LC41}, A^{LC42}, A^{LC51}, and A^{LC52} are preferably each independently aromatic for large Δn or aliphatic for an improvement in the response speed. They are preferably each independently a trans-1,4-cyclohexylene group, a 1,4-phenylene group, a 2-fluoro-1,4-phenylene group, a 3-fluoro-1,4-phenylene group, a 3,5-difluoro-1,4-phenylene group, a 2,3-difluoro-1,4-phenylene group, a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group; more preferably any of the following structures; and 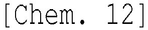 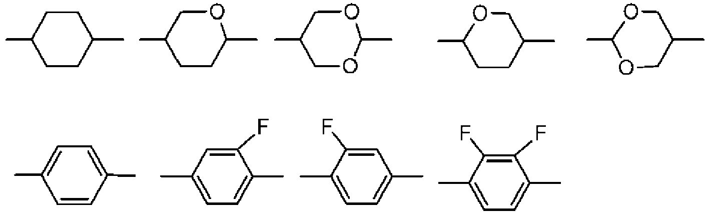 further preferably a trans-1,4-cyclohexylene group or a 1,4-phenylene group.

Z^{LC31}, Z^{LC32}, Z^{LC41}, Z^{LC42}, Z^{LC51}, and Z^{LC52} preferably each independently represent -CH₂O-, -CF₂O-, -CH₂CH₂-, -CF₂CF₂-, or a single bond; more preferably -CH₂O-, -CH₂CH₂-, or a single bond; and especially preferably -CH₂O- or a single bond.

X^{LC41} is preferably a fluorine atom.

Z⁵ is preferably an oxygen atom.

m^{LC31} + m^{LC32}, m^{LC41} + m^{LC42}, and m^{LC51} + m^{LC52} are each preferably 1 or 2; and preferred combinations are as follows: m^{LC31} of 1 and m^{LC32} of 0, m^{LC31} of 2 and m^{LC32} of 0, m^{LC31} of 1 and m^{LC32} of 1, m^{LC31} of 2 and m^{LC32} of 1, n^{N21} of 1 and n^{N22} of 0, n^{N21} of 2 and n^{N22} of 0, m^{LC41} of 1 and m^{LC42} of 0, and m^{LC51} of 2 and m^{LC52} of 0.

The lower limit of the preferred amount of the compound represented by Formula (LC3) is 1%, 10%, 20%, 30%, 40%, 50%, 55%, 60%, 65%, 70%, 75%, or 80% relative to the amount of the whole composition of the present invention. The upper limit of the preferred amount is 95%, 85%, 75%, 65%, 55%, 45%, 35%, 25%, or 20%.

The lower limit of the preferred amount of the compound represented by Formula (LC4) is 1%, 10%, 20%, 30%, 40%, 50%, 55%, 60%, 65%, 70%, 75%, or 80% relative to the amount of the whole composition of the present invention. The upper limit of the preferred amount is 95%, 85%, 75%, 65%, 55%, 45%, 35%, 25%, or 20%.

The lower limit of the preferred amount of the compound represented by Formula (LC5) is 1%, 10%, 20%, 30%, 40%, 50%, 55%, 60%, 65%, 70%, 75%, or 80% relative to the amount of the whole composition of the present invention. The upper limit of the preferred amount is 95%, 85%, 75%, 65%, 55%, 45%, 35%, 25%, or 20%.

In the case where the composition of the present invention needs to have a viscosity kept at a low level to contribute to a high response speed, it is preferred that the above-mentioned lower limit be low and that the upper limit be low. In the case where the composition of the present invention needs to have a Tni kept at a high level to have a high temperature stability, it is preferred that the above-mentioned lower limit be low and that the upper limit be low. In order to increase dielectric anisotropy for keeping driving voltage at a low level, it is preferred that the above-mentioned lower limit be high and that the upper limit be high.

The liquid crystal composition of the present invention preferably contains at least one compound represented by General Formula (i) as the compound represented by General Formula (LC3). 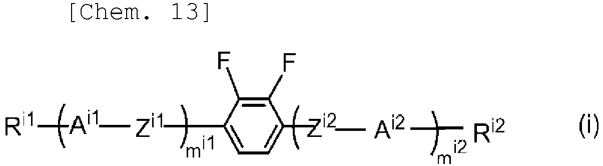 (in the formula, Rⁱ¹ and Rⁱ² each independently represent an alkyl group having 1 to 10 carbon atoms or an alkenyl group having 2 to 10 carbon atoms; in each of these groups, at least one -CH₂- or two or more -CH₂-'s not adjoining each other are each independently optionally substituted with -O- or -S-, and one or more hydrogen atoms are each independently optionally substituted with a fluorine atom or a chlorine atom; Aⁱ¹ and Aⁱ² each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=); the groups (a) to (c) are each independently optionally substituted with a cyano group, a fluorine atom, or a chlorine atom; Zⁱ¹ and Zⁱ² each independently represent a single bond, -OCH₂-, -CH₂O-, -OCF₂-, -CF₂O-, -CH₂CH₂-, or-CF₂CF₂-; at least one Zⁱ¹ represents -OCH₂-, -CH₂O-, -OCF₂-,-CF₂O-, -CH₂CH₂-, or -CF₂CF₂-; mⁱ¹ is an integer from 1 to 3; mⁱ² is an integer from 0 to 3; mⁱ¹ + mⁱ² is 1, 2, or 3; in the case where Aⁱ¹ and Zⁱ¹ are multiple, the corresponding ones of them may be the same as or different from each other; and in the case where Aⁱ² and Zⁱ² are multiple, the corresponding ones of them may be the same as or different from each other)

The compound represented by General Formula (i) is preferably a compound having a negative dielectric anisotropy (Δε) with an absolute value greater than three.

Rⁱ¹ in General Formula (i) is preferably an alkyl group having 1 to 8 carbon atoms, an alkoxy group having 1 to 8 carbon atoms, an alkenyl group having 2 to 8 carbon atoms, or an alkenyloxy group having 2 to 8 carbon atoms; also preferably an alkyl group having 1 to 5 carbon atoms, an alkoxy group having 1 to 5 carbon atoms, an alkenyl group having 2 to 5 carbon atoms, or an alkenyloxy group having 2 to 5 carbon atoms; more preferably an alkyl group having 1 to 5 carbon atoms or an alkenyl group having 2 to 5 carbon atoms; further preferably an alkyl group having 2 to 5 carbon atoms or an alkenyl group having 2 or 3 carbon atoms; and especially preferably an alkenyl group having 3 carbon atoms (propenyl group).

Rⁱ² is preferably an alkyl group having 1 to 8 carbon atoms, an alkoxy group having 1 to 8 carbon atoms, an alkenyl group having 2 to 8 carbon atoms, or an alkenyloxy group having 2 to 8 carbon atoms; also preferably an alkyl group having 1 to 5 carbon atoms, an alkoxy group having 1 to 5 carbon atoms, an alkenyl group having 2 to 5 carbon atoms, or an alkenyloxy group having 2 to 5 carbon atoms; and further preferably an alkoxy group having 1 to 4 carbon atoms. In terms of an improvement in the response speed of a display device, an alkenyl group is preferred; in terms of reliability such as a voltage holding ratio, an alkyl group is preferred. In the case where at least any one of Rⁱ¹ and Rⁱ² is an alkenyl group, the alkenyl group is preferably any group selected from groups represented by Formulae (R1) to (R9) (the black point in each of the formulae represents the linkage to the ring).

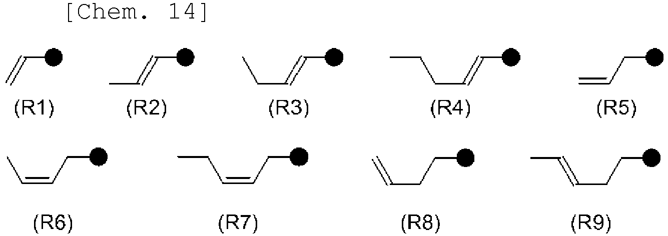

Aⁱ¹ and Aⁱ² in General Formula (i) are preferably each independently a trans-1,4-cyclohexylene group, a 1,4-phenylene group, a 2-fluoro-1,4-phenylene group, a 3-fluoro-1,4-phenylene group, a 3,5-difluoro-1,4-phenylene group, a 2,3-difluoro-1,4-phenylene group, a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group; more preferably any of the following structures; and 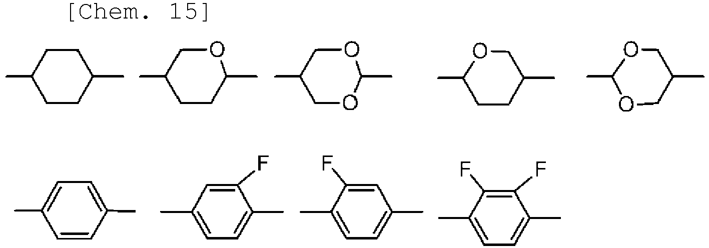 further preferably a trans-1,4-cyclohexylene group or a 1,4-phenylene group.

Zⁱ¹ and Zⁱ² preferably each independently represent-CH₂O-, -CF₂O-, -CH₂CH₂-, -CF₂CF₂-, or a single bond; more preferably -CH₂O-, -CH₂CH₂-, or a single bond; and especially preferably -CH₂O- or a single bond. At least one Zⁱ¹ represents -OCH₂-, -CH₂O-, -OCF₂-, -CF₂O-, -CH₂CH₂-, or-CF₂CF₂-; preferably -CH₂O-, -CF₂O-, -CH₂CH₂-, or -CF₂CF₂; more preferably -CH₂O- or -CH₂CH₂-; and especially preferably-CH₂O-.

mⁱ¹ represents an integer from 1 to 3; mⁱ² each independently represents an integer from 0 to 3; mⁱ¹ + mⁱ² is 1, 2, or 3; and mⁱ¹ + mⁱ² is preferably 1 or 2.

At least one compound represented by General Formula (i-1) is preferably used as the compound represented by General Formula (i). 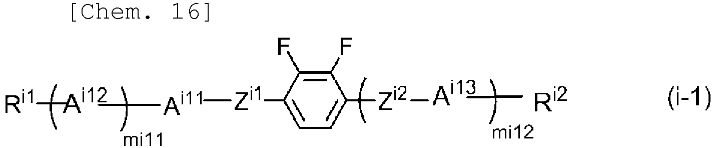 (in the formula, Aⁱ¹¹, Aⁱ¹², and Aⁱ¹³ each independently represent a 1,4-cyclohexylene group or a 1,4-phenylene group; in the 1,4-cyclohexylene group, one -CH₂- or two or more -CH₂-'s not adjoining each other are each optionally substituted with -O- or -S-; in the 1,4-phenylene group, one hydrogen atom is independently optionally substituted with a fluorine atom or a chlorine atom; mⁱ¹¹ and mⁱ¹² each independently represent 0 or 1; Rⁱ¹, Rⁱ², Zⁱ¹, and Zⁱ² independently have the same meanings as Rⁱ¹, Rⁱ², Zⁱ¹, and Zⁱ² in General Formula (i), respectively)

The compound represented by General Formula (i-1) is preferably any of compounds represented by General Formulae (i-1A), (i-1B), and (i-1C). 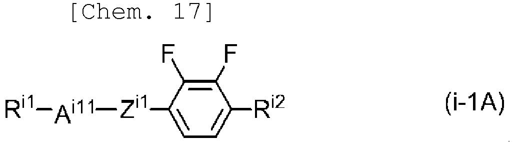 (in the formula, Rⁱ¹, Rⁱ², Aⁱ¹¹, and Zⁱ¹ independently have the same meanings as Rⁱ¹, Rⁱ², Aⁱ¹¹, and Zⁱ¹ in General Formula (i-1), respectively) 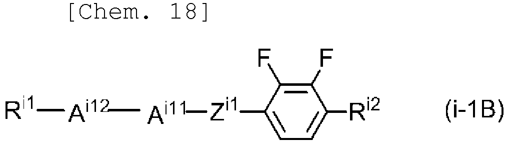 (in the formula, Rⁱ¹, Rⁱ², Aⁱ¹¹, Aⁱ¹², and Zⁱ¹ independently have the same meanings as Rⁱ¹, Rⁱ², Aⁱ¹¹, Aⁱ¹², and Zⁱ¹ in General Formula (i-1), respectively) 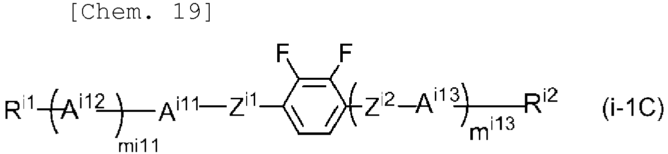 (in the formula, mⁱ¹³ represents 1; and Rⁱ¹, Rⁱ², Aⁱ¹¹, Aⁱ¹², Aⁱ¹³, Zⁱ¹, Zⁱ², and mⁱ¹¹ independently have the same meanings as Rⁱ¹, Rⁱ², Aⁱ¹¹, Aⁱ¹², Aⁱ¹³, Zⁱ¹, Zⁱ², and mⁱ¹¹ in General Formula (i-1), respectively)

The compound represented by General Formula (i-1A) is preferably any of compounds represented by General Formulae (i-1A-1) to (i-1A-4). 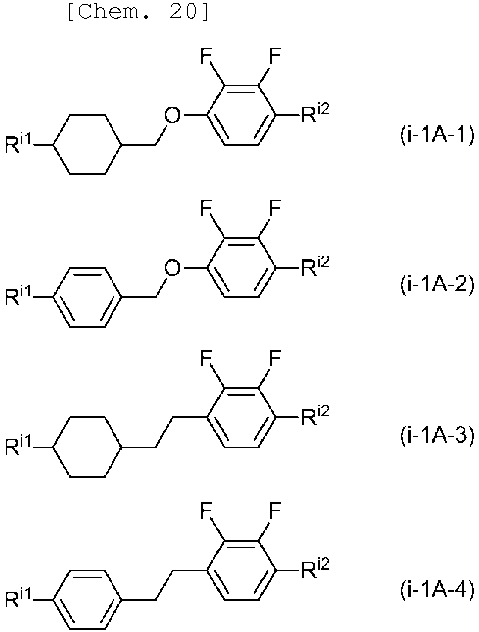 (in each of the formulae, Rⁱ¹ and Rⁱ² independently have the same meanings as Rⁱ¹ and Rⁱ² in General Formula (i-1), respectively)

The compound represented by General Formula (i-1B) is preferably any of compounds represented by General Formulae (i-1B-1) to (i-1B-6). 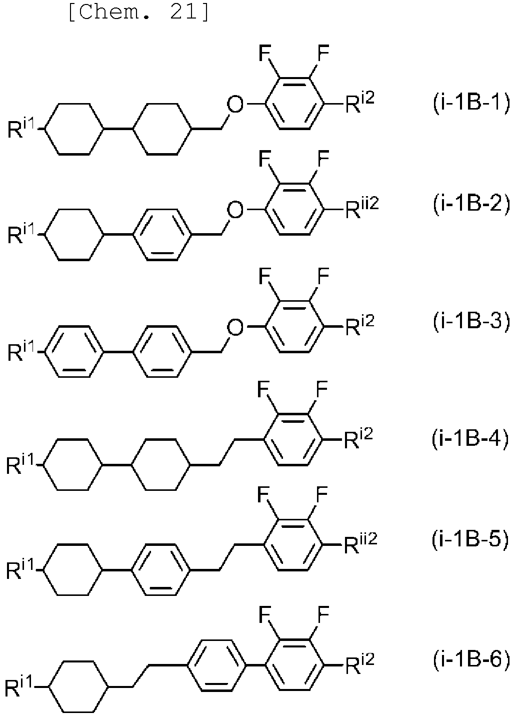 (in each of the formulae, Rⁱ¹ and Rⁱ² independently have the same meanings as Rⁱ¹ and Rⁱ² in General Formula (i-1), respectively)
The compound represented by General Formula (i-1C) is preferably any of compounds represented by General Formulae (i-1C-1) to (i-1C-4), and more preferably any of the compounds represented by General Formulae (i-1C-1) and (i-1C-2) . 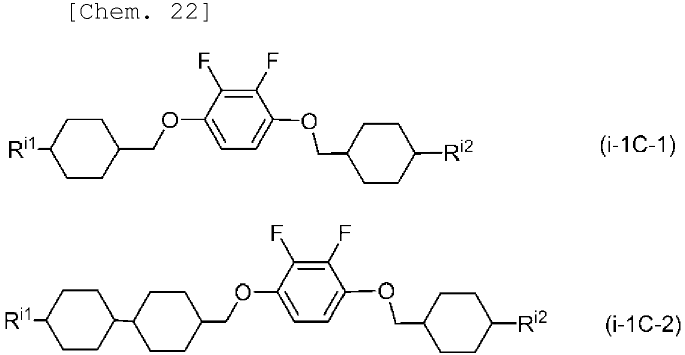 (in each of the formulae, Rⁱ¹ and Rⁱ² independently have the same meanings as Rⁱ¹ and Rⁱ² in General Formula (i-1), respectively)
The liquid crystal composition of the present invention preferably contains at least one compound represented by General Formula (i); the liquid crystal composition may contain at least one compound selected from the group consisting of the compounds represented by General Formulae (i-1A), (i-1B), and (i-1C). Alternatively, at least one compound may be selected from each of the compounds represented by General Formula (i-1A), the compounds represented by General Formula (i-1B), and the compounds represented by General Formula (i-1C); and the liquid crystal composition may contain the selected ones. At least one compound selected from the compounds represented by General Formulae (i-1A) and (i-1B) is preferably used, and two to ten compounds selected therefrom are more preferably used.

In particular, at least one compound is preferably selected from the group consisting of the compounds represented by General Formulae (i-1A-1), (i-1B-1), and (i-1C-1) as the compounds represented by General Formulae (i-1A), (i-1B), and (i-1C), respectively; and a combination of the compounds represented by General Formulae (i-1A-1) and (i-1B-1) is more preferably employed.

The lower limit of the total amount of the compounds represented by General Formula (i) in the composition is preferably not less than 0.1 mass% (the term "%" used in the description of the composition hereinafter refers to mass%), also preferably not less than 0.5%, also preferably not less than 1%, also preferably not less than 3%, also preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, and also preferably not less than 40%. The upper limit thereof is preferably not more than 95%, also preferably not more than 90%, also preferably not more than 88%, also preferably not more than 85%, also preferably not more than 83%, also preferably not more than 80%, also preferably not more than 78%, also preferably not more than 75%, also preferably not more than 73%, also preferably not more than 70%, also preferably not more than 68%, also preferably not more than 65%, also preferably not more than 63%, also preferably not more than 60%, also preferably not more than 55%, also preferably not more than 50%, also preferably not more than 40%, also preferably not more than 38%, also preferably not more than 35%, also preferably not more than 33%, also preferably not more than 30%, also preferably not more than 28%, also preferably not more than 25%, also preferably not more than 23%, also preferably not more than 20%, also preferably not more than 18%, also preferably not more than 15%, and also preferably not more than 10%.

The liquid crystal composition of the present invention preferably contains at least one compound represented by General Formula (ii) as the compound represented by General Formula (LC3). 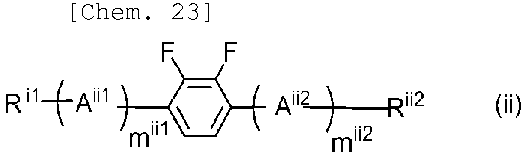
(in the formula, Rⁱⁱ¹ and Rⁱⁱ² each independently represent an alkyl group having 1 to 10 carbon atoms or an alkenyl group having 2 to 10 carbon atoms; in each of these groups, at least one -CH₂- or two or more -CH₂-'s not adjoining each other are each independently optionally substituted with -O- or -S-, and one or more hydrogen atoms are each independently optionally substituted with a fluorine atom or a chlorine atom; Aⁱⁱ¹ and Aⁱⁱ² each independently represent a group selected from the group consisting of
   (a) a 1,4-cyclohexylene group (in which one -CH₂- or two or more -CH₂-'s not adjoining each other are each optionally substituted with -O-),
   (b) a 1,4-phenylene group (in which one -CH= or two or more -CH='s not adjoining each other are each optionally substituted with -N=), and
   (c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=); the groups (a) to (c) are each independently optionally substituted with a cyano group, a fluorine atom, or a chlorine atom; mⁱⁱ¹ is an integer from 1 to 3; mⁱⁱ² is an integer from 0 to 3; mⁱⁱ¹ + mⁱⁱ² is 1, 2, or 3; and in the case where Aⁱⁱ¹ and Aⁱⁱ² are multiple, the corresponding ones of them may be the same as or different from each other)
mⁱⁱ¹ preferably represents 1 or 2, mⁱ² preferably represents 0 or 1, mⁱ¹ + mⁱ² is preferably 1 or 2.

At least one compound represented by General Formula (II-2) is preferably used as the compound represented by General Formula (ii). 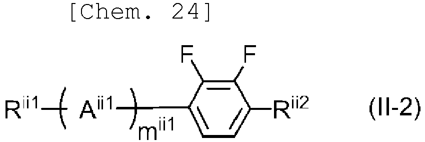 (in the formula, Rⁱⁱ¹, Rⁱⁱ², Aⁱⁱ¹, mⁱⁱ¹ have the same meanings as Rⁱⁱ¹, Rⁱⁱ², Aⁱⁱ¹, mⁱⁱ¹ in General Formula (ii), respectively)

The compound represented by General Formula (II-2) is preferably any of compounds represented by General Formula (II-2A) or (II-2B). 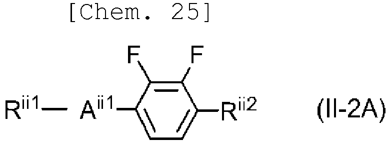 (in the formula, Rⁱⁱ¹, Rⁱⁱ², and Aⁱⁱ¹ have the same meanings as Rⁱⁱ¹, Rⁱⁱ², Aⁱⁱ¹, and mⁱⁱ¹ in General Formula (ii)) 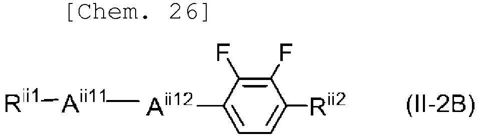 (in the formula, Aⁱⁱ¹¹ and Aⁱⁱ¹¹ each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=); the groups (a) to (c) are each independently optionally substituted with a cyano group, a fluorine atom, or a chlorine atom; and Rⁱⁱ¹ and Rⁱⁱ² have the same meanings as Rⁱⁱ¹ and Rⁱⁱ² in General Formula (ii), respectively)

The compound represented by General Formula (II-2A) is preferably any of compounds represented by General Formulae (II-2A-1) and (II-2A-2). 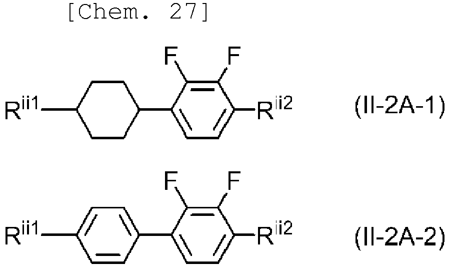 (in each of the formulae, Rⁱⁱ¹ and Rⁱⁱ² have the same meanings as Rⁱⁱ¹ and Rⁱⁱ² in General Formula (II-2), respectively)
The compound represented by General Formula (II-2B) is preferably any of compounds represented by General Formulae (II-2B-1) to (II-2B-3). 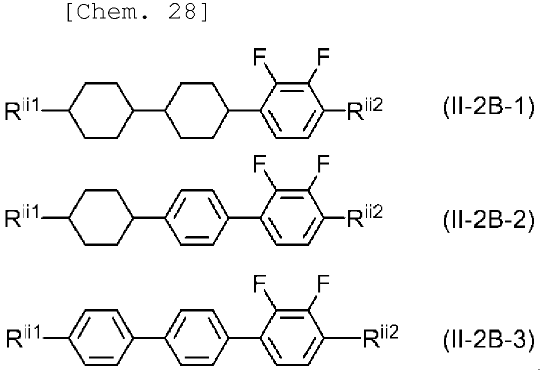 (in each of the formulae, Rⁱⁱ¹ and Rⁱⁱ² have the same meanings as Rⁱⁱ¹ and Rⁱⁱ² in General Formula (II-2), respectively)
The liquid crystal composition of the present invention preferably contains at least one compound represented by General Formula (ii); the liquid crystal composition may contain at least one compound selected from the group consisting of the compounds represented by General Formulae (II-2A) and (II-2B). Alternatively, at least one compound may be selected from each of the compounds represented by General Formula (II-2A) and the compounds represented by General Formula (II-2B), and the liquid crystal composition may contain the selected ones. Two to ten compounds selected from the compounds represented by General Formulae (II-2A) and (II-2B) are preferably used.

In particular, the compound represented by General Formula (II-2A) is preferably at least one compound selected from the group consisting of the compounds represented by General Formula (II-2A-1), the compound represented by General Formula (II-2B) is preferably at least one compound selected from the group consisting of the compounds represented by General Formulae (II-2B-1) and (II-2B-2), and a combination of the compounds represented by General Formulae (II-2A-1) and (II-2B-1) is more preferably employed.

At least one compound represented by General Formula (LC3-b) is preferably used as the compound represented by General Formula (LC3). 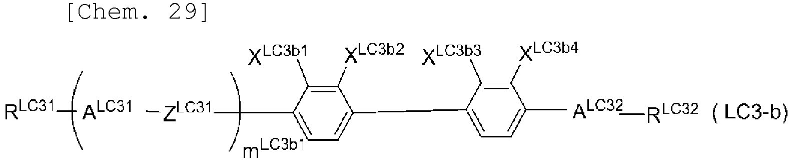 (in the formula, R^{LC31}, R^{LC32}, A^{LC31}, A^{LC32}, and Z^{LC31} have the same meanings as R^{LC31}, R^{LC32}, A^{LC31}, A^{LC32}, and Z^{LC31} in General Formula (LC3), respectively; X^{LC3b1} to X^{LC3b4} each represent a hydrogen atom or a fluorine atom; at least either of a combination of X^{LC3b1} and X^{LC3b2} and a combination of X^{LC3b3} and X^{LC3b4} are fluorine atoms; m^{LC3b1} is 0 or 1; and the compound represented by General Formula (LC3-b) excludes the compounds represented by General Formulae (i) and (ii))
The compound represented by General Formula (LC3-b) is preferably any of compounds represented by General Formulae (LC3-b1) to (LC3-b10). 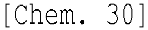 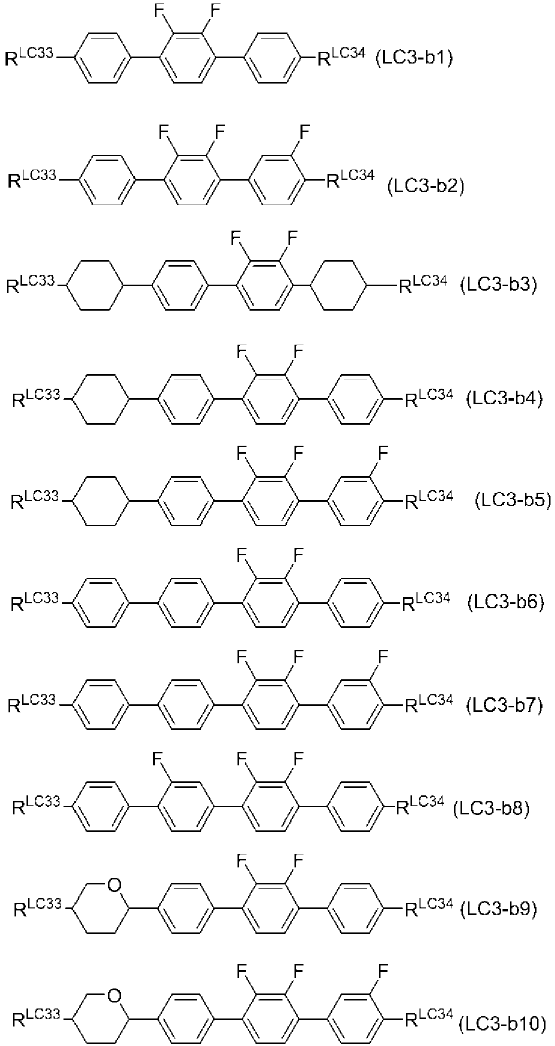 (in each of the formulae, R^{LC33} and R^{LC34} each independently represent an alkyl group having 1 to 8 carbon atoms, an alkoxyl group having 1 to 8 carbon atoms, an alkenyl group having 2 to 8 carbon atoms, or an alkenyloxy group having 2 to 8 carbon atoms)
R^{LC33} and R^{LC34} can be any combination. Preferred combinations are as follows: both of them are alkyl groups or alkenyl groups; either of them is an alkyl group, and the other one thereof is an alkenyl group; either of them is an alkyl group, and the other one thereof is an alkoxy group; and either of them is an alkyl group, and the other one thereof is an alkenyloxy group. It is more preferred that both of R^{LC33} and R^{LC34} be alkyl groups or that both of R^{LC33} and R^{LC34} be alkenyl groups.

The compound represented by General Formula (LC3-b) is preferably any of compounds represented by General Formula (LC3-c) . 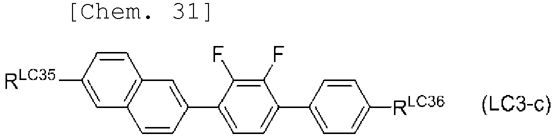 (in the formula, R^{LC35} and R^{LC36} each independently represent an alkyl group having 1 to 8 carbon atoms, an alkoxyl group having 1 to 8 carbon atoms, an alkenyl group having 2 to 8 carbon atoms, or an alkenyloxy group having 2 to 8 carbon atoms)
The compound represented by General Formula (LC4) is preferably any of compounds represented by General Formulae (LC4-a) to (LC4-d). 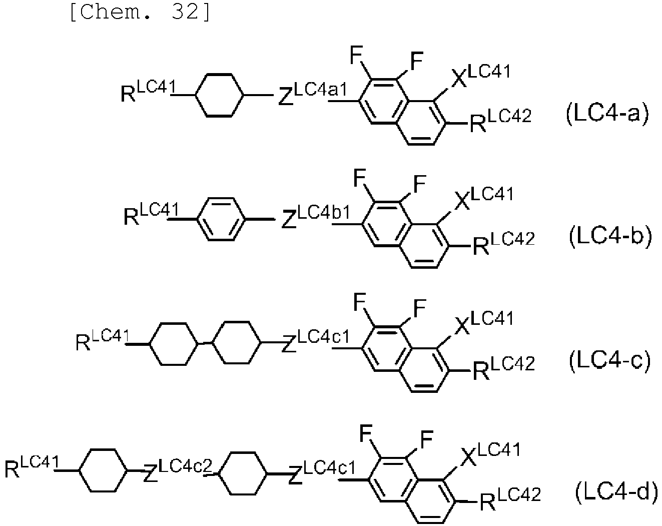 (in the formulae, R^{LC41}, R^{LC42}, and X^{LC41} independently have the same meanings as R^{LC41}, R^{LC42}, and X^{LC41} in General Formula (LC4), respectively; and Z^{LC4a1} Z^{LC4b1}, Z^{LC4c1}, and z^{LC4c2} each independently represent a single bond, -CH=CH-, -C≡C-, -CH₂CH₂-, -(CH₂)₄-, -COO-, -OCH₂-, -CH₂O-, -OCF₂-, or -CF₂O-)
The compound represented by General Formula (LC4) is also preferably any of compounds represented by General Formulae (LC4-a1) to (LC4-d1). 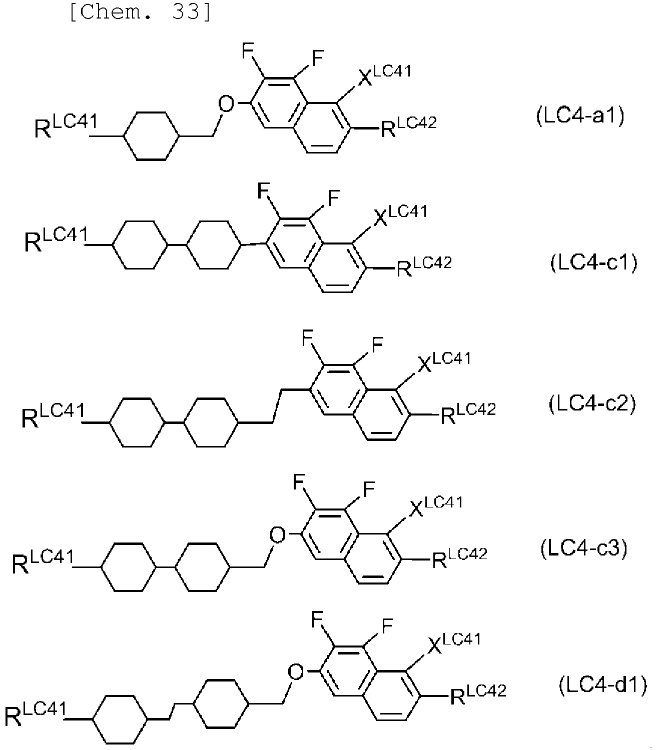 (in the formula, R^{LC41}, R^{LC42}, and X^{LC41} independently have the same meanings as R^{LC41}, R^{LC42}, and X^{LC41} in General Formula (LC4), respectively)
The compound represented by General Formula (LC5) is preferably any of compounds represented by General Formulae (LC5-a) to (LC5-c). 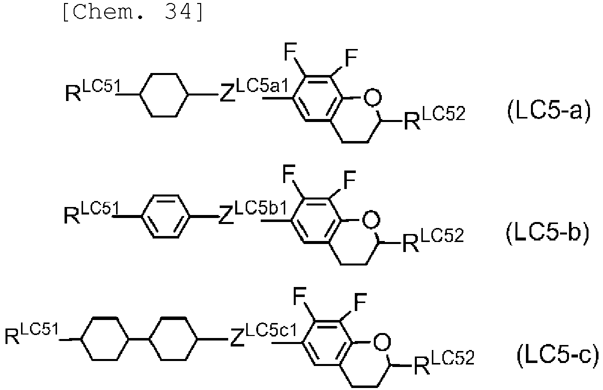 (in the formulae, R^{LC51} and R^{LC52} independently have the same meanings as R^{LC51} and R^{LC52} in General Formula (LC5), respectively; and z^{LC5a1}, z^{LC5b1}, and z^{LC5c1} each independently represent a single bond, -CH=CH-, -C≡C-, -CH₂CH₂-, -(CH₂)₄-,-COO-, -OCH₂-, -CH₂O-, -OCF₂-, or -CF₂O-)
The compound represented by General Formula (LC5) is also preferably any of compounds represented by General Formulae (LC5-a1) to (LC5-c3). 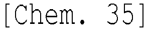 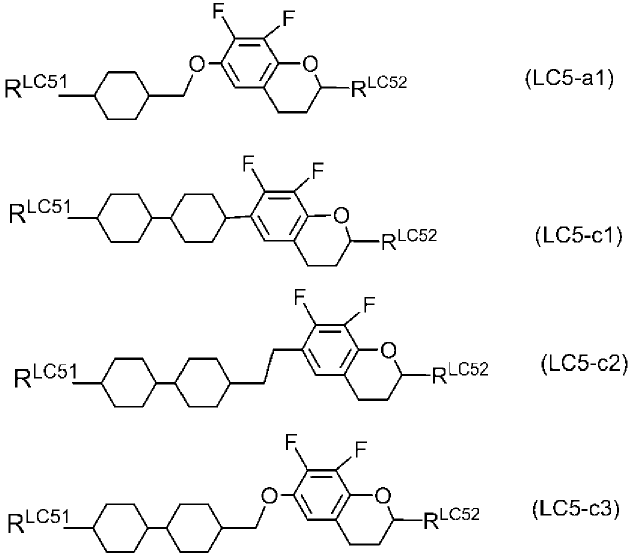 (in the formulae, R^{LC51} and R^{LC52} independently have the same meanings as R^{LC51} and R^{LC52} in General Formula (LC5), respectively)
The liquid crystal composition of the present invention preferably further contains at least one compound represented by General Formula (L). The compound represented by General Formula (L) is a substantially dielectrically neutral compound (Δε from -2 to 2). 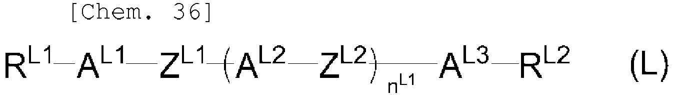
(in the formula, R^{L1} and R^{L2} each independently represent an alkyl group having 1 to 8 carbon atoms; in the alkyl group, one -CH₂- or at least two -CH₂-'s not adjoining each other are each independently optionally substituted with-CH=CH-, -C≡C-, -O-, -CO-, -COO-, or -OCO-;
n^{L1} represents 0, 1, 2, or 3;
A^{L1}, A^{L2}, and A^{L3} each independently represent a group selected from the group consisting of
   (a) a 1,4-cyclohexylene group (in which one -CH₂- or at least two -CH₂-'s not adjoining each other are each optionally substituted with -O-),
   (b) a 1,4-phenylene group (in which one -CH= or at least two -CH='s not adjoining each other are each optionally substituted with -N=), and
   (c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or at least two -CH='s not adjoining each other are each optionally substituted with -N=); the groups (a) to (c) are each independently optionally substituted with a cyano group, a fluorine atom, or a chlorine atom;
Z^{L1} and Z^{L2} each independently represent a single bond,-CH₂CH₂-, - (CH₂) ₄-, -OCH₂-, -CH₂O-, -COO-, -OCO-, -OCF₂-, -CF₂O-, -CH=N-N=CH-, -CH=CH-, -CF=CF-, or -C≡C-;
in the case where A^{L2} and Z^{L3} are multiple, the corresponding ones of them may be the same as or different from each other; the compound represented by General Formula (L) excludes the compounds represented by General Formulae (a), (LC3), (LC4), and (LC5))

The compounds represented by General Formula (L) may be used alone or in combination. Such compounds can be used in any combination; a proper combination of the compounds is determined on the basis of predetermined properties such as solubility at low temperature, transition temperature, electric reliability, and birefringence. In an embodiment of the present invention, for example, one of such compounds is used. Furthermore, two of the compounds are used in another embodiment of the present invention, three of the compounds are used in another embodiment, four of the compounds are used in another embodiment, five of the compounds are used in another embodiment, six of the compounds are used in another embodiment, seven of the compounds are used in another embodiment, eight of the compounds are used in another embodiment, nine of the compounds are used in another embodiment, and ten or more of the compounds are used in another embodiment.

In the composition of the present invention, the amount of the compound represented by General Formula (L) needs to be appropriately adjusted on the basis of the intended properties such as solubility at low temperature, transition temperature, electric reliability, birefringence, process adaptability, droplet stains, image-sticking, and dielectric anisotropy.

The lower limit of the preferred amount of the compound represented by Formula (L) is 1%, 10%, 20%, 30%, 40%, 50%, 55%, 60%, 65%, 70%, 75%, or 80% relative to the amount of the whole composition of the present invention. The upper limit of the preferred amount is 95%, 85%, 75%, 65%, 55%, 45%, 35%, or 25%.

In the case where the composition of the present invention needs to have a viscosity kept at a low level to contribute to a high response speed, it is preferred that the above-mentioned lower limit be high and that the upper limit be high. In the case where the composition of the present invention needs to have a Tni kept at a high level to have a high temperature stability, it is preferred that the above-mentioned lower limit be high and that the upper limit be high. In order to increase dielectric anisotropy for keeping driving voltage at a low level, it is preferred that the above-mentioned lower limit be low and that the upper limit be low.

In the case of focusing on the reliability, R^{L1} and R^{L2} are each preferably an alkyl group; in the case of focusing on a reduction in the volatility of the compound, they are each preferably an alkoxy group; and in the case of focusing on a reduction in the viscosity, at least one of them is preferably an alkenyl group.

In the case where the ring structures bonded to R^{L1} and R^{L2} are phenyl groups (aromatics), R^{L1} and R^{L2} are each preferably a linear alkyl group having 1 to 5 carbon atoms, a linear alkoxy group having 1 to 4 carbon atoms, or an alkenyl group having 4 or 5 carbon atoms; in the case where the ring structures bonded to R^{L1} and R^{L2} are saturated rings such as cyclohexane, pyran, and dioxane, R^{L1} and R^{L2} are each preferably a linear alkyl group having 1 to 5 carbon atoms, a linear alkoxy group having 1 to 4 carbon atoms, or a linear alkenyl group having 2 to 5 carbon atoms. In order to produce a stable nematic phase, the total number of carbon atoms or, if any, oxygen atoms is preferably five or less, and R^{L1} and R^{L2} are preferably linear.

The alkenyl group is preferably any group selected from groups represented by Formulae (R1) to (R9) (the black point in each of the formulae represents a carbon atom of the ring structure).

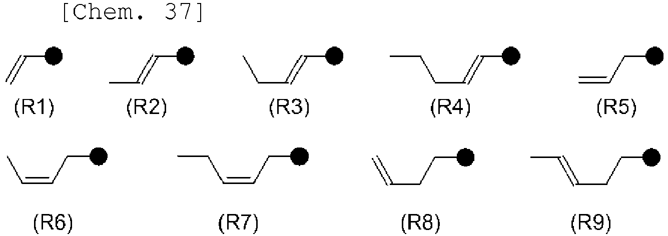

In the case of focusing on the response speed, n^{L1} is preferably 0; in order to improve the upper limit of the temperature of the nematic phase, n^{L1} is preferably 2 or 3; and in order to take a balance therebetween, n^{L1} is preferably 1. In order to satisfy the properties necessary for the composition, compounds having a difference in n^{L1} are preferably used in combination.

A^{L1}, A^{L2}, and A^{L3} are preferably aromatic for large Δn or aliphatic for an improvement in the response speed. They are preferably each independently a trans-1,4-cyclohexylene group, a 1,4-phenylene group, a 2-fluoro-1,4-phenylene group, a 3-fluoro-1,4-phenylene group, a 3,5-difluoro-1,4-phenylene group, a 1,4-cyclohexenylene group, a 1,4-bicyclo[2.2.2]octylene group, a piperidine-1,4-diyl group, a naphthalene-2,6-diyl group, a decahydronaphthalene-2,6-diyl group, or a 1,2,3,4-tetrahydronaphthalene-2,6-diyl group; more preferably any of the following structures; and 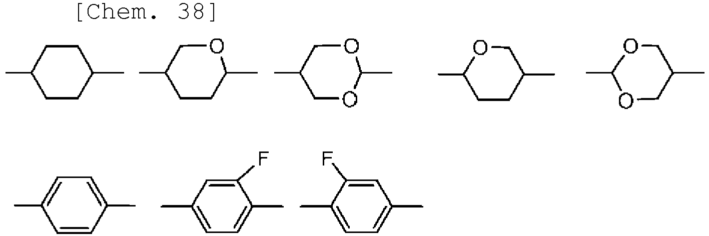 further preferably a trans-1,4-cyclohexylene group or a 1,4-phenylene group.

Z^{L1} and Z^{L2} are each preferably a single bond in the case of focusing on the response speed.

The number of halogen atoms per molecule is preferably zero or one. The compound represented by General Formula (L) is preferably a compound selected from the group consisting of compounds represented by General Formulae (L-1) to (L-7).

The compound represented by General Formula (L-1) is as follows. 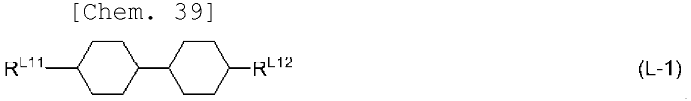 (in the formula, R^{L11} and R^{L12} independently have the same meanings as R^{L1} and R^{L2} in General Formula (L), respectively)
R^{L11} and R^{L12} is each preferably a linear alkyl group having 1 to 10 carbon atoms, a linear alkoxy group having 1 to 9 carbon atoms, or a linear alkenyl group having 2 to 10 carbon atoms; also preferably a linear alkyl group having 1 to 8 carbon atoms, a linear alkoxy group having 1 to 7 carbon atoms, or a linear alkenyl group having 2 to 8 carbon atoms; and also preferably a linear alkyl group having 1 to 5 carbon atoms, a linear alkoxy group having 1 to 4 carbon atoms, or a linear alkenyl group having 2 to 5 carbon atoms.

Any one or both of R^{L11} and R^{L12} are preferably linear alkenyl groups each having 2 to 8 carbon atoms, and more preferably linear alkenyl groups each having 2 to 5 carbon atoms. It is preferred that any one of R^{L11} and R^{L12} be a linear alkenyl group having 2 to 5 carbon atoms and that the other one thereof be a linear alkyl group having 1 to 5 carbon atoms.

It is preferred that both of R^{L11} and R^{L12} be linear alkyl groups each having 1 to 8 carbon atoms or linear alkoxy groups each having 1 to 7 carbon atoms, and it is more preferred that both of them be linear alkyl groups each having 1 to 5 carbon atoms or linear alkoxy groups each having 1 to 4 carbon atoms. It is also preferred that any one of R^{L11} and R^{L12} be an alkyl group having 1 to 5 carbon atoms and that the other one thereof be an alkyl group having 1 to 5 carbon atoms or a linear alkoxy group having 1 to 4 carbon atoms, and it is more preferred that both of R^{L11} and R^{L12} be linear alkyl groups each having 1 to 5 carbon atoms.

The compounds represented by General Formula (L-1) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

The lower limit of the preferred amount of the compound is 1%, 2%, 3%, 5%, 7%, 10%, 15%, 20%, 25%, 30%, 35%, 40%, 45%, 50%, or 55% relative to the amount of the whole composition of the present invention. The upper limit of the preferred amount is 95%, 90%, 85%, 80%, 75%, 70%, 65%, 60%, 55%, 50%, 45%, 40%, 35%, 30%, or 25% relative to the amount of the whole composition of the present invention.

In the case where the composition of the present invention needs to have a viscosity kept at a low level to contribute to a high response speed, it is preferred that the above-mentioned lower limit be high and that the upper limit be high. In the case where the composition of the present invention needs to have a Tni kept at a high level to have a high temperature stability, it is preferred that the above-mentioned lower limit be moderate and that the upper limit be moderate. In order to increase dielectric anisotropy for keeping driving voltage at a low level, it is preferred that the above-mentioned lower limit be low and that the upper limit be low.

The compound represented by General Formula (L-1) is preferably a compound selected from the group consisting of compounds represented by General Formula (L-1-1). 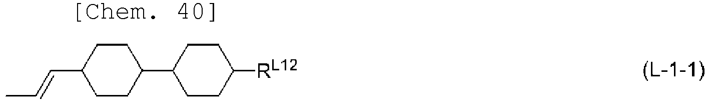 (in the formula, R^{L12} has the same meaning as that in General Formula (L-1))
The compound represented by General Formula (L-1-1) is preferably a compound selected from the group consisting of compounds represented by Formulae (L-1-1.1) to (L-1-1.3), also preferably the compound represented by Formula (L-1-1.2) or (L-1-1.3), and especially preferably the compound represented by Formula (L-1-1.3).

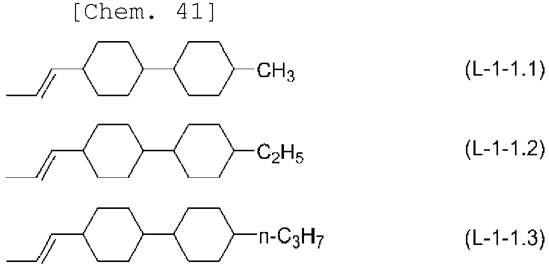

The lower limit of the preferred amount of the compound represented by Formula (L-1-1.3) is preferably 1%, 2%, 3%, 5%, 7%, or 10% relative to the amount of the whole composition of the present invention. The upper limit of the preferred amount is 20%, 15%, 13%, 10%, 8%, 7%, 6%, 5%, or 3% relative to the amount of the whole composition of the present invention.

The compound represented by General Formula (L-1) is preferably a compound selected from the group consisting of compounds represented by General Formula (L-1-2). 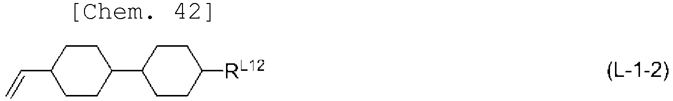 (in the formula, R^{L12} has the same meaning as that in General Formula (L-1))
The lower limit of the preferred amount of the compound represented by Formula (L-1-2) is preferably 1%, 5%, 10%, 15%, 17%, 20%, 23%, 25%, 27%, 30%, or 35% relative to the amount of the whole composition of the present invention. The upper limit of the preferred amount is 60%, 55%, 50%, 45%, 42%, 40%, 38%, 35%, 33%, or 30% relative to the amount of the whole composition of the present invention.

The compound represented by General Formula (L-1-2) is preferably a compound selected from the group consisting of compounds represented by Formulae (L-1-2.1) to (L-1-2.4), and also preferably any of the compounds represented by Formulae (L-1-2.2) to (L-1-2.4). In particular, the compound represented by Formula (L-1-2.2) is preferred because it especially enhances the response speed of the composition of the present invention. In the case where high Tni is needed rather than the response speed, it is preferred that the compound represented by Formula (L-1-2.3) or (L-1-2.4) be employed. In order to improve solubility at low temperature, it is preferred that the amount of each of the compounds represented by Formulae (L-1-2.3) and (L-1-2.4) be less than 30%.

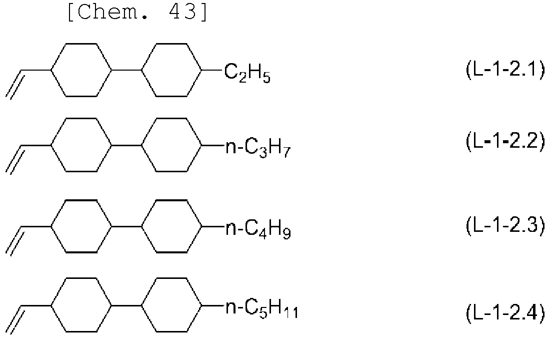

The lower limit of the preferred amount of the compound represented by Formula (L-1-2.2) is 10%, 15%, 18%, 20%, 23%, 25%, 27%, 30%, 33%, 35%, 38%, or 40% relative to the amount of the whole composition of the present invention. The upper limit of the preferred amount is 60%, 55%, 50%, 45%, 43%, 40%, 38%, 35%, 32%, 30%, 27%, 25%, or 22% relative to the amount of the whole composition of the present invention.

The composition of the present invention preferably contains the compounds represented by Formulae (L-1-1.3) and (L-1-2.2). The lower limit of the preferred amount of a combination of the compounds represented by Formulae (L-1-1.3) and (L-1-2.2) is 10%, 15%, 20%, 25%, 27%, 30%, 35%, or 40% relative to the amount of the whole composition of the present invention. The upper limit of the preferred amount is 60%, 55%, 50%, 45%, 43%, 40%, 38%, 35%, 32%, 30%, 27%, 25%, or 22% relative to the amount of the whole composition of the present invention.

The compound represented by General Formula (L-1) is preferably a compound selected from the group consisting of compounds represented by General Formula (L-1-3). 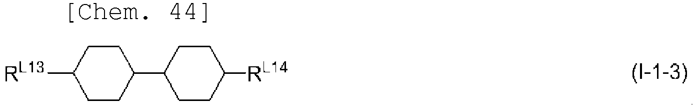 (in the formula, R^{L13} and R^{L14} each independently represent an alkyl group having 1 to 8 carbon atoms or an alkoxy group having 1 to 8 carbon atoms)
R^{L13} and R^{L14} are each preferably a linear alkyl group having 1 to 5 carbon atoms or a linear alkoxy group having 1 to 4 carbon atoms.

The lower limit of the preferred amount of the compound represented by Formula (L-1-3) is 1%, 5%, 10%, 13%, 15%, 17%, 20%, 23%, 25%, or 30% relative to the amount of the whole composition of the present invention. The upper limit of the preferred amount is 60%, 55%, 50%, 45%, 40%, 37%, 35%, 33%, 30%, 27%, 25%, 23%, 20%, 17%, 15%, 13%, or 10% relative to the amount of the whole composition of the present invention.
The compound represented by General Formula (L-1-3) is preferably a compound selected from the group consisting of compounds represented by Formulae (L-1-3.1) to (L-1-3.12), and also preferably any of the compounds represented by Formulae (L-1-3.1), (L-1-3.3), and (L-1-3.4). In particular, the compound represented by Formula (L-1-3.1) is preferred because it especially enhances the response speed of the composition of the present invention. In the case where high Tni is needed rather than the response speed, it is preferred that the compound represented by Formula (L-1-3.3), (L-1-3.4), (L-1-3.11), or (L-1-3.12) be employed. In order to improve solubility at low temperature, it is preferred that the total amount of the compounds represented by Formulae (L-1-3.3), (L-1-3.4), (L-1-3.11), and (L-1-3.12) be less than 20%.

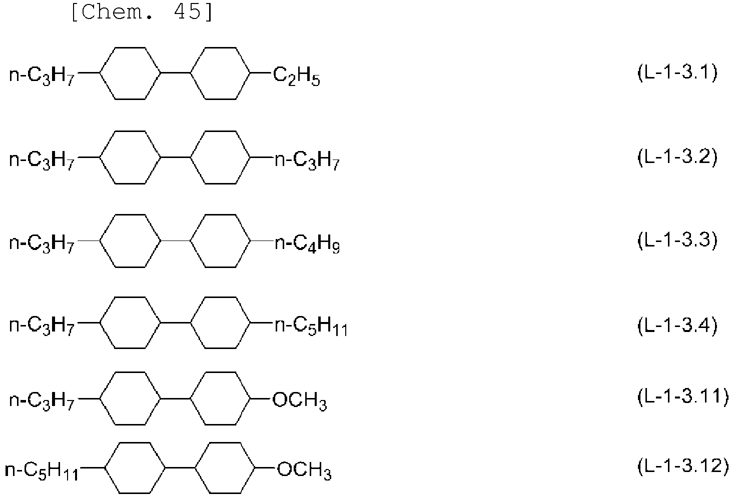

The lower limit of the preferred amount of the compound represented by Formula (L-1-3.1) is 1%, 2%, 3%, 5%, 7%, 10%, 13%, 15%, 18%, or 20% relative to the amount of the whole composition of the present invention. The upper limit of the preferred amount is 20%, 17%, 15%, 13%, 10%, 8%, 7%, or 6% relative to the amount of the whole composition of the present invention.

The compound represented by General Formula (L-1) is preferably a compound selected from the group consisting of compounds represented by General Formula (L-1-4) and/or General Formula (L-1-5). 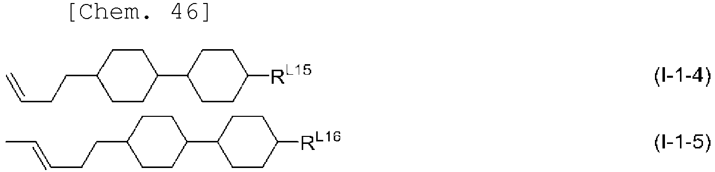 (in the formulae, R^{L15} and R^{L16} each independently represent an alkyl group having 1 to 8 carbon atoms or an alkoxy group having 1 to 8 carbon atoms)
R^{L15} and R^{L16} are each preferably a linear alkyl group having 1 to 5 carbon atoms, a linear alkoxy group having 1 to 4 carbon atoms, or a linear alkenyl group having 2 to 5 carbon atoms.

The lower limit of the preferred amount of the compound represented by Formula (L-1-4) is 1%, 5%, 10%, 13%, 15%, 17%, or 20% relative to the amount of the whole composition of the present invention. The upper limit of the preferred amount is 25%, 23%, 20%, 17%, 15%, 13%, or 10% relative to the amount of the whole composition of the present invention.

The lower limit of the preferred amount of the compound represented by Formula (L-1-5) is 1%, 5%, 10%, 13%, 15%, 17%, or 20% relative to the amount of the whole composition of the present invention. The upper limit of the preferred amount is 25%, 23%, 20%, 17%, 15%, 13%, or 10% relative to the amount of the whole composition of the present invention.

The compounds represented by General Formulae (L-1-4) and (L-1-5) are preferably compounds selected from the group consisting of compounds represented by Formulae (L-1-4.1) to (L-1-5.3), and also preferably the compounds represented by Formulae (L-1-4.2) and (L-1-5.2).

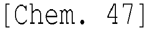

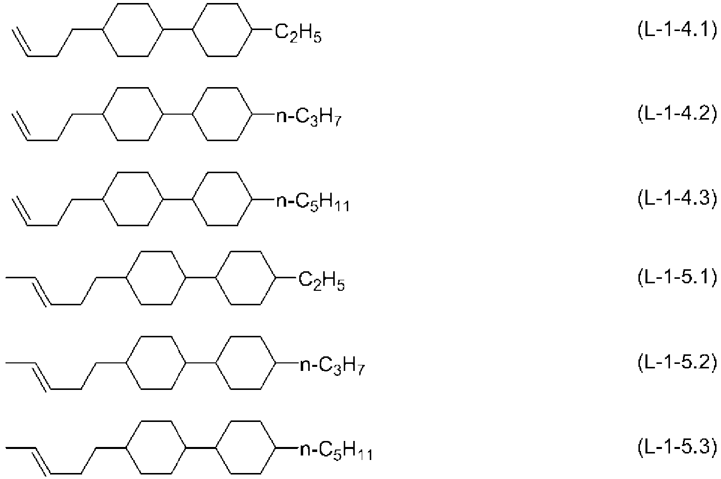

The lower limit of the preferred amount of the compound represented by Formula (L-1-4.2) is 1%, 2%, 3%, 5%, 7%, 10%, 13%, 15%, 18%, or 20% relative to the amount of the whole composition of the present invention. The upper limit of the preferred amount is 20%, 17%, 15%, 13%, 10%, 8%, 7%, or 6% relative to the amount of the whole composition of the present invention.

At least two compounds selected from the compounds represented by Formulae (L-1-1.3), (L-1-2.2), (L-1-3.1), (L-1-3.3), (L-1-3.4), (L-1-3.11), and (L-1-3.12) are preferably used in combination; and at least two compounds selected from the compounds represented by Formulae (L-1-1.3), (L-1-2.2), (L-1-3.1), (L-1-3.3), (L-1-3.4), and (L-1-4.2) are also preferably used in combination. The lower limit of the preferred amount of the compounds in each of such combinations is 1%, 2%, 3%, 5%, 7%, 10%, 13%, 15%, 18%, 20%, 23%, 25%, 27%, 30%, 33%, or 35% relative to the amount of the whole composition of the present invention. The upper limit thereof is 80%, 70%, 60%, 50%, 45%, 40%, 37%, 35%, 33%, 30%, 28%, 25%, 23%, or 20% relative to the amount of the whole composition of the present invention. In the case of focusing on the reliability of the composition, two or more compounds selected from the compounds represented by Formulae (L-1-3.1), (L-1-3.3), and (L-1-3.4) are preferably used in combination; in the case of focusing on the response speed of the composition, two or more compounds selected from the compounds represented by Formulae (L-1-1.3) and (L-1-2.2) are preferably used in combination.

The compound represented by General Formula (L-2) is as follows. 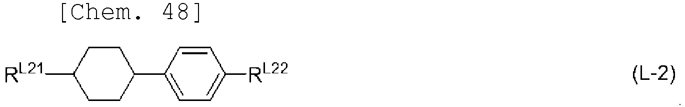 (in the formula, R^{L21} and R^{L22} independently have the same meanings as R^{L1} and R^{L2} in General Formula (L), respectively)
R^{L21} is preferably an alkyl group having 1 to 5 carbon atoms or an alkenyl group having 2 to 5 carbon atoms, and R^{L22} is preferably an alkyl group having 1 to 5 carbon atoms, an alkenyl group having 4 or 5 carbon atoms, or an alkoxy group having 1 to 4 carbon atoms.

The compounds represented by General Formula (L-1) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

In terms of solubility at low temperature, the amount is adjusted to be larger to produce a greater effect; in terms of response speed, the amount is adjusted to be smaller to produce a greater effect. In order to improve properties related to droplet stains and image-sticking, the range of the amount is preferably adjusted to be intermediate.

The lower limit of the preferred amount of the compound represented by Formula (L-2) is 1%, 2%, 3%, 5%, 7%, or 10% relative to the amount of the whole composition of the present invention. The upper limit of the preferred amount is 20%, 15%, 13%, 10%, 8%, 7%, 6%, 5%, or 3% relative to the amount of the whole composition of the present invention.

The compound represented by General Formula (L-2) is preferably a compound selected from the group consisting of compounds represented by Formulae (L-2.1) to (L-2.6), and also preferably any of the compounds represented by Formulae (L-2.1), (L-2.3), (L-2.4), and (L-2.6).

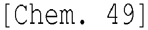

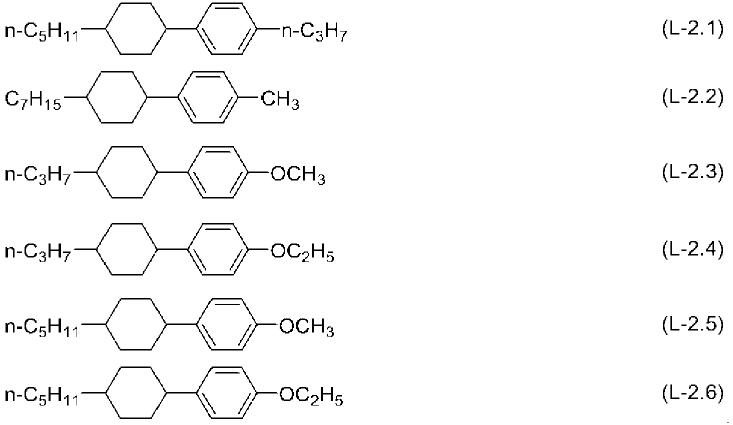

The compound represented by General Formula (L-3) is as follows. 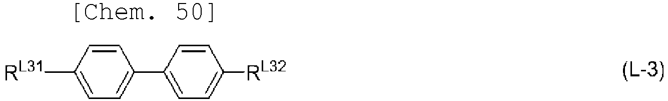 (in the formula, R^{L31} and R^{L32} independently have the same meanings as R^{L1} and R^{L2} in General Formula (L), respectively)
R^{L31} and R^{L32} are preferably each independently an alkyl group having 1 to 5 carbon atoms, an alkenyl group having 4 or 5 carbon atoms, or an alkoxy group having 1 to 4 carbon atoms.

The compounds represented by General Formula (L-3) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

The lower limit of the preferred amount of the compound represented by Formula (L-3) is 1%, 2%, 3%, 5%, 7%, or 10% relative to the amount of the whole composition of the present invention. The upper limit of the preferred amount is 20%, 15%, 13%, 10%, 8%, 7%, 6%, 5%, or 3% relative to the amount of the whole composition of the present invention.

In terms of an enhancement in birefringence, the amount is adjusted to be larger to produce a greater effect; in terms of high Tni, the amount is adjusted to be smaller to produce a greater effect. In order to improve properties related to droplet stains and image-sticking, the range of the amount is preferably adjusted to be intermediate.

The compound represented by General Formula (L-3) is preferably a compound selected from the group consisting of compounds represented by Formulae (L-3.1) to (L-3.9), also preferably any of the compounds represented by Formulae (L-3.1) to (L-3.7), and also preferably any of the compounds represented by Formulae (L-3.1), (L-3.2), (L-3.6), and (L-3.7) .

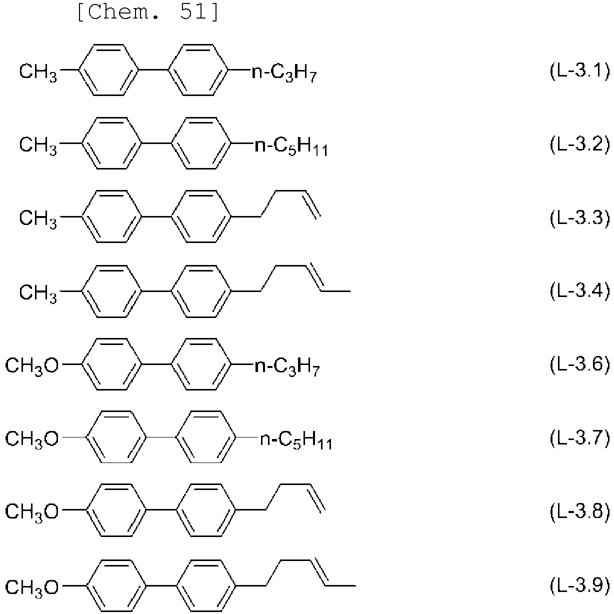

The compound represented by General Formula (L-4) is as follows. 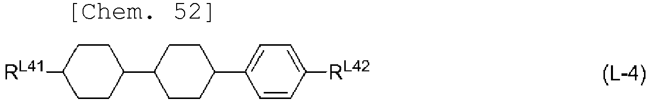 (in the formula, R^{L41} and R^{L42} independently have the same meanings as R^{L1} and R^{L2} in General Formula (L), respectively)
R^{L41} is preferably an alkyl group having 1 to 5 carbon atoms or an alkenyl group having 2 to 5 carbon atoms; and R^{L42} is preferably an alkyl group having 1 to 5 carbon atoms, an alkenyl group having 4 or 5 carbon atoms, or an alkoxy group having 1 to 4 carbon atoms.)

The compounds represented by General Formula (L-4) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

In the composition of the present invention, the amount of the compound represented by General Formula (L-4) needs to be appropriately adjusted on the basis of the intended properties such as solubility at low temperature, transition temperature, electric reliability, birefringence, process adaptability, droplet stains, image-sticking, and dielectric anisotropy.

The lower limit of the preferred amount of the compound represented by Formula (L-4) is 1%, 2%, 3%, 5%, 7%, 10%, 14%, 16%, 20%, 23%, 26%, 30%, 35%, or 40% relative to the amount of the whole composition of the present invention. The upper limit of the preferred amount of the compound represented by Formula (L-4) is 50%, 40%, 35%, 30%, 20%, 15%, 10%, or 5% relative to the amount of the whole composition of the present invention.

The compound represented by General Formula (L-4) is, for example, preferably any of compounds represented by Formulae (L-4.1) to (L-4.3).

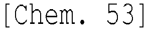

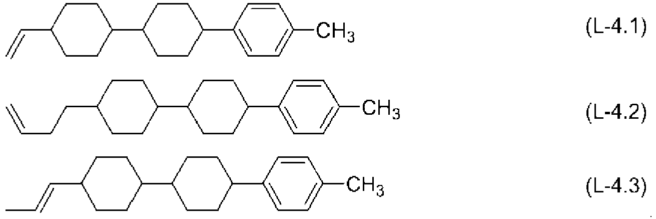

On the basis of the intended properties such as solubility at low temperature, transition temperature, electric reliability, and birefringence, the compound represented by Formula (L-4.1) may be used, the compound represented by Formula (L-4.2) may be used, both the compounds represented by Formulae (L-4.1) and (L-4.2) may be used, and all of the compounds represented by Formulae (L-4.1) to (L-4.3) may be used. The lower limit of the preferred amount of the compound represented by Formula (L-4.1) or (L-4.2) is 3%, 5%, 7%, 9%, 11%, 12%, 13%, 18%, or 21% relative to the amount of the whole composition of the present invention. The upper limit of the preferred amount is 45, 40%, 35%, 30%, 25%, 23%, 20%, 18%, 15%, 13%, 10%, or 8% relative to the amount of the whole composition of the present invention.

In the case where both the compound represented by Formula (L-4.1) and the compound represented by Formula (L-4.2) are used, the lower limit of the preferred amount thereof is 15%, 19%, 24%, or 30% relative to the amount of the whole composition of the present invention. The upper limit of the preferred amount is 45, 40%, 35%, 30%, 25%, 23%, 20%, 18%, 15%, or 13% relative to the amount of the whole composition of the present invention.

The compound represented by General Formula (L-4) is, for instance, preferably any of compounds represented by Formulae (L-4.4) to (L-4.6), and also preferably the compound represented by Formula (L-4.4).

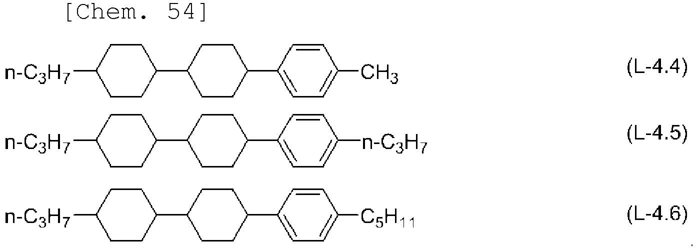

On the basis of the intended properties such as solubility at low temperature, transition temperature, electric reliability, and birefringence, the compound represented by Formula (L-4.4) may be used, the compound represented by Formula (L-4.5) may be used, and both the compounds represented by Formulae (L-4.4) and (L-4.5) may be used.

The lower limit of the preferred amount of the compound represented by Formula (L-4.4) or (L-4.5) is 3%, 5%, 7%, 9%, 11%, 12%, 13%, 18%, or 21% relative to the amount of the whole composition of the present invention. The upper limit of the preferred amount is 45, 40%, 35%, 30%, 25%, 23%, 20%, 18%, 15%, 13%, 10%, or 8% relative to the amount of the whole composition of the present invention.

In the case where both the compound represented by Formula (L-4.4) and the compound represented by Formula (L-4.5) are used, the lower limit of the preferred amount thereof is 15%, 19%, 24%, or 30% relative to the amount of the whole composition of the present invention. The upper limit of the preferred amount is 45, 40%, 35%, 30%, 25%, 23%, 20%, 18%, 15%, or 13% relative to the amount of the whole composition of the present invention.

The compound represented by General Formula (L-4) is preferably any of compounds represented by Formulae (L-4.7) to (L-4.10), and especially preferably the compound represented by Formula (L-4.9).

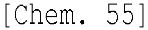

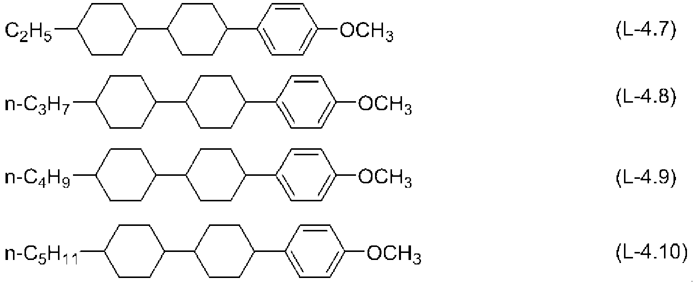

The compound represented by General Formula (L-5) is as follows. 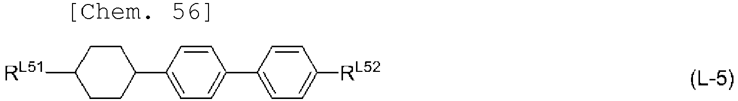 (in the formula, R^{L51} and R^{L52} independently have the same meanings as R^{L1} and R^{L2} in General Formula (L), respectively)
R^{L51} is preferably an alkyl group having 1 to 5 carbon atoms or an alkenyl group having 2 to 5 carbon atoms; and R^{L52} is preferably an alkyl group having 1 to 5 carbon atoms, an alkenyl group having 4 or 5 carbon atoms, or an alkoxy group having 1 to 4 carbon atoms.

The compounds represented by General Formula (L-5) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

In the composition of the present invention, the amount of the compound represented by General Formula (L-5) needs to be appropriately adjusted on the basis of the intended properties such as solubility at low temperature, transition temperature, electric reliability, birefringence, process adaptability, droplet stains, image-sticking, and dielectric anisotropy.

The lower limit of the preferred amount of the compound represented by Formula (L-5) is 1%, 2%, 3%, 5%, 7%, 10%, 14%, 16%, 20%, 23%, 26%, 30%, 35%, or 40% relative to the amount of the whole composition of the present invention. The upper limit of the preferred amount represented by Formula (L-5) is 50%, 40%, 35%, 30%, 20%, 15%, 10%, or 5% relative to the amount of the whole composition of the present invention.

The compound represented by General Formula (L-5) is preferably a compound represented by Formula (L-5.1) or (L-5.2), and especially preferably the compound represented by Formula (L-5.1).

The lower limit of the preferred amount of these compounds is 1%, 2%, 3%, 5%, or 7% relative to the amount of the whole composition of the present invention. The upper limit of the preferred amount thereof is 20%, 15%, 13%, 10%, or 9%.

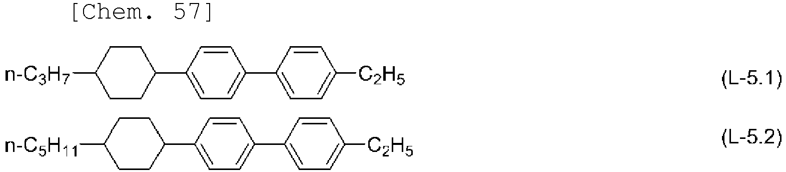

The compound represented by General Formula (L-5) is preferably a compound represented by Formula (L-5.3) or (L-5.4).

The lower limit of the preferred amount of these compounds is 1%, 2%, 3%, 5%, or 7% relative to the amount of the whole composition of the present invention. The upper limit of the preferred amount thereof is 20%, 15%, 13%, 10%, or 9%.

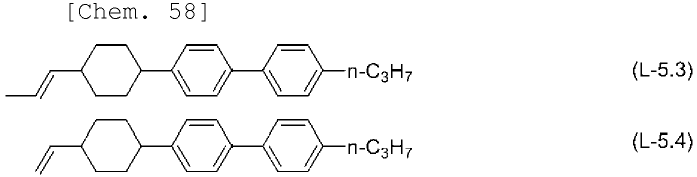

The compound represented by General Formula (L-5) is preferably a compound selected from the group consisting of compounds represented by Formulae (L-5.5) to (L-5.7), and especially preferably the compound represented by Formula (L-5.7).

The lower limit of the preferred amount of these compounds is 1%, 2%, 3%, 5%, or 7% relative to the amount of the whole composition of the present invention. The upper limit of the preferred amount thereof is 20%, 15%, 13%, 10%, or 9%.

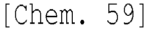

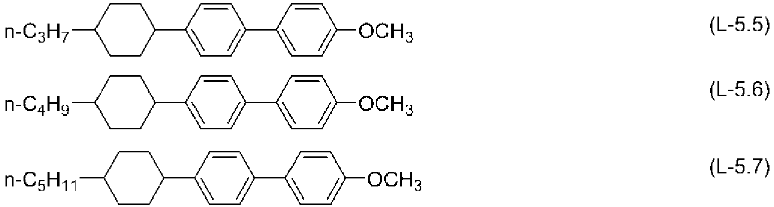

The compound represented by General Formula (L-6) is as follows. 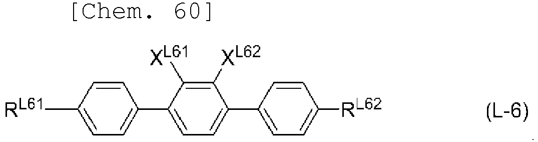 (in the formula, R^{L61} and R^{L62} independently have the same meanings as R^{L1} and R^{L2} in General Formula (L), respectively; and X^{L61} and X^{L62} each independently represent a hydrogen atom or a fluorine atom)
R^{L61} and R^{L62} are preferably each independently an alkyl group having 1 to 5 carbon atoms or an alkenyl group having 2 to 5 carbon atoms, and it is preferred that one of X^{L61} and X^{L62} be a fluorine atom and that the other one thereof be a hydrogen atom.

The compounds represented by General Formula (L-6) may be used alone or in combination. Such compounds can be used in any combination; a proper combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, four of the compounds are used in another embodiment, and five or more of the compounds are used in another embodiment.

The lower limit of the preferred amount of the compound represented by Formula (L-6) is 1%, 2%, 3%, 5%, 7%, 10%, 14%, 16%, 20%, 23%, 26%, 30%, 35%, or 40% relative to the amount of the whole composition of the present invention. The upper limit of the preferred amount of the compound represented by Formula (L-6) is 50%, 40%, 35%, 30%, 20%, 15%, 10%, or 5% relative to the amount of the whole composition of the present invention. In the case of focusing on an enhancement in Δn, the amount is preferably larger; in the case of focusing on precipitation at low temperature, the amount is preferably smaller.

The compound represented by General Formula (L-6) is preferably any of compounds represented by Formulae (L-6.1) to (L-6.9).

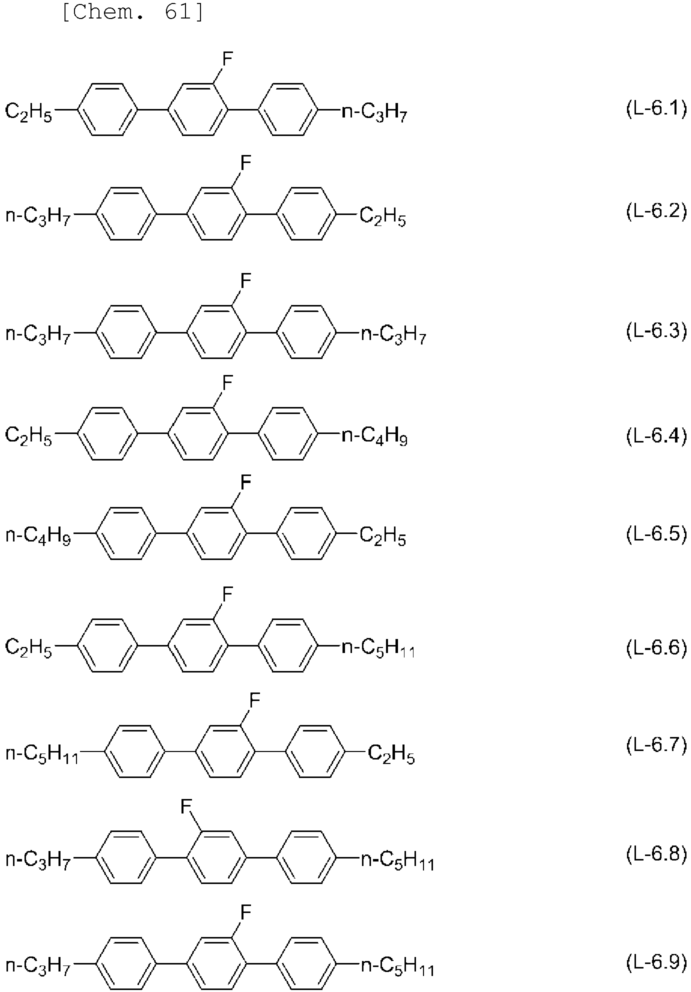

Such compounds can be used in any combination; one to three of the compounds are preferably used, and one to four of the compounds are more preferably used. Use of a compound having a broad molecular weight distribution is also effective in solubility; hence, a preferred example of use of these compounds is as follows: one compound is selected from the compounds represented by Formulae (L-6.1) and (L-6.2), one compound is selected from the compounds represented by Formulae (L-6.4) and (L-6.5), one compound is selected from the compounds represented by Formulae (L-6.6) and (L-6.7), one compound is selected from the compounds represented by Formulae (L-6.8) and (L-6.9), and a proper combination of the selected compounds is determined. In particular, it is preferred that the compound represented by Formula (L-6.1), the compound represented by Formula (L-6.3), the compound represented by Formula (L-6.4), the compound represented by Formula (L-6.6), and the compound represented by Formula (L-6.9) be used.

Furthermore, the compound represented by General Formula (L-6) is, for instance, preferably any of compounds represented by Formulae (L-6.10) to (L-6.17); in particular, the compound represented by Formula (L-6.11) is preferred.

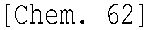

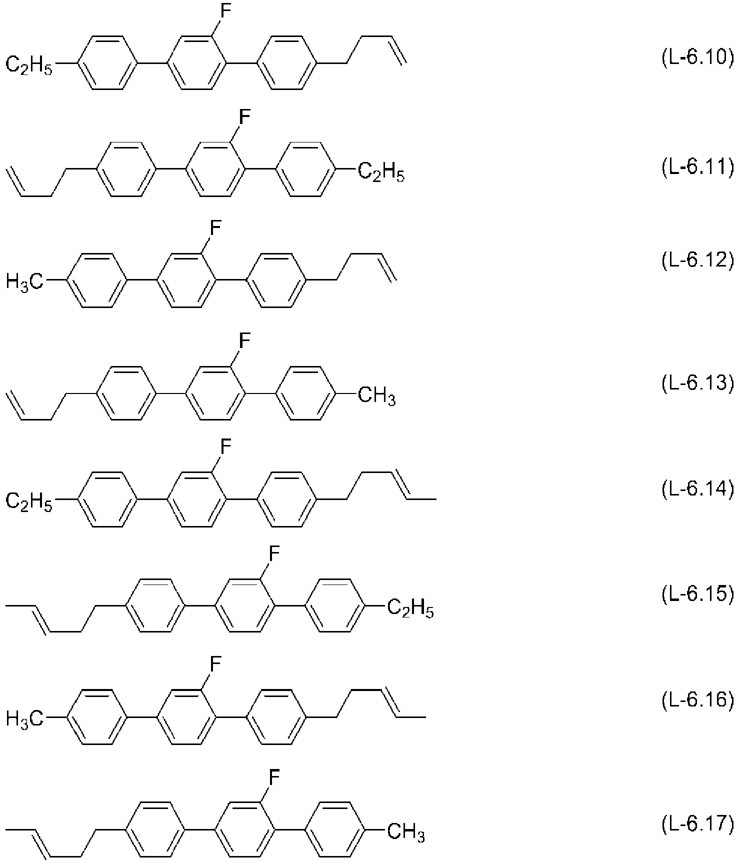

The lower limit of the preferred amount of these compounds is 1%, 2%, 3%, 5%, or 7% relative to the amount of the whole composition of the present invention. The upper limit of the preferred amount thereof is 20%, 15%, 13%, 10%, or 9%.

The compound represented by General Formula (L-7) is as follows. 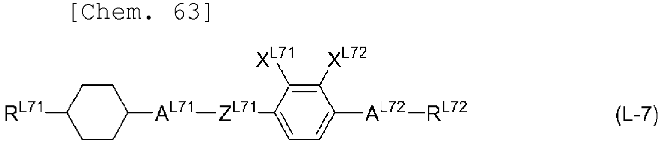 (in the formula, R^{L71} and R^{L72} independently have the same meanings as R^{L1} and R^{L2} in General Formula (L), respectively; A^{L71} and A^{L72} independently have the same meanings as A^{L2} and A^{L3} in General Formula (L), respectively; the hydrogen atoms of A^{L71} and A^{L72} are each independently optionally substituted with a fluorine atom; Z^{L71} have the same meaning as Z^{L2} in General Formula (L); and X^{L71} and X^{L72} each independently represent a fluorine atom or a hydrogen atom)
In the formula, R^{L71} and R^{L72} are preferably each independently an alkyl group having 1 to 5 carbon atoms, an alkenyl group having 2 to 5 carbon atoms, or an alkoxy group having 1 to 4 carbon atoms; A^{L71} and A^{L72} are preferably each independently a 1,4-cyclohexylene group or a 1,4-phenylene group; the hydrogen atoms of A^{L71} and A^{L72} are each independently optionally substituted with a fluorine atom; Q^{L71} is preferably a single bond or COO-, and preferably a single bond; and X^{L71} and X^{L72} are each preferably a hydrogen atom.

Such compounds can be used in any combination; a combination of the compounds is determined on the basis of the intended properties such as solubility at low temperature, transition temperature, electric reliability, and birefringence. For example, one of such compounds is used in an embodiment of the present invention, two of the compounds are used in another embodiment, three of the compounds are used in another embodiment, and four of the compounds are used in another embodiment.

In the composition of the present invention, the amount of the compound represented by General Formula (L-7) needs to be appropriately adjusted on the basis of the intended properties such as solubility at low temperature, transition temperature, electric reliability, birefringence, process adaptability, droplet stains, image-sticking, and dielectric anisotropy.

The lower limit of the preferred amount of the compound represented by Formula (L-7) is 1%, 2%, 3%, 5%, 7%, 10%, 14%, 16%, or 20% relative to the amount of the whole composition of the present invention. The upper limit of the preferred amount of a compound represented by Formula (L-7) is 30%, 25%, 23%, 20%, 18%, 15%, 10%, or 5% relative to the amount of the whole composition of the present invention.

In an embodiment in which the composition of the present invention needs to have a high Tni, the amount of the compound represented by Formula (L-7) is preferably adjusted to be larger; in an embodiment in which the composition needs to have a low viscosity, the amount thereof is preferably adjusted to be smaller.

The compound represented by General Formula (L-7) is preferably any of compounds represented by Formulae (L-7.1) to (L-7.4), and also preferably the compound represented by Formula (L-7.2).

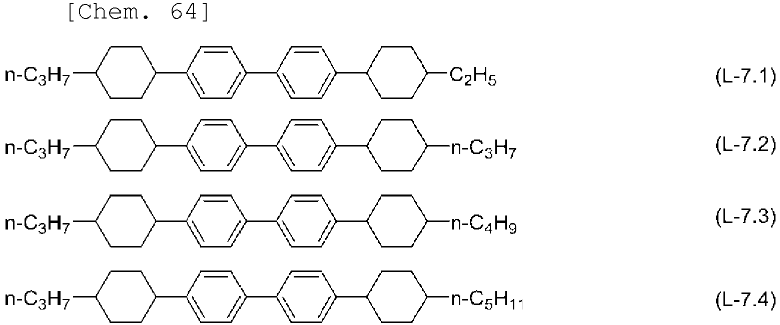

Furthermore, the compound represented by General Formula (L-7) is preferably any of compounds represented by Formulae (L-7.11) to (L-7.13), and also preferably the compound represented by Formula (L-7.11).

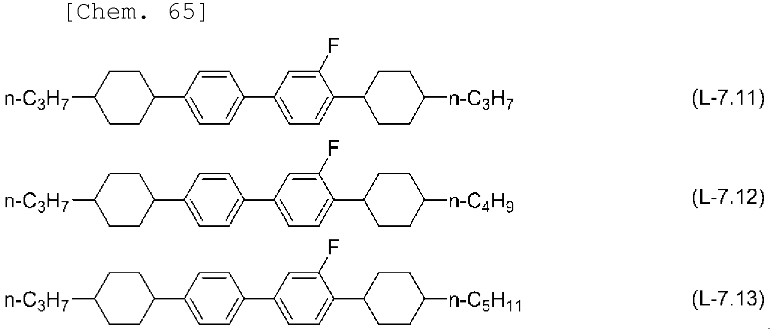

Moreover, the compound represented by General Formula (L-7) is any of compounds represented by Formulae (L-7.21) to (L-7.23), and preferably the compound represented by Formula (L-7.21).

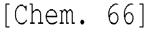

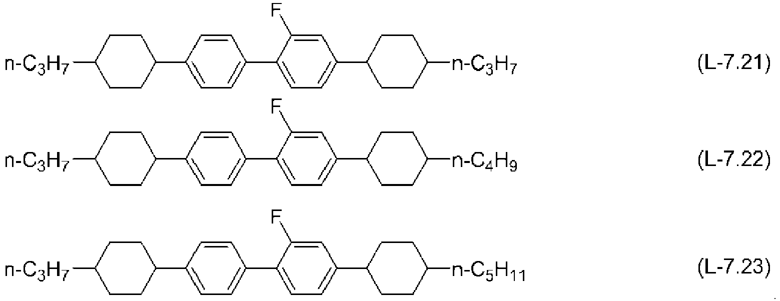

Furthermore, the compound represented by General Formula (L-7) is preferably any of compounds represented by Formulae (L-7.31) to (L-7.34), and also preferably the compound represented by Formula (L-7.31) and/or the compound represented by Formula (L-7.32).

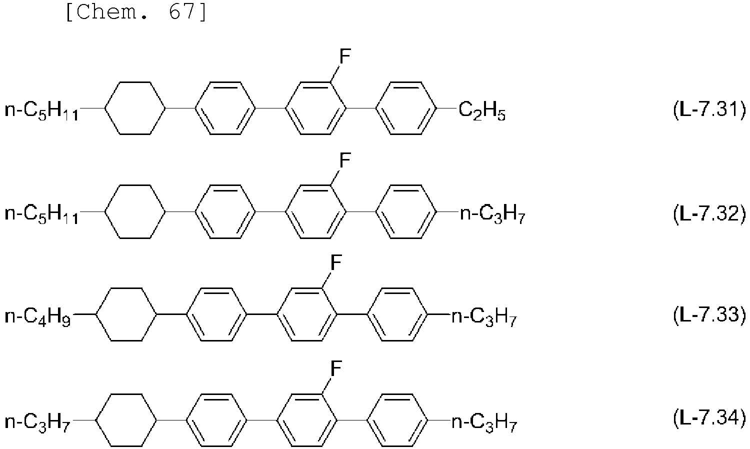

Moreover, the compound represented by General Formula (L-7) is preferably any of compounds represented by Formulae (L-7.41) to (L-7.44), and also preferably the compound represented by Formula (L-7.41) and/or the compound represented by Formula (L-7.42).

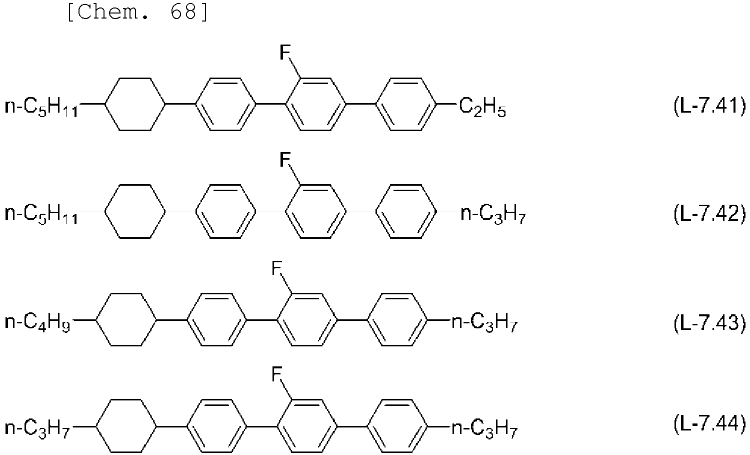

In the liquid crystal composition of the present invention, the lower limit of the amount of the compounds represented by General Formula (a) and General Formulae (LC3) to (LC5) in the composition is preferably not less than 5% (the term "%" used in the description of the composition hereinafter refers to mass%), also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, or also preferably not less than 40%. The upper limit is preferably not more than 95%, also preferably not more than 90%, also preferably not more than 88%, also preferably not more than 85%, also preferably not more than 83%, also preferably not more than 80%, also preferably not more than 78%, also preferably not more than 75%, also preferably not more than 73%, also preferably not more than 70%, also preferably not more than 68%, also preferably not more than 65%, also preferably not more than 63%, also preferably not more than 60%, also preferably not more than 55%, also preferably not more than 50%, or also preferably not more than 40%.

The liquid crystal composition of the present invention preferably contains the compound represented by General Formula (a) and the compound represented by General Formula (i). The lower limit of the total amount thereof in the composition is preferably not less than 1 mass%, also preferably not less than 3%, also preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, or also preferably not less than 40%. The upper limit is preferably not more than 100%, also preferably not more than 99%, also preferably not more than 95%, also preferably not more than 90%, also preferably not more than 85%, also preferably not more than 80%, also preferably not more than 75%, also preferably not more than 70%, also preferably not more than 65%, also preferably not more than 60%, also preferably not more than 55%, also preferably not more than 50%, also preferably not more than 40%, also preferably not more than 38%, also preferably not more than 35%, also preferably not more than 33%, also preferably not more than 30%, also preferably not more than 28%, also preferably not more than 25%, also preferably not more than 23%, also preferably not more than 20%, also preferably not more than 18%, also preferably not more than 15%, or also preferably not more than 10%.

The liquid crystal composition of the present invention preferably contains the compound represented by General Formula (a) and the compound represented by General Formula (ii). The lower limit of the total amount thereof in the composition is preferably not less than 1%, also preferably not less than 3%, also preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, or also preferably not less than 40%. The upper limit is preferably not more than 100%, also preferably not more than 99%, also preferably not more than 95%, also preferably not more than 90%, also preferably not more than 85%, also preferably not more than 80%, also preferably not more than 75%, also preferably not more than 70%, also preferably not more than 65%, also preferably not more than 60%, also preferably not more than 55%, also preferably not more than 50%, also preferably not more than 40%, also preferably not more than 38%, also preferably not more than 35%, also preferably not more than 33%, also preferably not more than 30%, also preferably not more than 28%, also preferably not more than 25%, also preferably not more than 23%, also preferably not more than 20%, also preferably not more than 18%, also preferably not more than 15%, or also preferably not more than 10%.

The liquid crystal composition of the present invention preferably contains the compound represented by General Formula (a) and the compound represented by General Formula (L). The lower limit of the total amount thereof in the composition is preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, or also preferably not less than 40%. The upper limit is preferably not more than 95%, also preferably not more than 90%, also preferably not more than 88%, also preferably not more than 85%, also preferably not more than 83%, also preferably not more than 80%, also preferably not more than 78%, also preferably not more than 75%, also preferably not more than 73%, also preferably not more than 70%, also preferably not more than 68%, also preferably not more than 65%, also preferably not more than 63%, also preferably not more than 60%, also preferably not more than 55%, also preferably not more than 50%, or also preferably not more than 40%.

The liquid crystal composition of the present invention preferably contains the compound represented by General Formula (a) and the compound represented by General Formula (L-1). The lower limit of the total amount thereof in the composition is preferably not less than 1%, also preferably not less than 3%, also preferably not less than 5%, also preferably not less than 10%, also preferably not less than 13%, also preferably not less than 15%, also preferably not less than 18%, also preferably not less than 20%, also preferably not less than 23%, also preferably not less than 25%, also preferably not less than 28%, also preferably not less than 30%, also preferably not less than 33%, also preferably not less than 35%, also preferably not less than 38%, or also preferably not less than 40%. The upper limit is preferably not more than 95%, also preferably not more than 90%, also preferably not more than 88%, also preferably not more than 85%, also preferably not more than 83%, also preferably not more than 80%, also preferably not more than 78%, also preferably not more than 75%, also preferably not more than 73%, also preferably not more than 70%, also preferably not more than 68%, also preferably not more than 65%, also preferably not more than 63%, also preferably not more than 60%, also preferably not more than 55%, also preferably not more than 50%, or also preferably not more than 40%.

In the liquid crystal composition of the present invention, the total amount of the compounds represented by General Formulae (a), (LC3) to (LC5), and (L) is preferably in the range of 70 to 100 mass%, more preferably 80 to 100 mass%, further preferably 85 to 100 mass%, further preferably 90 to 100 mass%, and especially preferably 95 to 100 mass%.

The dielectric anisotropy (Δε) of the liquid crystal composition of the present invention at 25°C is from -1.5 to -8.0, preferably -2.0 to -6.0, more preferably -2.0 to -5.0, and especially preferably -2.5 to -4.0.

The refractive index anisotropy (Δn) of the liquid crystal composition of the present invention at 20°C is from 0.08 to 0.14, preferably 0.09 to 0.13, and especially preferably 0.09 to 0.12. More specifically, the refractive index anisotropy is preferably from 0.10 to 0.13 for a thin cell gap or preferably from 0.08 to 0.10 for a thick cell gap.

The viscosity (η) of the liquid crystal composition of the present invention at 20°C is from 10 to 30 mPa·s, preferably 10 to 25 mPa·s, and especially preferably 10 to 22 mPa·s.

The rotational viscosity (γ₁) of the liquid crystal composition of the present invention at 20°C is from 60 to 130 mPa·s, preferably 60 to 110 mPa·s, and especially preferably 60 to 100 mPa·s.

The nematic phase-isotropic liquid phase transition temperature (Tₙᵢ) of the liquid crystal composition of the present invention is from 60°C to 120°C, preferably 70°C to 100°C, and especially preferably 70°C to 85°C.

The liquid crystal composition of the present invention may contain general nematic liquid crystal, smectic liquid crystal, cholesteric liquid crystal, an antioxidant, an ultraviolet absorber, an infrared absorber, a polymerizable monomer, and a light stabilizer in addition to the above-mentioned compounds.

The liquid crystal composition, for example, contains 0.01 to 2 mass% of a polymerizable compound as a polymerizable monomer, such as a biphenyl derivative or a terphenyl derivative.

The polymerizable monomer to be used may be at least one monofunctional polymerizable compound having one reactive group or at least one polyfunctional polymerizable compound having two or more reactive groups, such as difunctional or trifunctional polymerizable compound. The polymerizable compound having a reactive group may contain a mesogenic part or may be free therefrom.

In the polymerizable compound having a reactive group, the reactive group is preferably a photopolymerizable substituent.

The polymerizable compound used in the present invention is preferably a compound represented by General Formula (P). 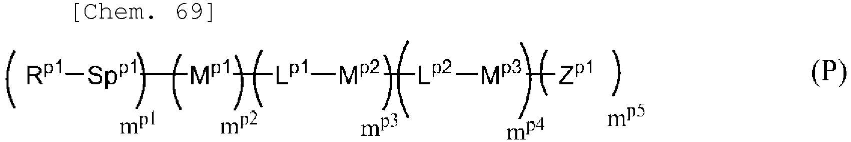
(in General Formula (P), Z^{p1} represents a fluorine atom, a cyano group, a hydrogen atom, an alkyl group which has 1 to 15 carbon atoms and of which a hydrogen atom is optionally substituted with a halogen atom, an alkoxyl group which has 1 to 15 carbon atoms and of which a hydrogen atom is optionally substituted with a halogen atom, an alkenyl group which has 1 to 15 carbon atoms and of which a hydrogen atom is optionally substituted with a halogen atom, an alkenyyloxy group which has 1 to 15 carbon atoms and of which a hydrogen atom is optionally substituted with a halogen atom, or -Sp^{p2}-R^{p2};
R^{p1} and R^{p2} each independently represent any of groups represented by Formulae (R-I) to (R-IX);

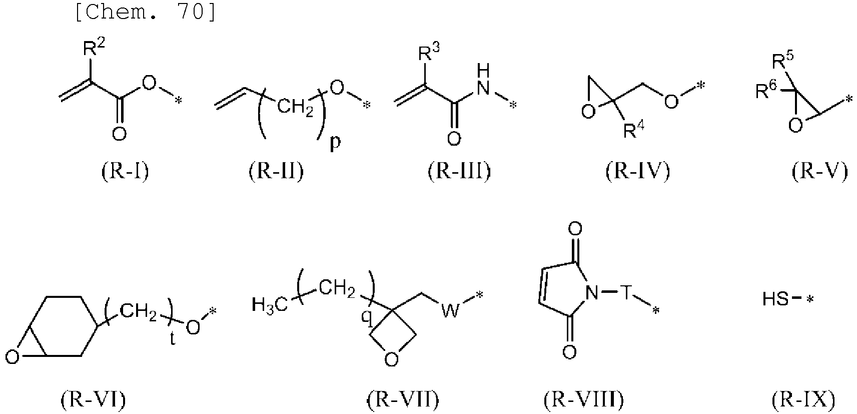

in Formulae (R-I) to (R-IX), R² to R⁶ each independently represent a hydrogen atom, an alkyl group having 1 to 5 carbon atoms, or a halogenated alkyl group having 1 to 5 carbon atoms, W represents a single bond, -O-, or a methylene group, T represents a single bond or -COO-, and p, t, and q each independently represent 0, 1, or 2;
Sp^{p1} and Sp^{p2} each represent a spacer group;
L^{p1} and L^{p2} each independently represent a single bond,-O-, -S-, -CH₂-, -OCH₂-, -CH₂O-, -CO-, -C₂H₄-, -COO-, -OCO-,-OCOOCH₂-, -CH₂OCOO-, -OCH₂CH₂O-, -CO-NR^{a}-, -NR^{a}-CO-, -SCH₂-,-CH₂S-, -CH=CR^{a}-COO-, -CH=CR^{a}-OCO-, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -(CH₂)_{z}-C(=O-O-, -(CH₂)z-O-(C=O)-, -O-(C=O)-(CH₂)z-, -(C=O)-O-(CH₂)z-, -CH=CH-, -CF=CF-, -CF=CH-, -CH=CF-, -CF₂-, -CF₂O-, -OCF₂-, -CF₂CH₂-, -CH₂CF₂-, -CF₂CF₂-, or -C≡C-(where R^{a}'s each independently represent a hydrogen atom or an alkyl group having 1 to 4 carbon atoms, and z represents an integer from 1 to 4);
M^{p2} represents a 1,4-phenylene group, a 1,4-cyclohexylene group, an anthracene-2,6-diyl group, a phenanthrene-2,7-diyl group, a pyridine-2,5-diyl group, a pyrimidine-2,5-diyl group, a naphthalen-2,6-diyl group, an indane-2,5-diyl group, a 1,2,3,4-tetrahydronaphthalen-2,6-diyl group, or a 1,3-dioxane-2,5-diyl group; M^{p2} may be unsubstituted or substituted with an alkyl group having 1 to 12 carbon atoms, a halogenated alkyl group having 1 to 12 carbon atoms, an alkoxy group having 1 to 12 carbon atoms, a halogenated alkoxy group having 1 to 12 carbon atoms, a halogen atom, a cyano group, a nitro group, or -R^{p1};
M^{p1} represents any of Formulae (i-11) to (ix-11)

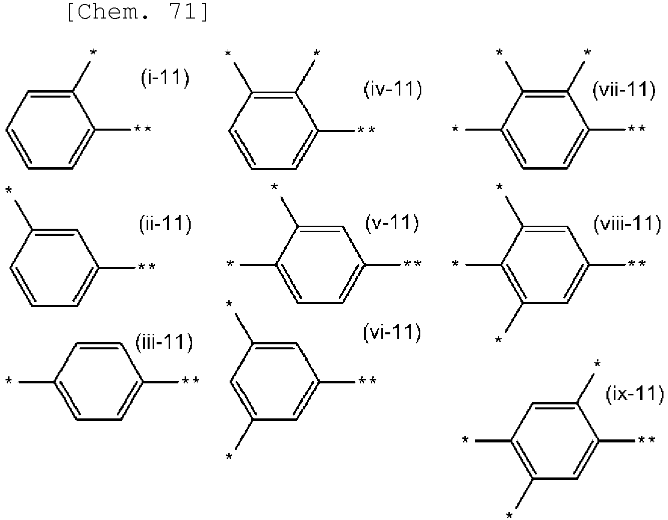

(in each of the formulae, the symbol * represents the linkage to Sp^{p1}, and the symbol ** represents the linkage to L^{p1} or L^{p2});
M^{p3} represents any of Formulae (i-13) to (ix-13)

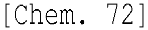

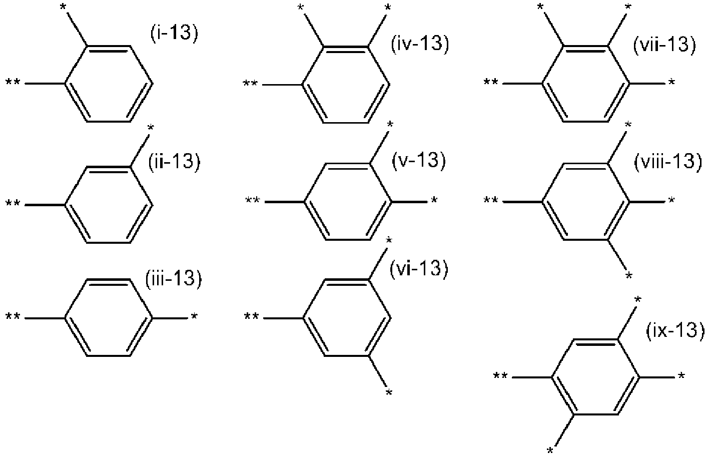

(in each of the formulae, the symbol * represents the linkage to Zp^{p1}, and the symbol ** represents the linkage to L^{p2}) ;
m^{p2} to m^{p4} each independently represent 0, 1, 2, or 3; m^{p1} and m^{p5} each independently represent 1, 2, or 3; in the case where Z^{p1} is multiple, the multiple Z^{p1}'s may be the same as or different from each other; in the case where R^{p1} is multiple, the multiple R^{p1}'s may be the same as or different from each other; in the case where R^{p2} is multiple, the multiple R^{p2}'s may be the same as or different from each other; in the case where Sp^{p1} is multiple, the multiple Sp^{p1}'s may be the same as or different from each other; in the case where Sp^{p2} is multiple, the multiple Sp^{p2}'s may be the same as or different from each other; in the case where L^{p1} is multiple, the multiple L^{p1}'s may be the same as or different from each other; and in the case where M^{p2} is multiple, the multiple M^{p2}'s may be the same as or different from each other) It is preferred that at least one of such polymerizable monomers be used.

In General Formula (1) in the present invention, Z^{p1} is preferably -Sp^{p2}-R^{p2}, and R¹¹ and R¹² are preferably each independently represented by Formula (R-1) or (R-3).

In General Formula (P), m^{p1} + m^{p5} is preferably two or more.

In General Formula (P), L^{p1} is preferably a single bond, -OCH₂-, -CH₂O-, -CO-, -C₂H₄-, -COO-, -OCO-, -COOC₂H₄-,-OCOC₂H₄-, -C₂H₄OCO-, -C₂H₄COO-, -CH=CH-, -CF₂-, -CF₂O-,-(CH₂)_{z}-C(=O)-O-, -(CH₂)z-O-(C=O)-, -O-(C=O)-(CH₂)z-, -CH=CH-COO-, -COO-CH=CH-, -OCOCH=CH-, -(C=O)-O-(CH₂)z-, -OCF₂-, or-C≡C-; L^{p2} is preferably -OCH₂CH₂O-, -COOC₂H₄-, -OCOC₂H₄-,-(CH₂)_{z}-C(=O)-O-, -(CH₂)z-O-(C=O)-, -O-(C=O)-(CH₂)z-, -(C=O)-O-(CH₂)z-, -CH=CH-COO-, -COO-CH=CH-, -OCOCH=CH-, -C₂H₄OCO-, or -C₂H₄COO-; and z in these formulae is preferably an integer from 1 to 4.

In General Formula (P), at least any of L^{p1} and L^{p2} is preferably at least one selected from the group consisting of -(CH₂)_{z}-C(=O)-O-, -(CH₂)z-O-(C=O)-, -O-(C=O)-(CH₂)z-, and -(C=O)-O-(CH₂)z-.

In General Formula (P), R^{p1} and R^{p2} being each independently represented by any of Formulae (R-1) to (R-15) 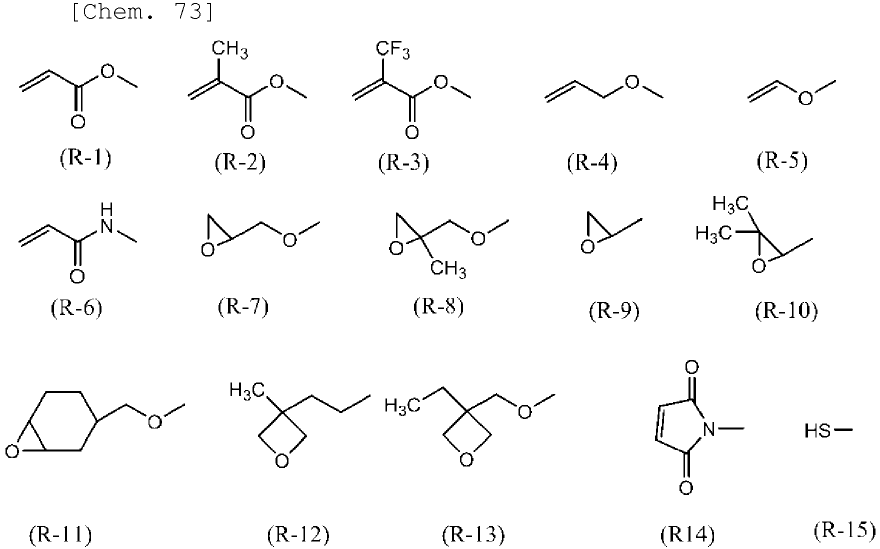 are preferred.

In General Formula (P), m^{p3} preferably represents 0, 1, 2, or 3; in the case where m^{p2} represents 1, L^{p1} is preferably a single bond; in the case where m^{p2} represents 2 or 3, at least one of the multiple L^{p1}'s is preferably a single bond.

In General Formula (P), m^{p3} preferably represents 0, 1, 2, or 3; in the case where m^{p3} represents 1, M^{p2} is preferably a 1,4-phenylene group; in the case where m^{p3} represents 2 or 3, at least one of the multiple M^{p2}'s that is present close to M^{p1} with L^{p1} interposed therebetween is preferably a 1,4-phenylene group.

In General Formula (P), m^{p3} preferably represents 0, 1, 2, or 3; and at least one M^{p2} is preferably a 1,4-phenylene group substituted with one or more fluorine atoms.

In General Formula (P), m^{p4} preferably represents 0, 1, 2, or 3; and at least one M^{p3} is preferably a 1,4-phenylene group substituted with one or more fluorine atoms.

In General Formula (P), the spacer groups (Sp^{p1}, Sp^{p2}, and Sp^{p4}) are each preferably a single bond, -OCH₂-, -(CH₂)_{z}O-, -CO-, -C₂H₄-, -COO-, -OCO-, -COOC₂H₄-, -OCOC₂H₄-, -(CH₂)_{z}-,-C₂H₄OCO-, -C₂H₄COO-, -CH=CH-, -CF₂-, -CF₂O-, -(CH₂)_{z}-C(=O)-O-, -(CH₂)_{z}-O-(C=O)-, -O-(C=O)-(CH₂)_{z}-, -(C=O)-O-(CH₂)_{z}-, -O-(CH₂)_{z}-O-, -OCF₂-, -CH=CH-COO-, -COO-CH=CH-, -OCOCH=CH-, or-C≡C-, where Z is preferably an integer from 1 to 10.

The specific amount of the polymerizable monomer in the polymerizable-monomer-containing liquid crystal composition is preferably not more than 2%, more preferably not more than 1.5%, further preferably not more than 1%, especially preferably not more than 0.5%, and most preferably not more than 0.4%; namely, it is 2% or less.

The polymerizable compound represented by General Formula (P) in the present invention is preferably at least one compound selected from the group consisting of compounds represented by General Formulae (P-a), (P-b), (P-c), and (P-d) .

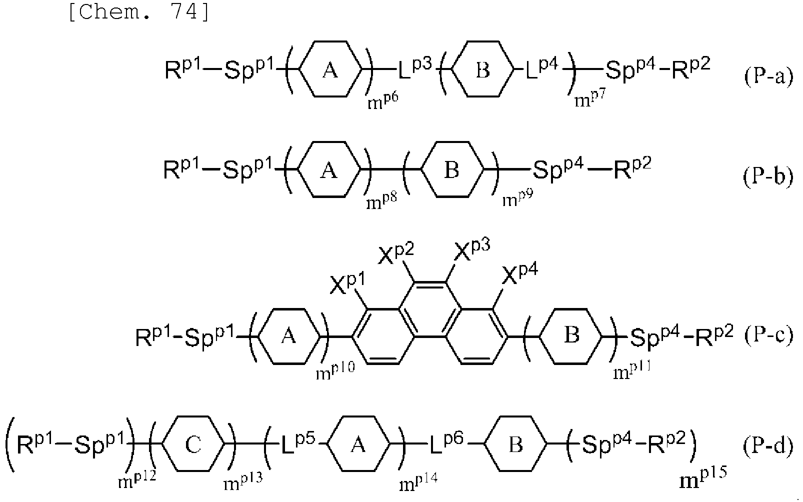

In each of General Formulae (P-a) to (P-d), R^{p1} and R^{p2} each independently represent any of Formulae (R-I) to (R-IX) ;

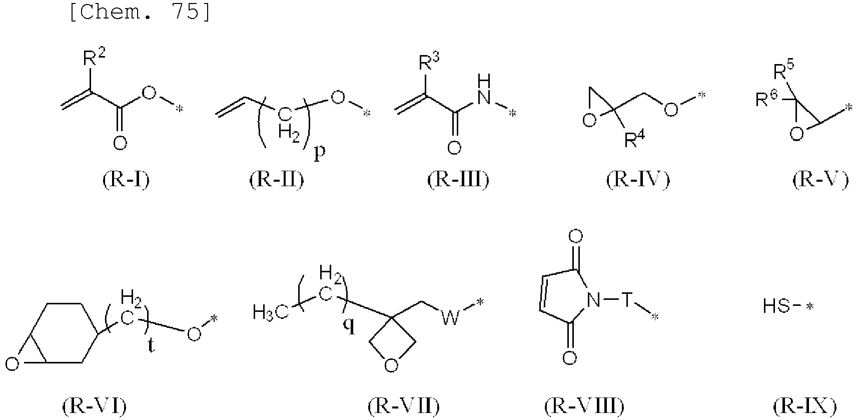

in Formulae (R-I) to (R-IX), R² to R⁶ each independently represent a hydrogen atom, an alkyl group having 1 to 5 carbon atoms, or a halogenated alkyl group having 1 to 5 carbon atoms, W represents a single bond, -O-, or a methylene group, T represents a single bond or -COO-, and p, t, and q each independently represent 0, 1, or 2;
the rings A and B each independently represent a 1,4-phenylene group, a 1,4-cyclohexylene group, an anthracene-2,6-diyl group, a phenanthrene-2,7-diyl group, a pyridine-2,5-diyl group, a pyrimidine-2,5-diyl group, a naphthalen-2,6-diyl group, an indane-2,5-diyl group, a 1,2,3,4-tetrahydronaphthalen-2,6-diyl group, or a 1,3-dioxane-2,5-diyl group and are each preferably unsubstituted or substituted with an alkyl group having 1 to 12 carbon atoms, a halogenated alkyl group having 1 to 12 carbon atoms, an alkoxy group having 1 to 12 carbon atoms, a halogenated alkoxy group having 1 to 12 carbon atoms, a halogen atom, a cyano group, a nitro group, or -R^{p1};
the ring C is represented by any of Formulae (c-i) to (c-ix) 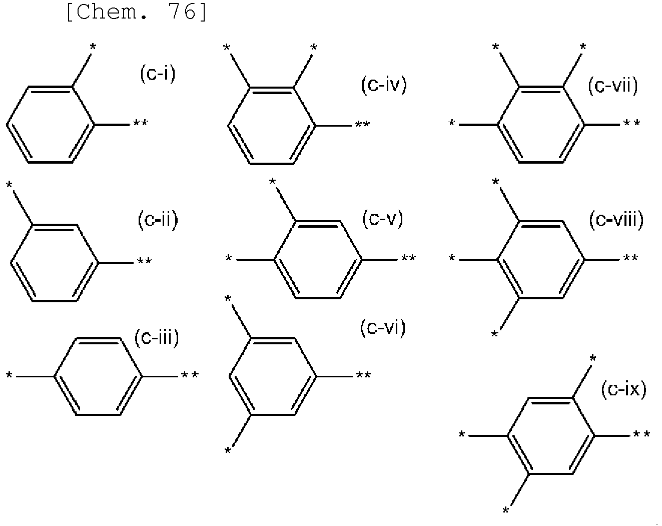
(in each of the formulae, the symbol * represents the linkage to Sp^{p1}, and the symbol ** represents the linkage to L^{p5} or L^{p6}) ;
Sp^{p1} and Sp^{p4} each represent a spacer group; X^{p1} to X^{p4} preferably each independently represent a hydrogen atom or a halogen atom; and
L^{p4}, L^{p5}, and L^{p6} are preferably each independently a single bond, -OCH₂-, -CH₂O-, -CO-, -C₂H₄-, -COO-, -OCO-,-COOC₂H₄-, -OCOC₂H₄-, -C₂H₄OCO-, -C₂H₄COO-, -CH=CH-, -CF₂-,-CF₂O-, -(CH₂)_{z}-C(=O)-O-, -(CH₂)_{z}-O-(C=O)-, -O-(C=O)-(CH₂)_{z}-,-(C=O)-O-(CH₂)_{z}-, -O-(CH₂)_{z}-O-,-OCF₂-, -CH=CHCOO-, -COOCH=CH-, -OCOCH=CH-, or -C≡C-, where z is preferably an integer from 1 to 4.

L^{p3} is preferably -CH=CHCOO-, -COOCH=CH-, or -OCOCH=CH-.

In the compound represented by General Formula (P-a), m^{p6} and m^{p7} preferably each independently represent 0, 1, 2, or 3; and m^{p6} + m^{p7} is preferably from 2 to 5.

In the compound represented by General Formula (P-b), m^{p8} and m^{p9} preferably each independently represent 1, 2, or 3; and m^{p6} + m^{p7} is preferably 2 or 3.

In the compound represented by General Formula (P-c), m^{p10} and m^{p11} preferably each independently represent 0 or 1; and m^{p10} + m^{p11} is preferably 0 or 1. Since the structure represented by General Formula (P-c) has phenanthrene, it is believed that the composition is highly photosensitizing as a whole.

In the compound represented by General Formula (P-d), m^{p12} and m^{p15} each independently represent 1, 2, or 3; m^{p13} preferably represents 0, 1, 2, or 3; and m^{p14} preferably represents 0, 1, or 2. m^{p12} + m^{p15} is preferably from 2 to 5. In the case where R^{p1} is multiple, the multiple R^{p1}'s may be the same as or different from each other; in the case where R^{p1} is multiple, the multiple R^{p1}'s may be the same as or different from each other; in the case where R^{p2} is multiple, the multiple R^{p2}'s may be the same as or different from each other; in the case where SP^{p1} is multiple, the multiple SP^{p1}'s may be the same as or different from each other; in the case where SP^{p4} is multiple, the multiple SP^{p4}'s may be the same as or different from each other; in the case where L^{p4} and L^{p5} are multiple, the corresponding ones of them may be the same as or different from each other; and in the case where the rings A to C are multiple, the corresponding ones of them may be the same as or different from each other. In the polymerizable-monomer-containing composition used in the present invention, using the polymerizable monomer represented by General Formula (P-d) in combination with the compounds represented by General Formulae (1) and (2) enables a reduction in the length of the time for photopolymerization.

Preferred examples of the structures represented by General Formulae (P-a) to (P-d) in the present invention will now be described.

Preferred examples of the compound represented by General Formula (P-a) in the present invention include polymerizable compounds represented by Formulae (P-a-1) to (P-a-31).

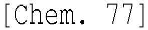

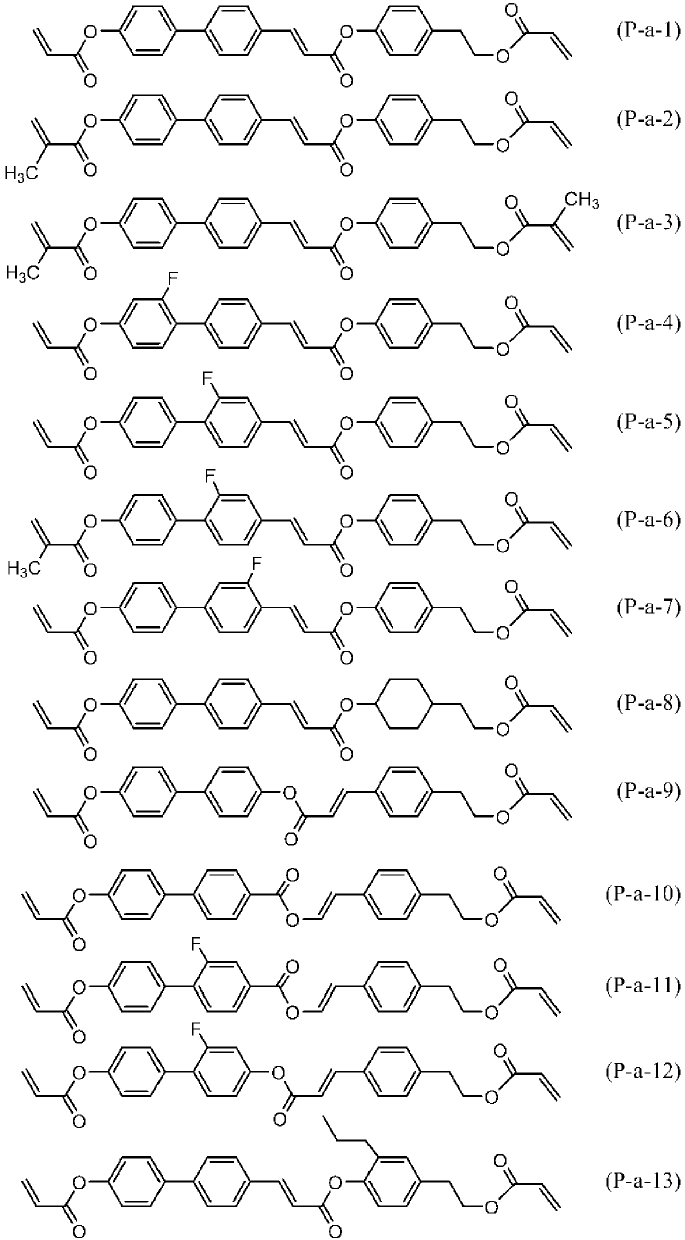

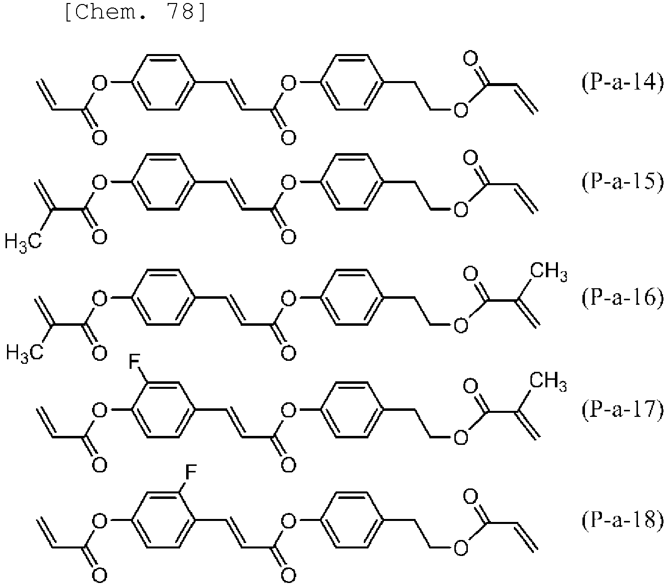

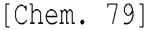

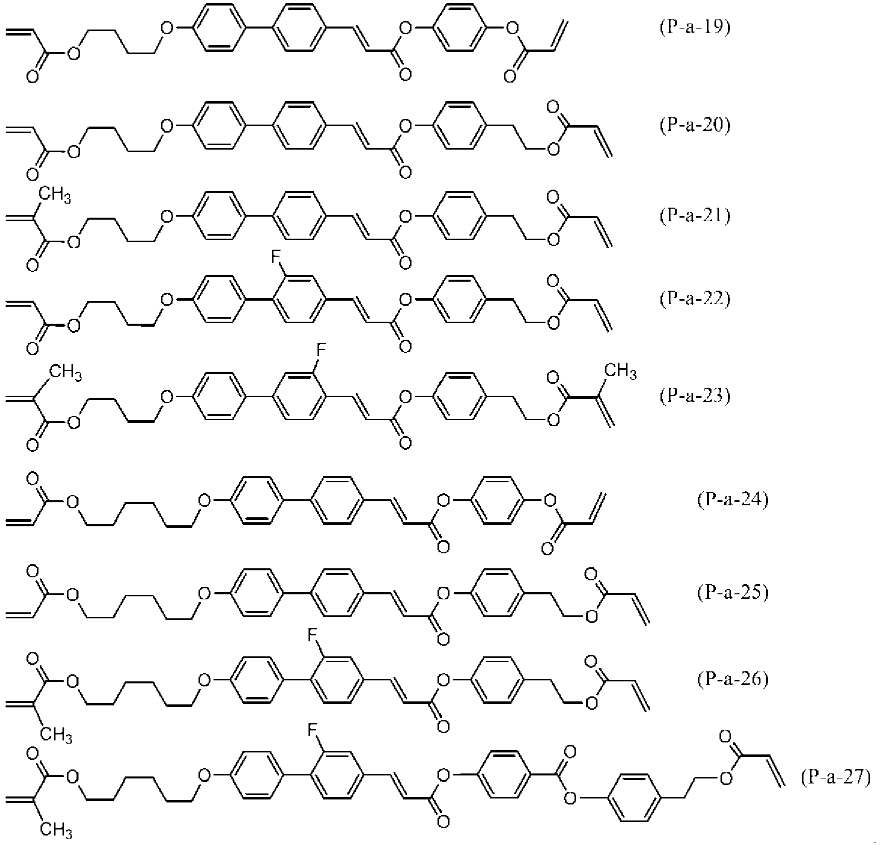

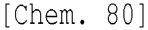

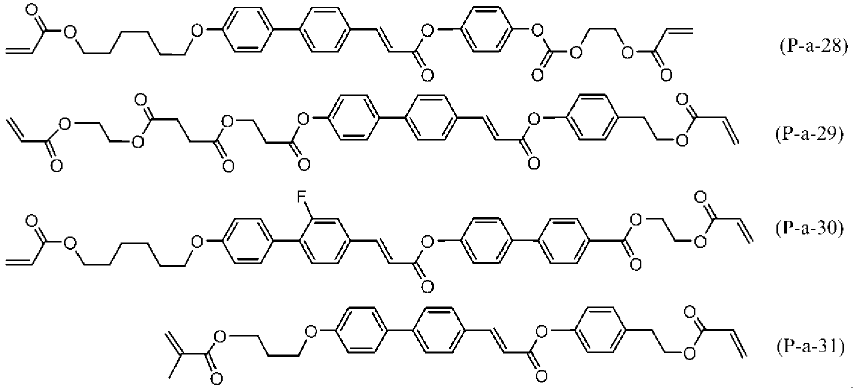

The specific amount of the polymerizable monomer represented by General Formula (P-a) is preferably not more than 5%, more preferably not more than 3%, further preferably not more than 2%, especially preferably not more than 1%, and most preferably not more than 0.8%.

Preferred examples of the compound represented by General Formula (P-b) in the present invention include polymerizable compounds represented by Formulae (P-b-1) to (P-b-34).

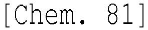

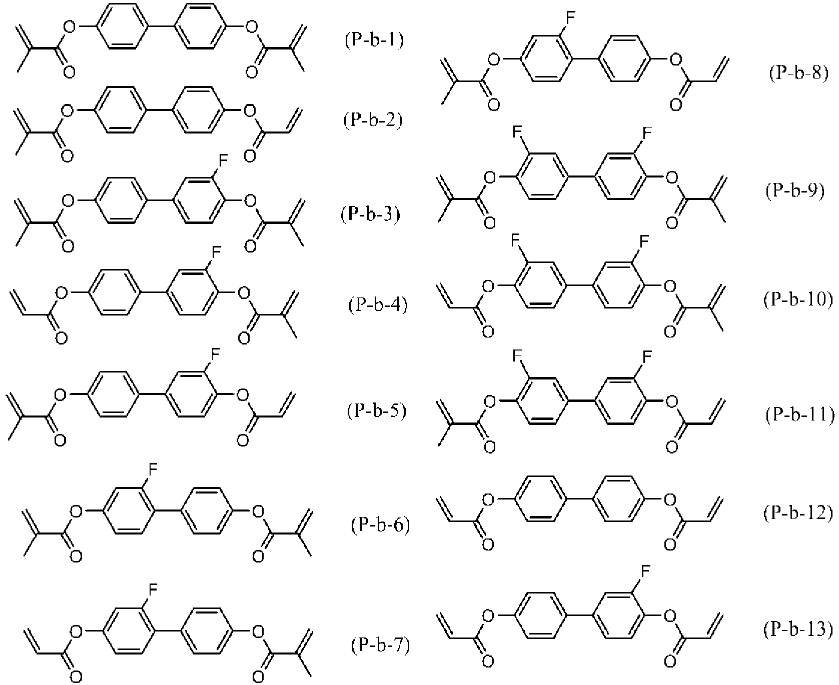

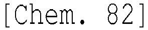

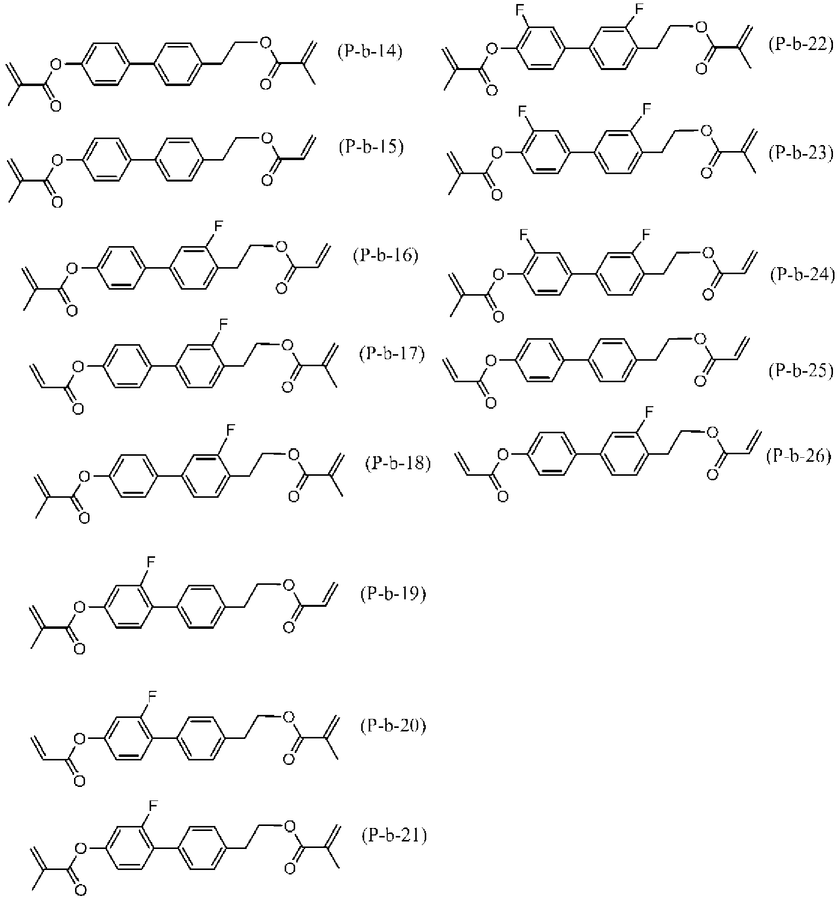

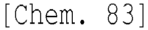

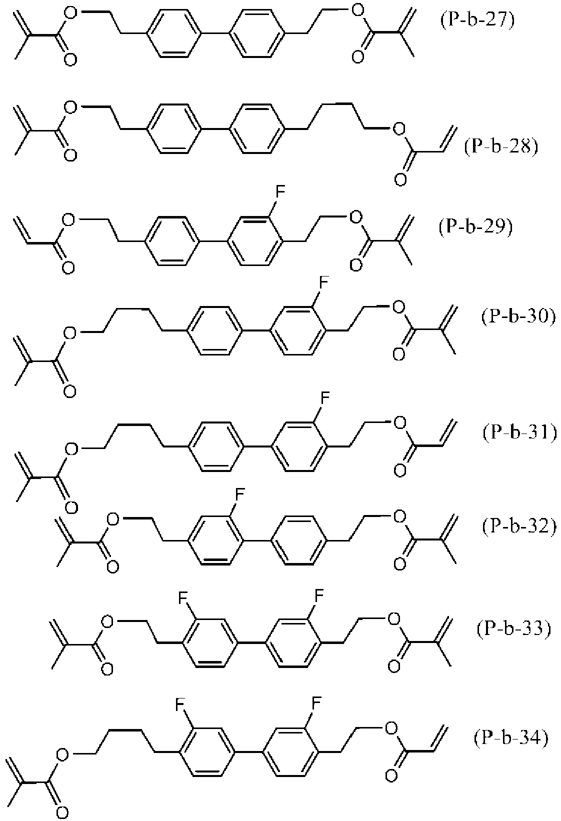

The specific amount of the polymerizable monomer represented by General Formula (P-b) (proportion to the whole of the polymerizable-monomer-containing liquid crystal composition) is preferably not more than 5%, more preferably not more than 3%, further preferably not more than 2%, especially preferably not more than 1%, and most preferably not more than 0.8%.

Preferred examples of the compound represented by General Formula (P-c) in the present invention include polymerizable compounds represented by Formulae (P-c-1) to (P-c-52).

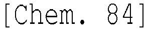

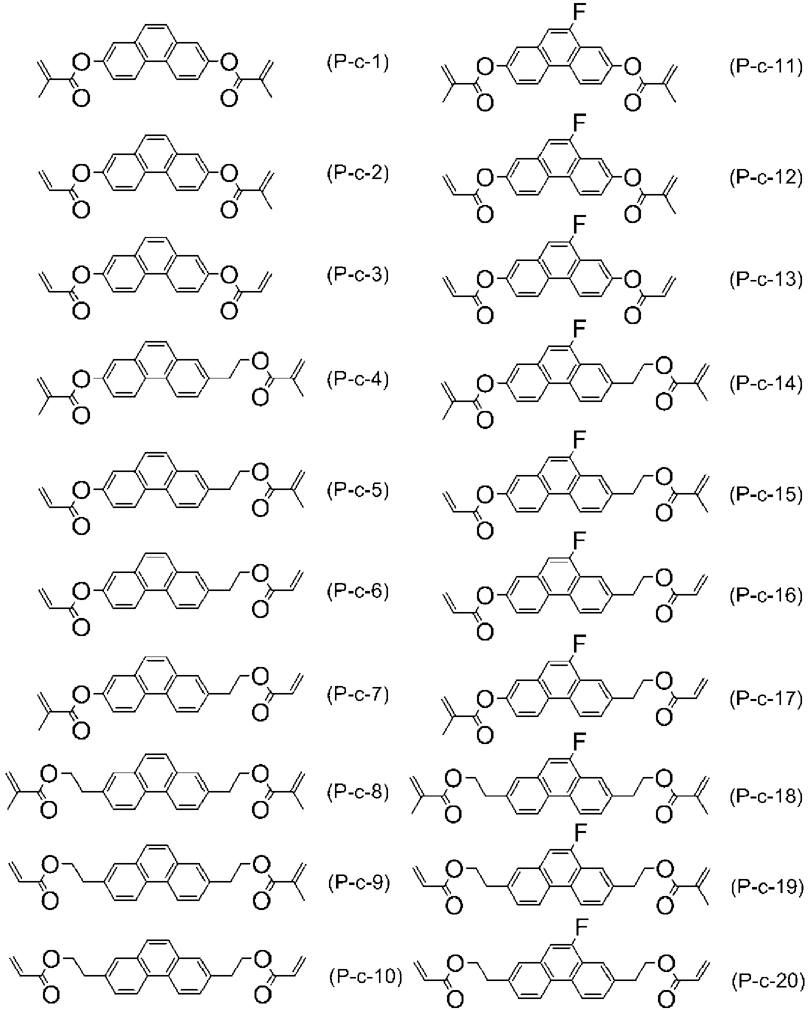

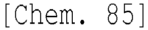

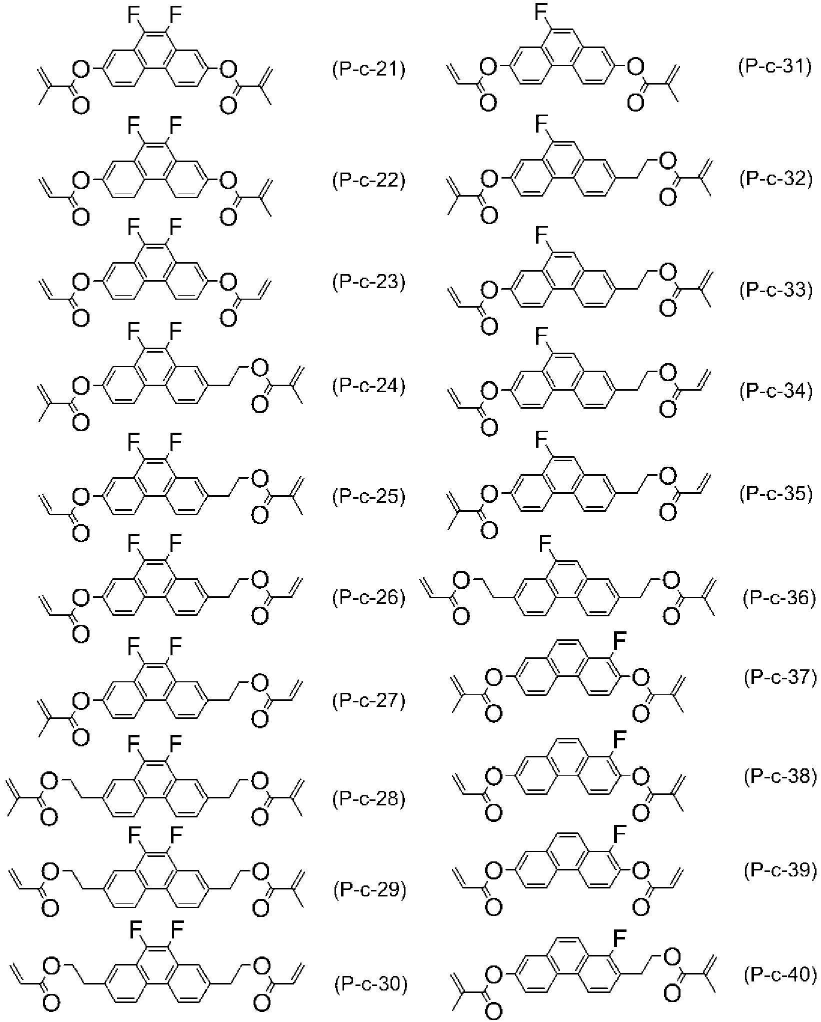

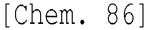

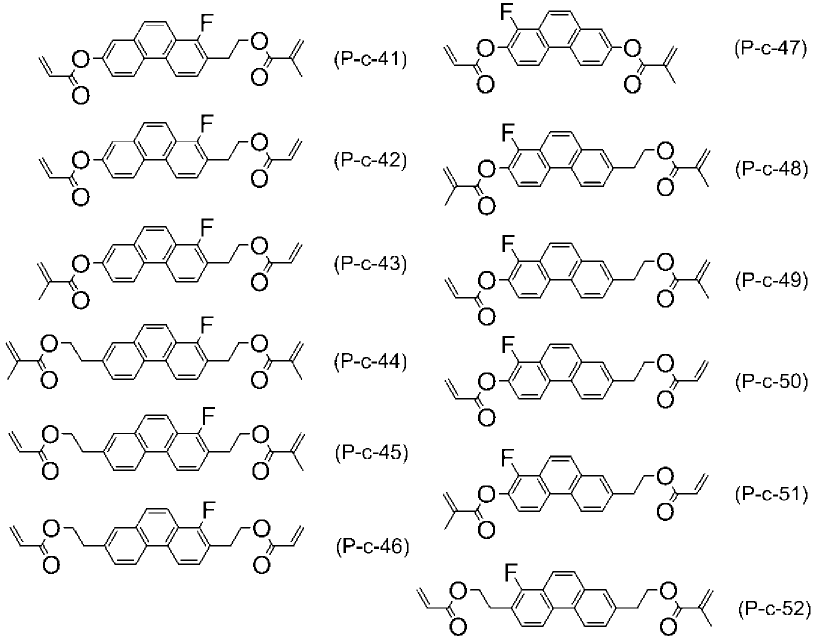

The specific amount of the polymerizable monomer represented by General Formula (P-c) is preferably not more than 5%, more preferably not more than 3%, further preferably not more than 2%, especially preferably not more than 1%, and most preferably not more than 0.8%.

The compound represented by General Formula (P-d) in the present invention is preferably any of compounds represented by General Formula (P-d').

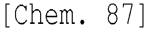

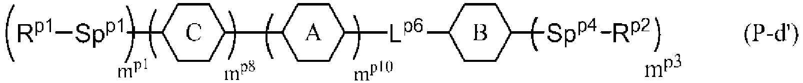

(in the compound represented by General Formula (P-d'), m^{p10} preferably represents 2 or 3. The other signs have the same meanings as those in General Formula (p-d), and the description thereof is therefore omitted)
Preferred examples of the compound represented by General Formula (P-d) in the present invention include polymerizable compounds represented by Formulae (P-d-1) to (P-d-37).

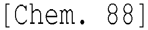

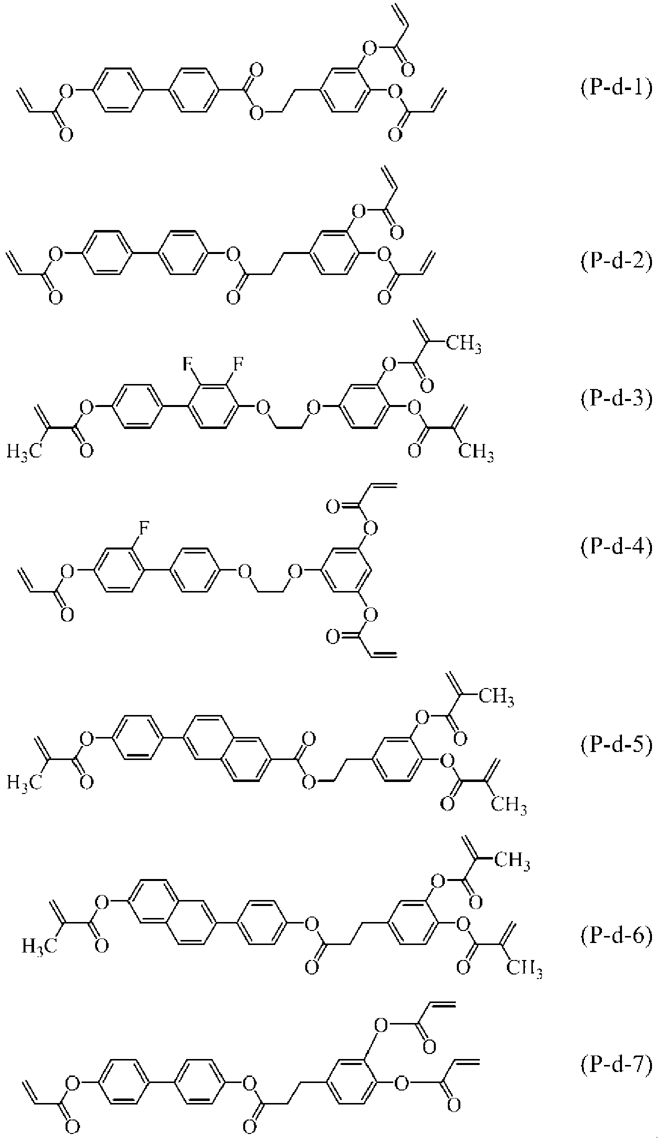

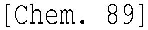

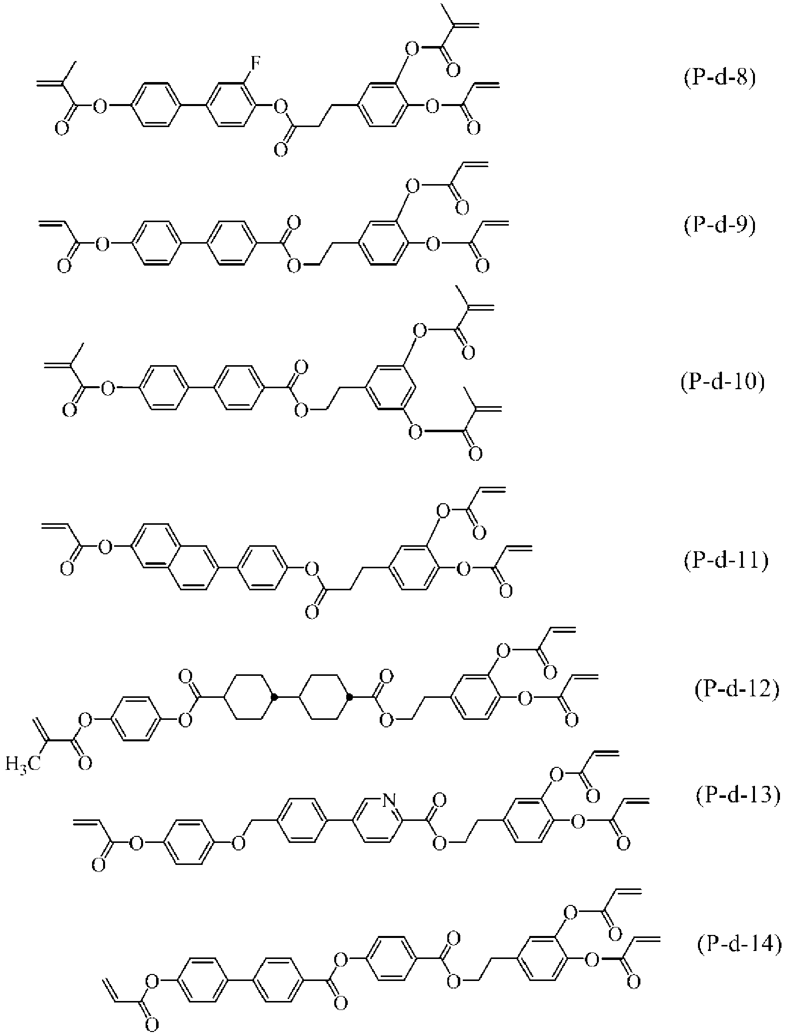

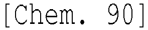

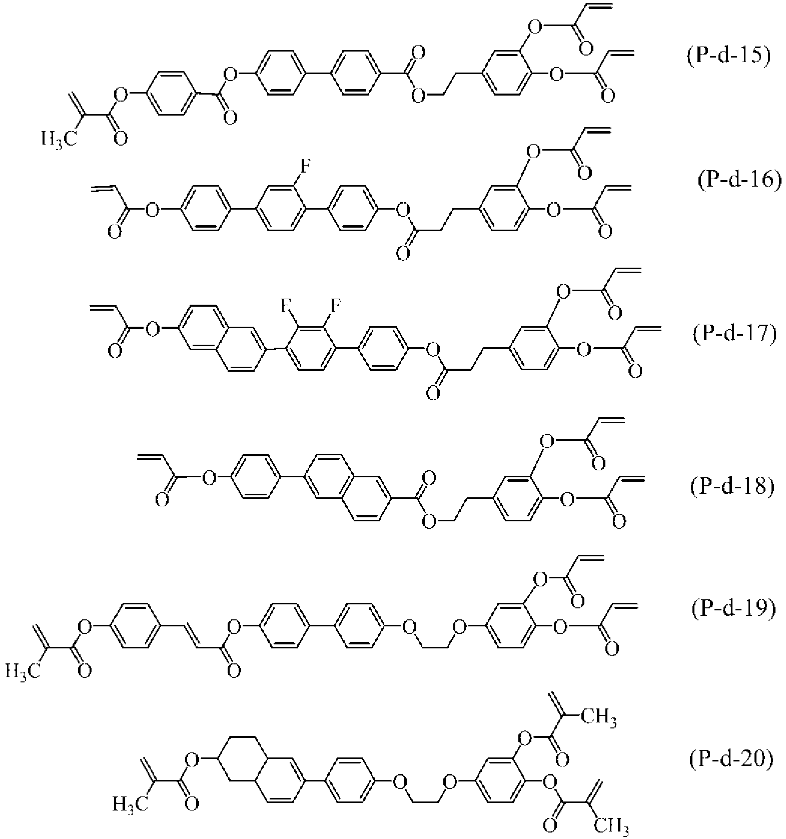

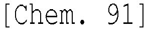

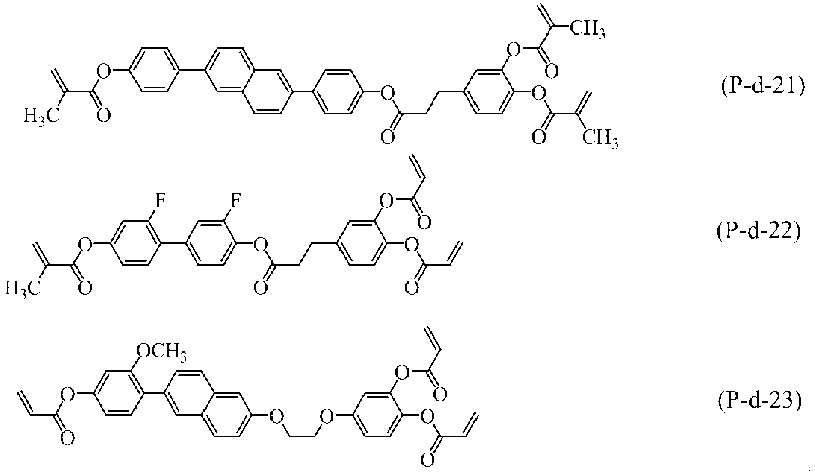

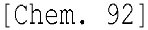

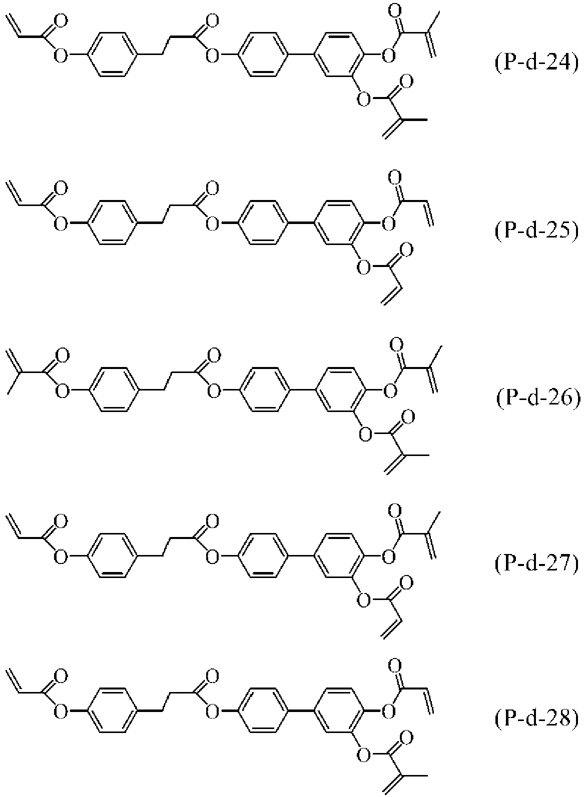

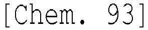

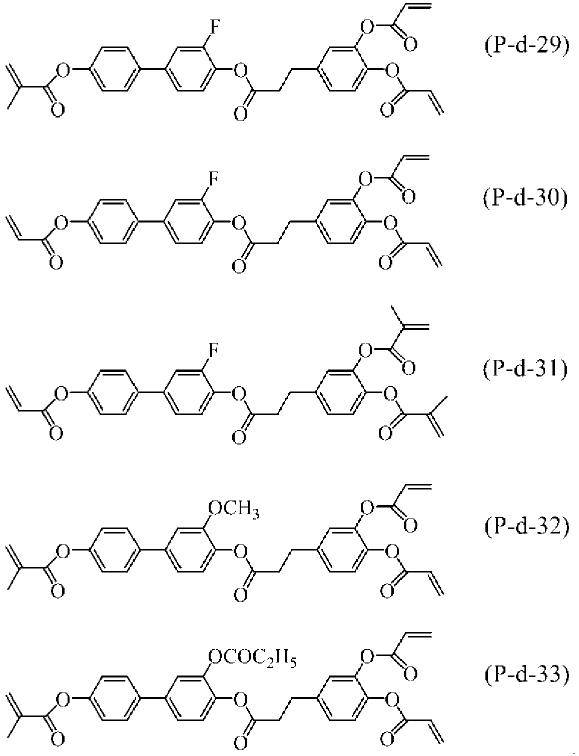

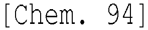

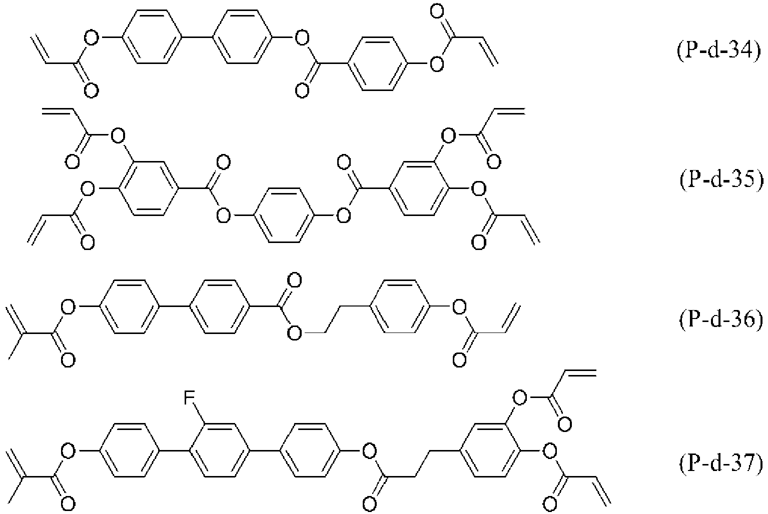

The specific amount of the polymerizable monomer represented by General Formula (P-d) is preferably not more than 5%, more preferably not more than 3%, further preferably not more than 2%, especially preferably not more than 1%, and most preferably not more than 0.8%.

Compounds having the following structures can be preferably used as additives, such as an antioxidant and a light stabilizer, in the liquid crystal composition of the present invention. 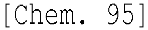 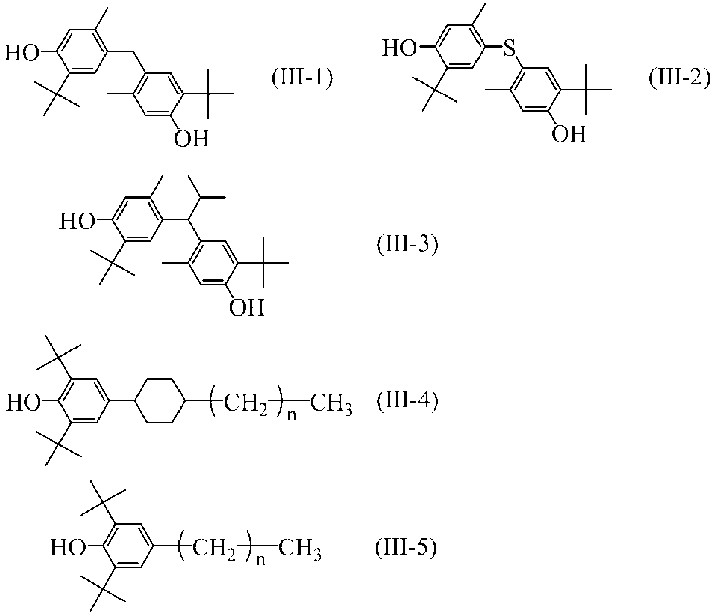 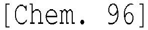 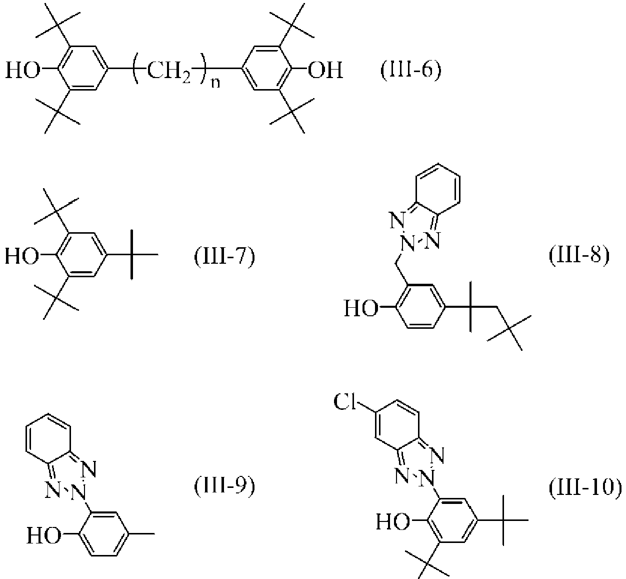 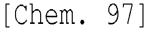 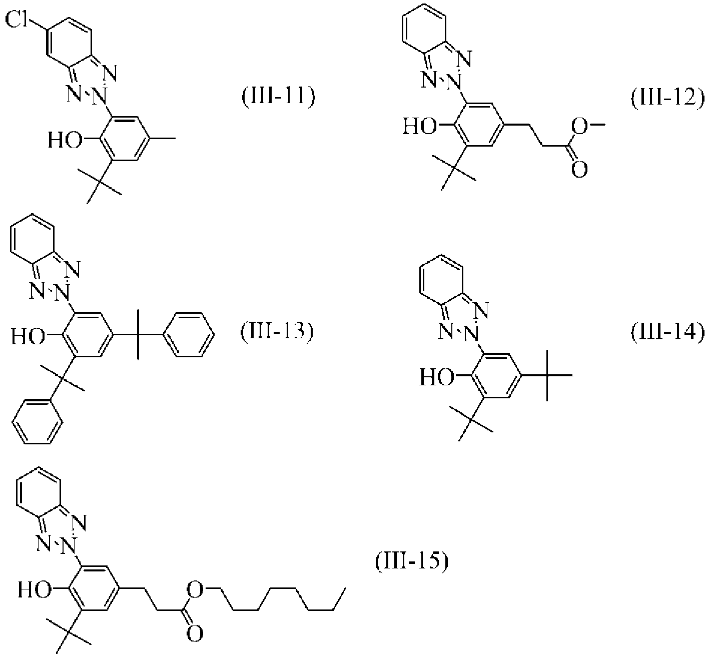 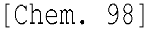 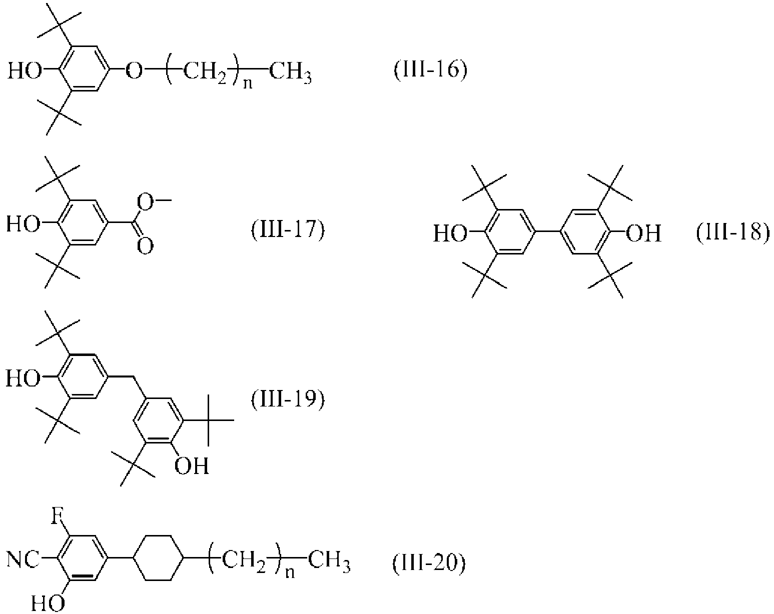 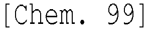 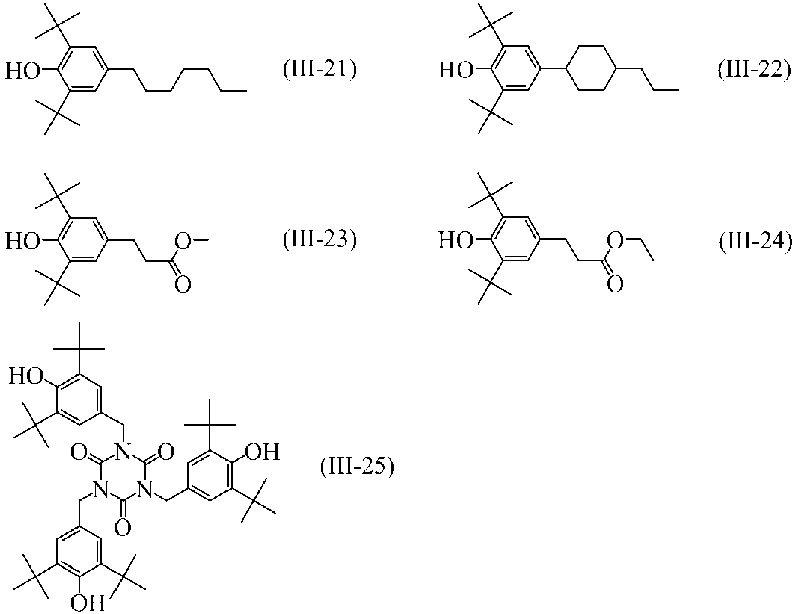 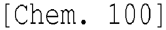 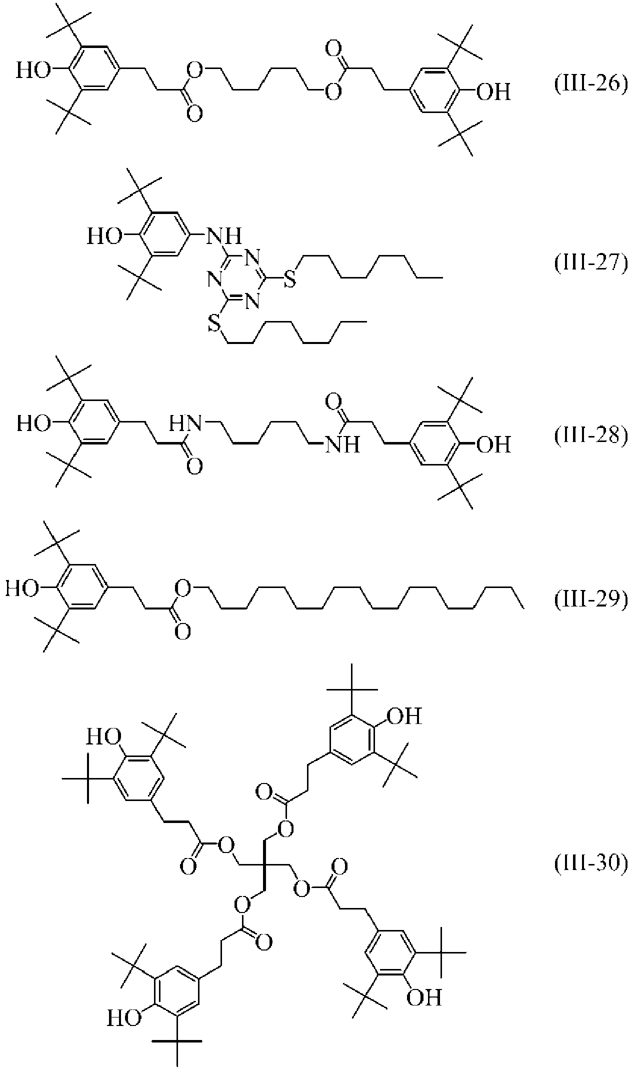 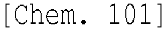 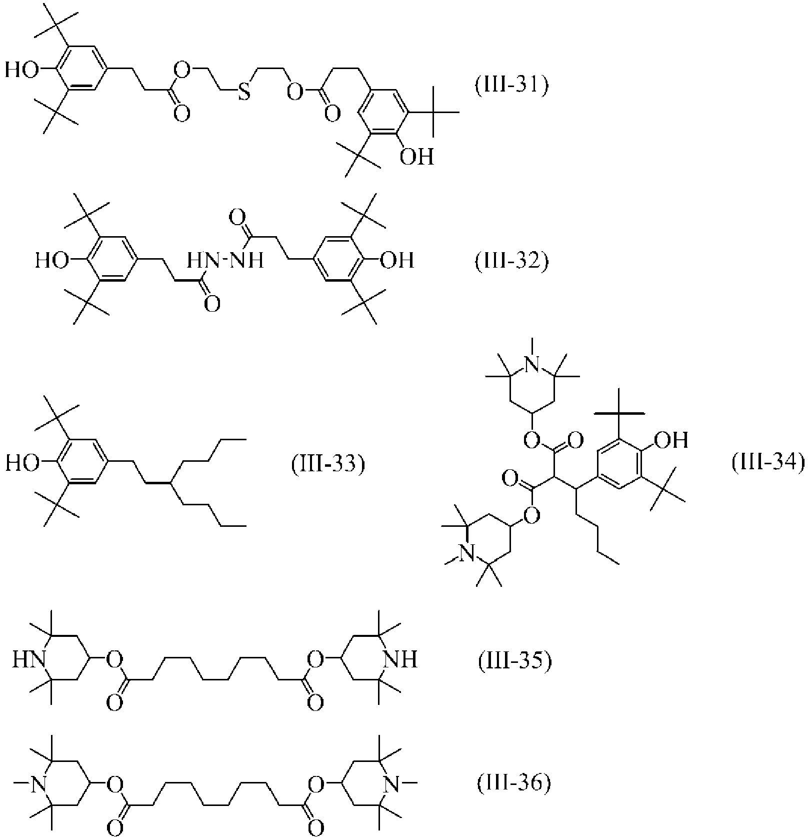 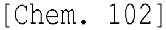 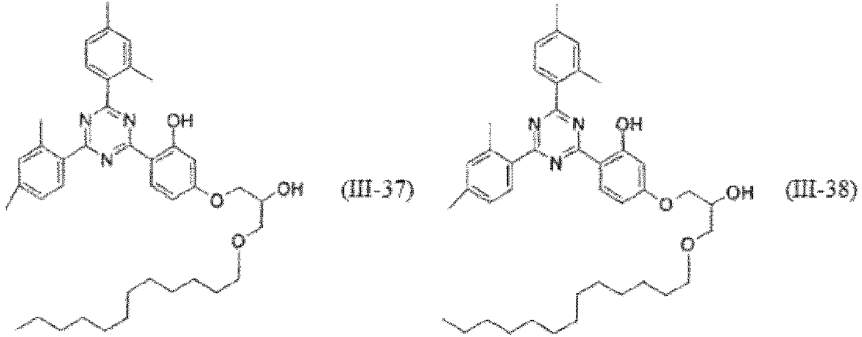 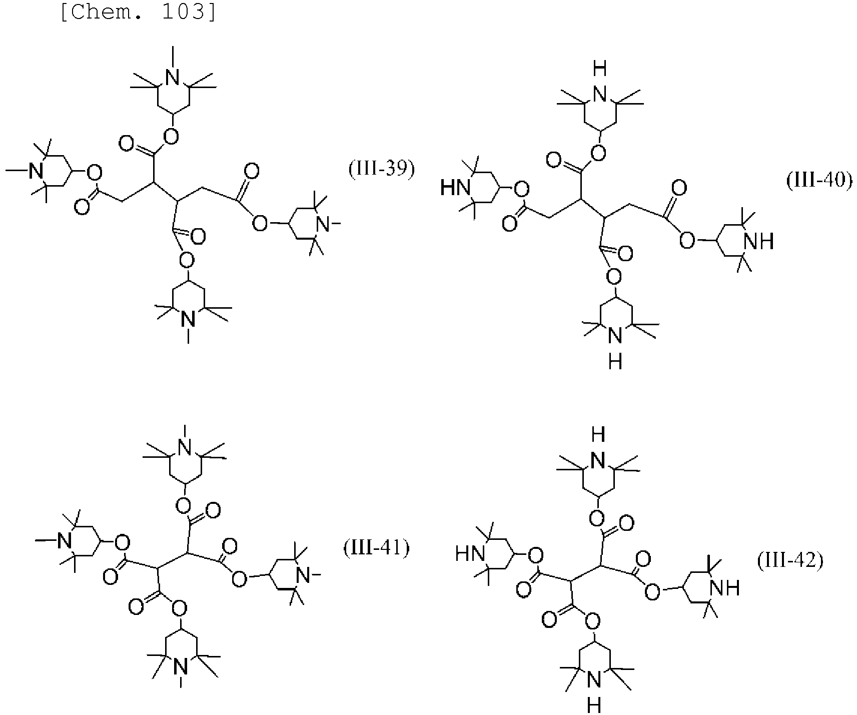 (in the formulae, n represents an integer from 0 to 20) A liquid crystal display device using the liquid crystal composition of the present invention has an excellent display quality, responds at high speed, and can be particularly applied to active-matrix liquid crystal display devices of a VA type, PSVA type, PSA type, FFS type, IPS type, and ECB type.

### EXAMPLES

The present invention will now be described further in detail with reference to Examples; however, the present invention is not limited thereto. In compositions which will be described in Examples and Comparative Examples, the term "%" refers to "mass%".
In Examples, compounds are abbreviated as follows. n represents a natural number.

### (Side Chains)

-n -CₙH₂ₙ₊₁ linear alkyl group having n carbon atoms
n- -CₙH₂ₙ₊₁- linear alkyl group having n carbon atoms
-On -OCₙH₂ₙ₊₁ linear alkoxyl group having n carbon atoms
   nO- CₙH₂ₙ₊₁O- linear alkoxyl group having n carbon atoms
-V -CH=CH₂
V- CH₂=CH-
-V1 -CH=CH-CH₃
1V- CH₃-CH=CH-
-2V -CH₂-CH₂-CH=CH₃
V2- CH₃=CH-CH₂-CH₂-
-2V1 -CH₂-CH₂-CH=CH-CH₃
1V2- CH₃-CH=CH-CH₂-CH₂

### (Linking Groups)

-n- -CₙH₂ₙ-
-nO- -CₙH₂ₙ-O-
-On- -O-CₙH₂ₙ-
-COO- -C(=O)-O-
-OCO- -O-C(=O)-
-CF2O- -CF₂-O-
-OCF2- -O-CF₂-

### (Ring Structures)

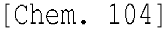

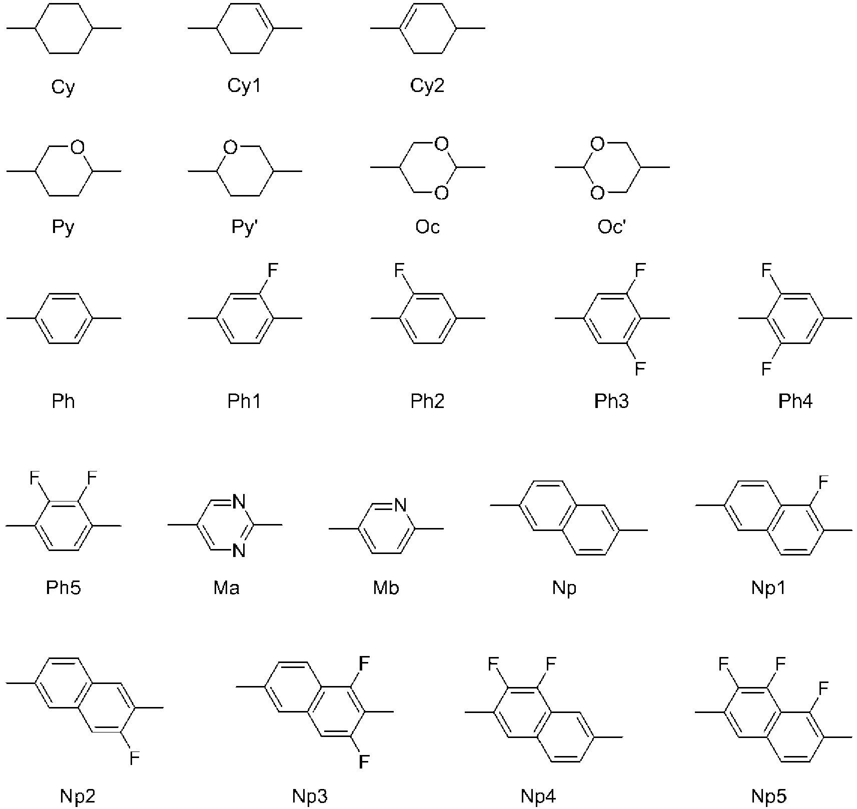

In Examples, the following properties were measured.
Tₙᵢ: Nematic phase-isotropic liquid phase transition temperature (°C)
T_{cn}: Solid phase-nematic phase transition temperature (°C)
Δn: Refractive index anisotropy at 20°C
Δε: Dielectric anisotropy at 20°C
η: Viscosity at 20°C (mPa·s)
γ₁: Rotational viscosity at 20°C (mPa·s)
K₃₃: Elastic constant K₃₃ at 20°C (pN)
Initial Voltage Holding Ratio (VHR): VHR measured before UV radiation (%)
Voltage holding ratio (VHR) after UV radiation: VHR measured after UV radiation (%)

In the case of generating a pretilt angle in a test cell, the test cell was irradiated with 60 J (365 nm) of UV under application of a square wave voltage of 10 V at a frequency of 100 Hz. The UV light source was a multilight manufactured by USHIO INC.

In measurement of the response speed of a sample, a test cell having a thickness of 3.5 µm and including an alignment film of JALS2096 was used, Vsel was 5 V, Vnsel was 1 V, measurement temperature was 20°C, and DMS301 manufactured by AUTRONIC-MELCHERS GmbH was used.

In evaluation of the UV resistance of a test cell, UV was radiated at 100 mW/cm⁻² for a predetermined time with SP-7 (manufactured by USHIO INC.), and VHRs before and after the UV radiation were measured.

VHRs were measured with VHR-1 (manufactured by TOYO Corporation) at 1 V, 60 Hz, and 60°C.

The compounds (P-b-1), (P-b-3), (P-a-31), (P-d-29), and (P-d-37) were used as representative examples of a polymerizable compound; however, the present invention is not limited thereto.

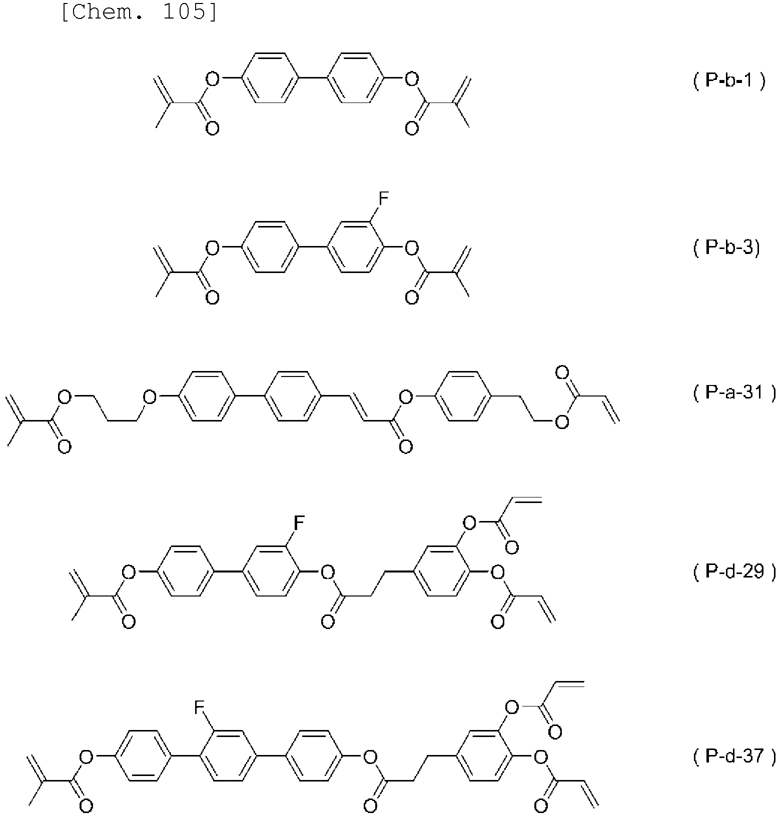

### (Comparative Example 1 and Examples 1-1 to 1-4)

Liquid crystal compositions LC-A (Comparative Example 1), LC-A1 (Example 1-1), LC-A2 (Example 1-2), LC-A3 (Example 1-3), and LC-A4 (Example 1-4) were prepared. Table 1 shows the constitution and physical properties of the liquid crystal compositions.

**[Table 1]**

| | Comparative Example 1 | Example 1-1 | Example 1-2 | Example 1-3 | Example 1-4 |
|---|---|---|---|---|---|
| | LC-A | LC-A1 | LC-A2 | LC-A3 | LC-A4 |
| 3-Ph-2-Ph-Ph5-O2 | | 7.0% | 5.0% | 3.0% | 5.0% |
| 5-Ph-2-Ph-Ph5-O2 | | | 5.0% | | |
| 3-Ph-Ph-2-Ph5-O2 | | | | 5.0% | |
| 3-Np-Ph-2-Ph5-O2 | | | | | 3.0% |
| 3-Cy-Cy-2 | 16.0% | 20.0% | 20.0% | 20.0% | 19.0% |
| 3-Cy-Cy-4 | 7.0% | 8.0% | 8.0% | 8.0% | 8.0% |
| 3-Cy-Cy-5 | 4.0% | 5.0% | 5.0% | 5.0% | 5.0% |
| 3-Ph-Ph-O1 | 3.0% | 3.0% | 3.0% | 3.0% | 3.0% |
| 5-Ph-Ph-O1 | 3.0% | 3.0% | | 3.0% | |
| 5-Ph-Ph-1 | 9.0% | 4.0% | 7.0% | 3.0% | 8.0% |
| 3-Cy-Cy-Ph-1 | 7.0% | 7.0% | 6.0% | 7.0% | 7.0% |
| 3-Cy-Cy-Ph-3 | 4.0% | | | | |
| 3-Cy-1O-Ph5-O1 | 6.0% | 6.0% | 4.0% | 6.0% | 5.0% |
| 3-Cy-1O-Ph5-O2 | 8.0% | 8.0% | 9.0% | 10.0% | 9.0% |
| 3-Cy-Ph-Ph5-O3 | 7.0% | 7.0% | 7.0% | 7.0% | 7.0% |
| 3-Cy-Ph-Ph5-O4 | 6.0% | 6.0% | 6.0% | 6.0% | 6.0% |
| 4-Cy-Ph-Ph5-O3 | 6.0% | 6.0% | | 6.0% | |
| 2-Cy-Cy-1O-Ph5-O2 | 6.0% | 2.0% | 6.0% | | 6.0% |
| 3-Cy-Cy-1O-Ph5-O2 | 8.0% | 8.0% | 9.0% | 8.0% | 9.0% |
| Total | 100.0% | 100.0% | 100.0% | 100.0% | 100.0% |
| Tni [°C] | 76 | 76 | 76 | 75 | 76 |
| Δn | 0.102 | 0.104 | 0.103 | 0.103 | 0.103 |
| Δε | -2.9 | -2.9 | -3.0 | -3.0 | -2.9 |
| γ₁ [mPa·s] | 122 | 124 | 119 | 124 | 116 |
| K₃₃ [pN] | 13.0 | 14.5 | 14.9 | 14.7 | 15.2 |
| γ₁/K₃₃ [mPa·s·pN⁻¹] | 9.4 | 8.6 | 8.0 | 8.4 | 7.6 |

Each of the LC-A1, LC-A2, LC-A3, and LC-A4 as the liquid crystal composition of the present invention had a sufficiently small γ₁ and large K₃₃. Thus, in the LC-A1 to LC-A4, γ₁/K₃₃ that is the indicator of response speed was clearly smaller than the LC-A as the comparative example. In addition, the response speed thereof was measured, and the result of the measurement showed an improvement in the response speed in a similar degree.
The prepared liquid crystal compositions LC-A, LC-A1, LC-A2, LC-A3, and LC-A4 were vacuum-injected into test cells, and then the test cells were subjected to measurement of VHRs before and after UV radiation. Each of the LC-A1, LC-A2, LC-A3, and LC-A4 as the liquid crystal composition of the present invention had an approximately similar VHR to the LC-A as Comparative Example 1 after the UV radiation, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for instance, a VA type that used such a liquid crystal composition had an excellent display quality.

### (Comparative Example 2 and Examples 2-1 to 2-3)

Liquid crystal compositions LC-B (Comparative Example 2), LC-B1 (Example 2-1), LC-B2 (Example 2-2), and LC-B3 (Example 2-3) were prepared. Table 2 shows the constitution and physical properties of the liquid crystal compositions.

**[Table 2]**

| | Comparative Example 2 | Example 2-1 | Example 2-2 | Example 2-3 |
|---|---|---|---|---|
| | LC-B | LC-B1 | LC-B2 | LC-B3 |
| 1-Ph-2-Ph-Ph5-O2 | | | | 5.0% |
| 2-Ph-2-Ph-Ph5-O2 | | | 5.0% | |
| 3-Ph-2-Ph-Ph5-O2 | | 5.0% | 5.0% | 5.0% |
| 3-Cy-Cy-2 | 18.0% | 19.0% | 19.0% | 20.0% |
| 3-Cy-Cy-4 | 8.0% | 8.0% | 8.0% | 8.0% |
| 3-Cy-Ph-O1 | 4.0% | 4.0% | 4.0% | 5.0% |
| 3-Ph-Ph-1 | 11.0% | 10.0% | 11.0% | 8.0% |
| 3-Cy-Cy-Ph-1 | 5.0% | 5.0% | 5.0% | 5.0% |
| 3-Cy-1O-Ph5-O2 | 11.0% | 11.0% | 9.0% | 10.0% |
| 3-Cy-Ph-Ph5-O3 | 7.0% | 7.0% | 7.0% | 3.0% |
| 3-Cy-Ph-Ph5-O4 | 8.0% | 8.0% | 8.0% | 8.0% |
| 4-Cy-Ph-Ph5-O3 | 6.0% | | | 3.0% |
| 2-Cy-Cy-1O-Ph5-O2 | 6.0% | 6.0% | 6.0% | 6.0% |
| 3-Cy-Cy-1O-Ph5-O2 | 11.0% | 12.0% | 13.0% | 11.0% |
| 3-Ph-Ph5-Ph-2 | 5.0% | 5.0% | | 3.0% |
| Total | 100.0% | 100.0% | 100.0% | 100.0% |
| Tni [°C] | 75 | 75 | 76 | 75 |
| Δn | 0.109 | 0.109 | 0.109 | 0.108 |
| Δε | -3.1 | -3.1 | -3.1 | -3.1 |
| γ₁ [mPa·s] | 118 | 112 | 117 | 121 |
| K₃₃ [pN] | 13.0 | 14.0 | 15.0 | 14.8 |
| γ₁/K₃₃ [mPa·s·pN⁻¹] | 9.1 | 8.0 | 7.8 | 8.2 |

Each of the LC-B1, LC-B2, and LC-B3 as the liquid crystal composition of the present invention had a sufficiently small γ₁ and large K₃₃. Thus, in the LC-B1 to LC-B3, γ₁/K₃₃ that is the indicator of response speed was clearly smaller than the LC-B as the comparative example. In addition, the response speed thereof was measured, and the result of the measurement showed an improvement in the response speed in a similar degree.
The prepared liquid crystal compositions LC-B, LC-B1, LC-B2, and LC-B3 were vacuum-injected into test cells, and then the test cells were subjected to measurement of VHRs before and after UV radiation. Each of the LC-B1, LC-B2, and LC-B3 as the liquid crystal composition of the present invention had an approximately similar VHR to the LC-B as the comparative example after the UV radiation, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for instance, a VA type that used such a liquid crystal composition had an excellent display quality.

### (Comparative Example 3 and Examples 3-1 to 3-4)

Liquid crystal compositions LC-C (Comparative Example 3), LC-C1 (Example 3-1), LC-C2 (Example 3-2), LC-C3 (Example 3-3), and LC-C4 (Example 3-4) were prepared. Table 3 shows the constitution and physical properties of the liquid crystal compositions.

**[Table 3]**

| | Comparative Example 3 | Example 3-1 | Example 3-2 | Example 3-3 | Example 3-4 |
|---|---|---|---|---|---|
| | LC-C | LC-C1 | LC-C2 | LC-C3 | LC-C4 |
| 1-Ph-2-Ph-Ph5-O2 | | | | | 5.0% |
| 3-Ph-2-Ph-Ph5-O1 | | | | 5.0% | |
| 3-Ph-2-Ph-Ph5-O2 | | 10.0% | 5.0% | | |
| 4-Ph-2-Ph-Ph5-O2 | | | 5.0% | | |
| 5-Ph-2-Ph-Ph5-O2 | | | 5.0% | | |
| 3-Ph-Ph-2-Ph5-O2 | | | | 5.0% | |
| 3-Np-Ph-2-Ph5-O2 | | | | | 3.0% |
| 3-Cy-Cy-V | 39.0% | 39.0% | 28.0% | 39.0% | 33.0% |
| 3-Cy-Cy-V1 | | | 14.0% | | 8.0% |
| 3-Ph-Ph-1 | 5.0% | 6.0% | 4.0% | 6.0% | 5.0% |
| 3-Cy-10-Ph5-O2 | 9.0% | 7.0% | 11.0% | 7.0% | 10.0% |
| 2-Cy-Cy-1O-Ph5-O2 | 12.5% | 12.0% | 10.0% | 12.0% | 11.0% |
| 3-Cy-Cy-1O-Ph5-O2 | 13.0% | 13.0% | 11.0% | 13.0% | 13.0% |
| 4-Cy-Cy-1O-Ph5-O2 | 3.5% | 3.0% | | 3.0% | |
| 3-Ph-Ph5-Ph-1 | 9.0% | 5.0% | | 5.0% | 5.0% |
| 3-Ph-Ph5-Ph-2 | 9.0% | 5.0% | 7.0% | 5.0% | 7.0% |
| Total | 100.0% | 100.0% | 100.0% | 100.0% | 100.0% |
| Tni [°C] | 75 | 76 | 76 | 76 | 75 |
| Δn | 0.108 | 0.108 | 0.108 | 0.108 | 0.108 |
| Δε | -3.1 | -3.1 | -3.1 | -3.2 | -3.1 |
| γ₁ [mPa·s] | 96 | 100 | 103 | 98 | 97 |
| K₃₃ [pN] | 14.3 | 15.8 | 16.8 | 15.8 | 15.9 |
| γ₁/K₃₃ [mPa·s·pN⁻¹] | 6.7 | 6.3 | 6.1 | 6.2 | 6.1 |

Each of the LC-C1, LC-C2, LC-C3, and LC-C4 as the liquid crystal composition of the present invention had a sufficiently small γ₁ and large K₃₃. Thus, in the LC-C1 to LC-C4, γ₁/K₃₃ that is the indicator of response speed was clearly smaller than the LC-C as the comparative example.
In addition, the response speed thereof was measured, and the result of the measurement showed an improvement in the response speed in a similar degree.
The prepared liquid crystal compositions LC-C, LC-C1, LC-C2, LC-C3, and LC-C4 were vacuum-injected into test cells, and then the test cells were subjected to measurement of VHRs before and after UV radiation. Each of the LC-C1, LC-C2, LC-C3, and LC-C4 as the liquid crystal composition of the present invention had an approximately similar or improved VHR after the UV radiation as compared with the LC-C as the comparative example, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for example, a VA type that used such a liquid crystal composition had an excellent display quality.

### (Comparative Example 4 and Examples 4-1 to 4-4)

Liquid crystal compositions LC-D (Comparative Example 4), LC-D1 (Example 4-1), LC-D2 (Example 4-2), LC-D3 (Example 4-3), and LC-D4 (Example 4-4) were prepared. Table 4 shows the constitution and physical properties of the liquid crystal compositions.

**[Table 4]**

| | Comparative Example 4 | Example 4-1 | Example 4-2 | Example 4-3 | Example 4-4 |
|---|---|---|---|---|---|
| | LC-D | LC-D1 | LC-D2 | LC-D3 | LC-D4 |
| 1-Ph-2-Ph-Ph5-O2 | | | | | 5.0% |
| 2-Ph-2-Ph-Ph5-O2 | | | 6.0% | | |
| 3-Ph-2-Ph-Ph5-O1 | | 6.0% | | | |
| 3-Ph-2-Ph-Ph5-O2 | | 8.0% | 8.0% | 5.0% | |
| 5-Ph-2-Ph-Ph5-O2 | | | 6.0% | | |
| 3-Ph-Ph-2-Ph5-O2 | | | | 4.5% | |
| 3-Np-Ph-2-Ph5-O2 | | | | | 3.0% |
| 3-Cy-Cy-V | 26.5% | 23.5% | 28.0% | 31.0% | 23.0% |
| 3-Cy-Cy-V1 | 10.0% | 10.0% | 10.0% | 7.0% | 10.0% |
| 3-Ph-Ph-1 | 3.0% | 7.0% | 6.5% | 3.5% | 7.0% |
| 3-Cy-Ph-Ph-2 | 1.5% | 6.0% | | | 5.0% |
| 3-Cy-1O-Ph5-O1 | 5.0% | 5.0% | | 4.0% | 5.0% |
| 3-Cy-1O-Ph5-O2 | 11.0% | 10.0% | 12.0% | 10.0% | 11.0% |
| 2-Cy-Cy-1O-Ph5-O2 | 7.0% | 5.5% | 5.0% | 5.0% | 7.0% |
| 3-Cy-Cy-1O-Ph5-O2 | 12.0% | 12.0% | 11.5% | 10.0% | 12.0% |
| 1V-Cy-Cy-1O-Ph5-O2 | 7.0% | 7.0% | 7.0% | 10.0% | 7.0% |
| 3-Ph-Ph5-Ph-1 | 5.0% | | | 5.0% | |
| 3-Ph-Ph5-Ph-2 | 12.0% | | | 5.0% | 5.0% |
| Total | 100.0% | 100.0% | 100.0% | 100.0% | 100.0% |
| Tni [°C] | 76 | 76 | 75 | 76 | 76 |
| Δn | 0.109 | 0.108 | 0.108 | 0.108 | 0.108 |
| Δε | -3.7 | -3.6 | -3.6 | -3.7 | -3.7 |
| γ₁ [mPa·s] | 109 | 114 | 117 | 110 | 116 |
| K₃₃ [pN] | 15.4 | 17.5 | 17.7 | 17.2 | 17.3 |
| γ₁/K₃₃ [mPa·s·pN⁻¹] | 7.1 | 6.5 | 6.6 | 6.4 | 6.7 |

Each of the LC-D1, LC-D2, LC-D3, and LC-D4 as the liquid crystal composition of the present invention had a sufficiently small γ₁ and large K₃₃. Thus, in the LC-D1 to LC-D4, γ₁/K₃₃ that is the indicator of response speed was clearly smaller than the LC-D as the comparative example.
In addition, the response speed thereof was measured, and the result of the measurement showed an improvement in the response speed in a similar degree.
The prepared liquid crystal compositions LC-D, LC-D1, LC-D2, LC-D3, and LC-D4 were vacuum-injected into test cells, and the test cells were subjected to measurement of VHRs before and after UV radiation. Each of the LC-D1, LC-D2, LC-D3, and LC-D4 as the liquid crystal composition of the present invention had an approximately similar or improved VHR after the UV radiation as compared with the LC-D as the comparative example, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for example, a VA type that used such a liquid crystal composition had an excellent display quality.

### (Comparative Example 5 and Examples 5-1 to 5-4)

Liquid crystal compositions LC-E (Comparative Example 5), LC-E1 (Example 5-1), LC-E2 (Example 5-2), LC-E3 (Example 5-3), and LC-E4 (Example 5-4) were prepared. Table 5 shows the constitution and physical properties of the liquid crystal compositions.

**[Table 5]**

| | Comparative Example 5 | Example 5-1 | Example 5-2 | Example 5-3 | Example 5-4 |
|---|---|---|---|---|---|
| | LC-E | LC-E1 | LC-E2 | LC-E3 | LC-E4 |
| 2-Ph-2-Ph-Ph5-O2 | | | | 5.0% | |
| 3-Ph-2-Ph-Ph5-O1 | | | | 7.0% | |
| 3-Ph-2-Ph-Ph5-O2 | | 10.0% | 10.0% | 8.0% | 10.0% |
| 4-Ph-2-Ph-Ph5-O2 | | | | 4.0% | 5.0% |
| 5-Ph-2-Ph-Ph5-O2 | | | | 4.0% | |
| 3-Cy-Cy-V | 20.0% | 20.0% | 26.0% | 20.0% | 24.0% |
| 2-Cy-Cy-V1 | 5.0% | | | 11.0% | |
| 3-Cy-Cy-V1 | 10.0% | 10.5% | 10.0% | 12.0% | 10.0% |
| 3-Ph-Ph-1 | 7.5% | 9.0% | 7.5% | | 7.0% |
| 3-Cy-Ph-Ph-2 | | 6.0% | | | 6.0% |
| 5-Cy-Ph-Ph-2 | | 3.5% | | | |
| 1V-Cy-Ph-Ph-3 | 3.5% | | 5.0% | | |
| 3-Cy-1O-Ph5-O2 | 11.0% | 11.0% | 10.5% | 9.0% | 7.0% |
| V-Cy-1O-Ph5-O2 | | | | | 7.0% |
| 1V-Cy-1O-Ph5-O2 | 5.0% | 5.0% | 5.0% | 5.0% | |
| 2-Cy-Cy-1O-Ph5-O2 | 6.0% | 6.0% | 2.0% | | |
| 3-Cy-Cy-1O-Ph5-O2 | 13.0% | 13.0% | 13.0% | 9.0% | 12.0% |
| V-Cy-Cy-1O-Ph5-O2 | | | | | 12.0% |
| 1V-Cy-Cy-1O-Ph5-O2 | 9.0% | 6.0% | 9.0% | 6.0% | |
| 3-Ph-Ph5-Ph-1 | 5.0% | | | | |
| 3-Ph-Ph5-Ph-2 | 5.0% | | | | |
| 3-Np-Ph5-Ph-2 | | | 2.0% | | |
| Total | 100.0% | 100.0% | 100.0% | 100.0% | 100.0% |
| Tni [°C] | 76 | 76 | 76 | 76 | 75 |
| Δn | 0.109 | 0.109 | 0.108 | 0.108 | 0.108 |
| Δε | -3.7 | -3.6 | -3.6 | -3.6 | -3.6 |
| γ₁ [mPa·s] | 115 | 116 | 115 | 119 | 106 |
| K₃₃ [pN] | 16.9 | 17.0 | 18.2 | 19.0 | 16.8 |
| γ₁/K₃₃ [mPa·s·pN⁻¹] | 6.8 | 6.8 | 6.3 | 6.3 | 6.3 |

Each of the LC-E1, LC-E2, LC-E3, and LC-E4 as the liquid crystal composition of the present invention had a sufficiently small γ₁ and large K₃₃. Thus, in the LC-E1 to LC-E4, γ₁/K₃₃ that is the indicator of response speed was clearly smaller than the LC-E as the comparative example.
In addition, the response speed thereof was measured, and the result of the measurement showed an improvement in the response speed in a similar degree.
The prepared liquid crystal compositions LC-E, LC-E1, LC-E2, LC-E3, and LC-E4 were vacuum-injected into test cells, and then the test cells were subjected to measurement of VHRs before and after UV radiation. Each of the LC-E1, LC-E2, LC-E3, and LC-E4 as the liquid crystal composition of the present invention had an approximately similar or improved VHR after the UV radiation as compared with the LC-E as the comparative example, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for instance, a VA type that used such a liquid crystal composition had an excellent display quality.

### (Examples 6-1 to 6-8)

Liquid crystal compositions MLC-A2 (Example 6-1), MLC-A4 (Example 6-2), MLC-B3 (Example 6-3), MLC-C1 (Example 6-4), MLC-D3 (Example 6-5), MLC-E2 (Example 6-6), MLC-E3 (Example 6-7), and MLC-E4 (Example 6-8) were prepared. Tables 6-1 and 6-2 show the constitution of the liquid crystal compositions.

**[Table 6]**

| | | Example 6-1 | Example 6-2 | Example 6-3 | Example 6-4 |
|---|---|---|---|---|---|
| | | MLC-A2 | MLC-A4 | MLC-B3 | MLC-C1 |
| Liquid crystal composition | LC-A2 | 99.60% | | | |
| | LC-A4 | | 99.60% | | |
| | LC-B3 | | | 99.60% | |
| | LC-C1 | | | | 99.60% |
| Polymerizable compound | Formula (P-b-3) | 0.40% | 0.40% | 0.40% | 0.40% |
| Total | | 100.00% | 100.00% | 100.00% | 100.00% |

**[Table 7]**

| | | Example 6-5 | Example 6-6 | Example 6-7 | Example 6-8 |
|---|---|---|---|---|---|
| | | MLC-D3 | MLC-E2 | MLC-E3 | MLC-E4 |
| Liquid crystal composition | LC-D3 | 99.60% | | | |
| | LC-E2 | | 99.60% | | |
| | LC-E3 | | | 99.60% | |
| | LC-E4 | | | | 99.60% |
| Polymerizable compound | Formula (P-b-3) | 0.40% | 0.40% | 0.40% | 0.40% |
| Total | | 100.00% | 100.00% | 100.00% | 100.00% |

In each of the MLC-A2, MLC-A4, MLC-B3, MLC-C1, MLC-D3, MLC-E2, MLC-E3, and MLC-E4 as the liquid crystal composition of the present invention, a proper pretilt angle ranging from 85 to 88° was generated in the test cell. Liquid crystal display devices of a PSVA or PSA type that used such liquid crystal compositions had an excellent display quality.

### (Examples 7-1 to 7-7)

Liquid crystal compositions MLC-E11 (Example 7-1), MLC-E12 (Example 7-2), MLC-E13 (Example 7-3), MLC-E14 (Example 7-4), MLC-E15 (Example 7-5), MLC-E16 (Example 7-6), and MLC-E17 (Example 7-7) were prepared. Tables 7-1 and 7-2 show the constitution of the liquid crystal compositions.

**[Table 8]**

| | | Example 7-1 | Example 7-2 | Example 7-3 | Example 7-4 |
|---|---|---|---|---|---|
| | | MLC-E11 | MLC-E12 | MLC-E13 | MLC-E14 |
| Liquid crystal composition | LC-E1 | 99.70% | 99.60% | 99.60% | 99.60% |
| Polymerizable compound | Formula (P-b-1) | 0.30% | | | |
| | Formula (P-b-3) | | 0.40% | | 0.35% |
| | Formula (P-a-31) | | | 0.40% | 0.05% |
| Total | | 100.00% | 100.00% | 100.00% | 100.00% |

**[Table 9]**

| | | Example 7-5 | Example 7-6 | Example 7-7 |
|---|---|---|---|---|
| | | MLC-E15 | MLC-E16 | MLC-E17 |
| Liquid crystal composition | LC-E1 | 99.60% | 99.80% | 99.60% |
| Polymerizable compound | Formula (P-d-29) | 0.40% | | 0.35% |
| | Formula (P-d-37) | | 0.20% | 0.05% |
| Total | | 100.00% | 100.00% | 100.00% |

In each of the MLC-E11 (Example 7-1), MLC-E12 (Example 7-2), MLC-E13 (Example 7-3), MLC-E14 (Example 7-4), MLC-E15 (Example 7-5), MLC-E16 (Example 7-6), and MLC-E17 (Example 7-7) as the liquid crystal composition of the present invention, a proper pretilt angle ranging from 85 to 88° was generated in the test cell. Liquid crystal display devices of a PSVA or PSA type that used such liquid crystal compositions had an excellent display quality.

### (Comparative Examples 6 and 7 and Examples 8 and 9)

Liquid crystal compositions LC-F (Comparative Example 6), LC-F1 (Example 8), LC-G (Comparative Example 7), and LC-G1 (Example 9) were prepared. Table 5 shows the constitution and physical properties of the liquid crystal compositions.

**[Table 10]**

| | Comparative Example 6 | Example 8 | | Comparative Example 7 | Example 9 |
|---|---|---|---|---|---|
| | LC-F | LC-F1 | | LC-G | LC-G1 |
| 1-Ph-2-Ph-Ph5-O2 | - | - | | - | 3.0% |
| 2-Ph-2-Ph-Ph5-O2 | - | 4.0% | | - | 4.0% |
| 3-Ph-2-Ph-Ph5-O2 | - | 5.0% | | - | 3.0% |
| 2-Ph-Ph-2-Ph5-O2 | - | 4.0% | | - | - |
| 3-Ph-Ph-2-Ph5-O2 | - | 5.0% | | - | - |
| 3-Cy-Cy-2 | 22.0% | 22.0% | | 22.0% | 22.0% |
| 3-Cy-Cy-4 | 10.0% | 10.0% | | 9.0% | 10.0% |
| 3-Cy-Ph-O1 | 8.0% | 9.0% | | 7.0% | 6.0% |
| 3-Cy-Ph5-O2 | 15.0% | 13.0% | | 15.0% | 15.0% |
| 3-Cy-Cy-Ph5-O3 | 8.5% | 6.0% | | - | - |
| 4-Cy-Cy-Ph5-O2 | 10.0% | 7.0% | | 10.0% | 10.0% |
| 5-Cy-Cy-Ph5-O2 | - | - | | 5.0% | 10.0% |
| 2-Cy-Ph-Ph5-O2 | 5.0% | 5.0% | | 9.0% | 3.0% |
| 3-Cy-Ph-Ph5-O2 | 10.0% | 10.0% | | 9.0% | 5.0% |
| 3-Ph-Ph5-Ph-2 | 11.5% | - | | 7.0% | 6.0% |
| 4-Ph-Ph5-Ph-2 | - | - | | 7.0% | 3.0% |
| Total | 100.0% | 100.0% | | 100.0% | 100.0% |
| Tni [°C] | 76 | 76 | | 76 | 76 |
| Δn | 0.102 | 0.102 | | 0.109 | 0.109 |
| Δε | -2.8 | -2.9 | | -2.9 | -2.9 |
| γ₁ [mPa·s] | 114 | 120 | | 112 | 113 |
| K₃₃ [pN] | 13.6 | 15.4 | | 13.7 | 15.4 |
| γ₁/K₃₃ [mPa·s·pN⁻¹] | 8.4 | 7.8 | | 8.4 | 7.3 |

Each of the LC-F1 and LC-G1 as the liquid crystal composition of the present invention had a sufficiently small γ₁ and large K₃₃. Thus, in the LC-F1 and LC-G1, γ₁/K₃₃ that is the indicator of response speed was clearly smaller than the LC-F and LC-G as the comparative examples. In addition, the response speed thereof was measured, and the result of the measurement showed an improvement in the response speed in a similar degree.
The prepared liquid crystal compositions LC-F, LC-F1, LC-G, and LC-G1 were vacuum-injected into test cells, and then the test cells were subjected to measurement of VHRs before and after UV radiation. Each of the LC-F1 and LC-G1 as the liquid crystal composition of the present invention had an approximately similar or improved VHR after the UV radiation as compared with the LC-F and LC-G as the comparative examples, which showed that the improvement in the response speed did not have any adverse effect on the UV resistance of the liquid crystal materials. Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for example, a VA type that used such a liquid crystal composition had an excellent display quality. (Comparative Examples 8 and 9 and Examples 10 and 11)

Liquid crystal compositions LC-H (Comparative Example 8), LC-H1 (Example 10-1), LC-H2 (Example 10-2), LC-I (Comparative Example 9), and LC-I1 (Comparative Example 11) were prepared. Table 11 shows the constitution and physical properties of the liquid crystal compositions.

**[Table 11]**

| | Comparative Example 8 | Example 10-1 | Example 10-2 | | Comparative Example 9 | Example 11 |
|---|---|---|---|---|---|---|
| | LC-H | LC-H1 | LC-H2 | | LC-I | LC-I1 |
| 1-Ph-2-Ph-Ph5-O2 | - | 4.5% | - | | - | - |
| 2-Ph-2-Ph-Ph5-O2 | - | 5.0% | - | | - | 4.0% |
| 3-Ph-2-Ph-Ph5-O2 | - | - | 3.0% | | - | - |
| 2-Ph-Ph-2-Ph5-O2 | - | - | 3.0% | | - | - |
| 3-Ph-Ph-2-Ph5-O2 | - | - | 4.0% | | - | 4.0% |
| 3-Cy-Cy-2 | 8.0% | 8.0% | 8.0% | | - | - |
| 3-Cy-Cy-4 | 7.5% | 7.5% | 7.5% | | - | - |
| 3-Cy-Cy-V | 14.5% | 15.0% | 17.0% | | 28.0% | 26.0% |
| 3-Cy-Cy-V1 | 9.5% | 9.5% | 9.5% | | 9.5% | 9.5% |
| 3-Cy-Ph5-O2 | 7.0% | 7.5% | 4.5% | | 7.0% | 10.5% |
| 3-Ph-Ph5-O2 | 16.0% | 14.0% | 16.0% | | 16.5% | 12.0% |
| 3-Cy-Cy-Ph5-O1 | - | - | - | | 7.0% | 8.5% |
| 3-Cy-Cy-Ph5-O2 | 10.0% | 10.0% | 6.5% | | 10.5% | 12.0% |
| 5-Cy-Cy-Ph5-O2 | 8.0% | 7.5% | 5.0% | | - | - |
| 3-Cy-Cy1-Ph5-O2 | - | - | 4.0% | | - | - |
| 2-Cy-Ph-Ph5-O2 | 3.0% | - | 6.0% | | 8.0% | 5.0% |
| 3-Cy-Ph-Ph5-O2 | 8.5% | 8.5% | 6.0% | | 10.0% | 5.0% |
| 2-Ph-Ph1-Ph5-O4 | - | - | - | | 3.5% | 3.5% |
| 3-Ph-Ph5-Ph-2 | 8.0% | 3.0% | - | | - | - |
| Total | 100.0% | 100.0% | 100.0% | | 100.0% | 100.0% |
| Tni [°C] | 75 | 76 | 76 | | 76 | 76 |
| Δn | 0.109 | 0.109 | 0.109 | | 0.109 | 0.109 |
| Δε | -2.9 | -2.9 | -2.9 | | -2.8 | -2.9 |
| γ₁ [mPa·s] | 100 | 105 | 109 | | 96 | 102 |
| K₃₃ [pN] | 14.5 | 15.8 | 16.5 | | 14.4 | 15.9 |
| γ₁/K₃₃ [mPa·s·pN⁻¹] | 6.9 | 6.6 | 6.6 | | 6.7 | 6.4 |

Each of the LC-H1, LC-H2, and LC-I1 as the liquid crystal composition of the present invention had a sufficiently small γ₁ and large K₃₃. Thus, in the LC-H1, LC-H2, and LC-I1, γ₁/K₃₃ that is the indicator of response speed was clearly smaller than the LC-H and LC-I as the comparative examples. In addition, the response speed thereof was measured, and the result of the measurement showed an improvement in the response speed in a similar degree.
The prepared liquid crystal compositions LC-H, LC-H1, LC-H2, LC-I, and LC-I1 were vacuum-injected into test cells, and then the test cells were subjected to measurement of VHRs before and after UV radiation. Each of the LC-H1 and LC-I1 as the liquid crystal composition of the present invention had an approximately similar or improved VHR after the UV radiation as compared with the LC-H and LC-I as the comparative examples, which showed that the improvement in the response speed did not have any adverse effect on the UV resistance of the liquid crystal materials.

Accordingly, the liquid crystal composition of the present invention had a sufficiently good nematic phase-isotropic liquid phase transition temperature (Tₙᵢ), refractive index anisotropy (Δn), dielectric anisotropy (Δε), rotational viscosity (γ₁), elastic constant (K₃₃), and UV resistance; and the liquid crystal display device of, for instance, a VA type that used such a liquid crystal composition had an excellent display quality. (Examples 12-1 to 12-5)
Liquid crystal compositions MLC-F1 (Example 12-1), MLC-G1 (Example 12-2), MLC-H1 (Example 12-3), MLC-H2 (Example 12-4), and MLC-I1 (Example 12-5) were prepared. Table 12 shows the constitution of the liquid crystal compositions.

**[Table 12]**

| | | Example 12-1 | Example 12-2 | Example 12-3 | Example 12-4 | Example 12-5 |
|---|---|---|---|---|---|---|
| | | MLC-F1 | MLC-G1 | MLC-H1 | MLC-H2 | MLC-I1 |
| Liquid crystal composition | LC-F1 | 99.80% | | | | |
| | LC-G1 | | 99.80% | | | |
| | LC-H1 | | | 99.70% | | |
| | LC-H2 | | | | 99.70% | |
| | LC-I1 | | | | | 99.65% |
| Polymerizable compound | Formula (P-b-1) | 0.20% | 0.20% | 0.30% | 0.30% | 0.35% |
| Total | | 100.00% | 100.00% | 100.00% | 100.00% | 100.00% |

In each of the MLC-F1, MLC-G1, MLC-H1, MLC-H2, and MLC-11 as the liquid crystal composition of the present invention, a proper pretilt angle ranging from 85 to 88° was generated in the test cell. Liquid crystal display devices of a PSVA or PSA type that used such liquid crystal compositions had an excellent display quality.

## Claims

1. A liquid crystal composition comprising at least one compound represented by General Formula (a) 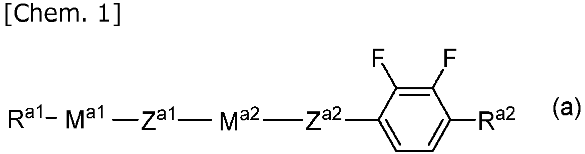
(where R^{a1} and R^{a2} each independently represent an alkyl group having 1 to 10 carbon atoms or an alkenyl group having 2 to 10 carbon atoms; in the alkyl group or alkenyl group, one -CH₂- or at least two -CH₂-'s not adjoining each other are each independently optionally substituted with -O- or -S-, and one or more hydrogen atoms are each independently optionally substituted with a fluorine atom or a chlorine atom;
M^{a1} and M^{a2} each independently represent a group selected from the group consisting of
(b) a 1,4-phenylene group (in which one - CH = or two or more - CH = 's not adjoining each other are each optionally substituted with - N =),
(c) a naphthalene-2,6-diyl group (in which one - CH = or two or more - CH = 's not adjoining each other are each optionally substituted with - N =);
the groups (b) and (c) are each independently optionally substituted with a cyano group, a fluorine atom, or a chlorine atom,
wherein at least one compound is represented by General Formula (a) in which M^{a1} and M^{a2} are each an unsubstituted 1,4-phenylene group;
and Z^{a1} represents -CH₂CH₂-, and Z^{a2} represents a single bond or -CH₂CH₂-) and at least one compound represented by General Formula (L-1) 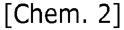 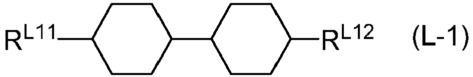 (where R^{L11} and R^{L12} each independently represent an alkyl group having 1 to 10 carbon atoms; in the alkyl group, one -CH₂- or two or more -CH₂-'s not adjoining each other are each independently optionally substituted with -CH=CH-, -C≡C-, -O-, -CO-, -COO-, or -OCO-).

2. The liquid crystal composition according to Claim 1, further comprising at least one of compounds represented by General Formulae (LC3), (LC4), and (LC5) 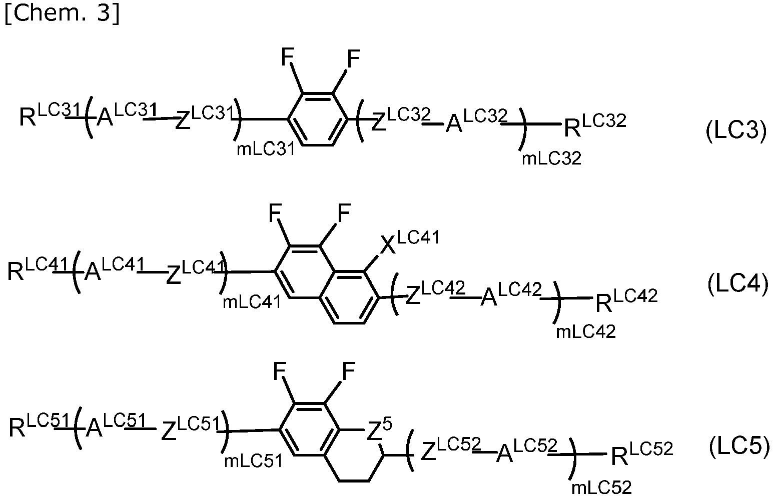
(where R^{LC31}, R^{LC32}, R^{LC41}, R^{LC42}, R^{LC51}, and R^{LC52} each independently represent an alkyl group having 1 to 10 carbon atoms; at least one -CH₂- in the alkyl group is optionally substituted with -O-, -S-, -CH=CH-, -CO-,-OCO-, -COO-, -C≡C-, -CF₂O-, or -OCF₂- such that oxygen atoms are not directly bonded to each other; one or more hydrogen atoms in the alkyl group are each independently optionally substituted with a fluorine atom or a chlorine atom; A^{LC31}, A^{LC32}, A^{LC41}, A^{LC42}, A^{LC51}, and A^{LC52} each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=);
the groups (a) to (c) are each independently optionally substituted with a cyano group, a fluorine atom, or a chlorine atom; Z^{LC31}, Z^{LC32}, Z^{LC41}, Z^{LC42}, Z^{LC51}, and Z^{LC52} each independently represent a single bond -CH=CH-, -C≡C-, -CH₂CH₂-, -(CH₂)₄-, -COO-, -OCO-, -OCH₂-, -CH₂O-, -OCF₂-, or -CF₂O-; Z⁵ represents -CH₂- or an oxygen atom; X^{LC41} represents a hydrogen atom or a fluorine atom; m^{LC31}, m^{LC32}, m^{LC41}, m^{LC42}, m^{LC51}, and m^{LC52} each independently represent an integer from 0 to 3; m^{LC31} + m^{LC32}, m^{LC41} + m^{LC42}, and m^{LC51} + m^{LC52} are each 1, 2, or 3; in the case where A^{LC31} and Z^{LC31} are multiple, the corresponding ones of them may be the same as or different from each other; in the case where A^{LC32} and Z^{LC32} are multiple, the corresponding ones of them may be the same as or different from each other; in the case where A^{LC41} and Z^{LC41} are multiple, the corresponding ones of them may be the same as or different from each other; in the case where A^{LC42} and Z^{LC42} are multiple, the corresponding ones of them may be the same as or different from each other; in the case where A^{LC51} and Z^{LC51} are multiple, the corresponding ones of them may be the same as or different from each other; in the case where A^{LC52} and Z^{LC52} are multiple, the corresponding ones of them may be the same as or different from each other; the compounds represented by General Formulae (LC3) to (LC5) exclude the compound represented by General Formula (a); the compounds represented by General Formulae (LC4) and (LC5) exclude the compound represented by General Formula (LC3); and the compound represented by General Formula (LC5) excludes the compound represented by General Formula (LC4)).

3. The liquid crystal composition according to Claim 2, wherein at least one compound represented by General Formula (i) is used as the compound represented by General Formula (LC3) 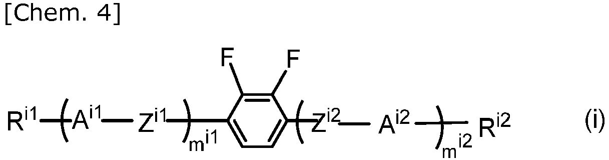
(where Rⁱ¹ and Rⁱ² each independently represent an alkyl group having 1 to 10 carbon atoms or an alkenyl group having 2 to 10 carbon atoms; in each of these groups, at least one -CH₂- or two or more -CH₂-'s not adjoining each other are each independently optionally substituted with -O- or -S-, and one or more hydrogen atoms are each independently optionally substituted with a fluorine atom or a chlorine atom; Aⁱ¹ and Aⁱ² each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=);
the groups (a) to (c) are each independently optionally substituted with a cyano group, a fluorine atom, or a chlorine atom; Zⁱ¹ and Zⁱ² each independently represent a single bond, -OCH₂-, -CH₂O-, -OCF₂-, -CF₂O-,-CH₂CH₂-, or -CF₂CF₂-; at least one Zⁱ¹ represents -OCH₂-, -CH₂O-, -OCF₂-,-CF₂O-, -CH₂CH₂-, or -CF₂CF₂-; mⁱ¹ is an integer from 1 to 3; mⁱ² is an integer from 0 to 3; mⁱ¹ + mⁱ² is 1, 2, or 3; in the case where Aⁱ¹ and Zⁱ¹ are multiple, the corresponding ones of them may be the same as or different from each other; and in the case where Aⁱ² and Zⁱ² are multiple, the corresponding ones of them may be the same as or different from each other).

4. The liquid crystal composition according to any one of Claims 2 and 3, wherein at least one compound represented by General Formula (ii) is used as the compound represented by General Formula (LC3) 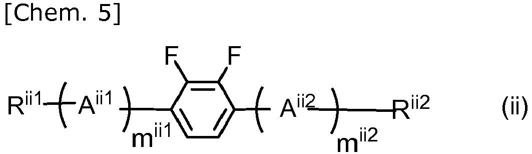
(where Rⁱⁱ¹ and Rⁱⁱ² each independently represent an alkyl group having 1 to 10 carbon atoms or an alkenyl group having 2 to 10 carbon atoms; in each of these groups, at least one -CH₂- or two or more -CH₂-'s not adjoining each other are each independently optionally substituted with -O- or -S-, and one or more hydrogen atoms are each independently optionally substituted with a fluorine atom or a chlorine atom; Aⁱⁱ¹ and Aⁱⁱ² each independently represent a group selected from the group consisting of
(a) a 1,4-cyclohexylene group (in which one -CH₂- or two or more -CH₂-'s not adjoining each other are each optionally substituted with -O-),
(b) a 1,4-phenylene group (in which one -CH= or two or more -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or two or more -CH='s not adjoining each other are each optionally substituted with -N=);
the groups (a) to (c) are each independently optionally substituted with a cyano group, a fluorine atom, or a chlorine atom; mⁱⁱ¹ is an integer from 1 to 3; mⁱⁱ² is an integer from 0 to 3; mⁱⁱ¹ + mⁱⁱ² is 1, 2, or 3; and in the case where Aⁱⁱ¹ and Aⁱⁱ² are multiple, the corresponding ones of them may be the same as or different from each other).

5. The liquid crystal composition according to any one of Claims 1 to 4, further comprising at least one compound represented by General Formula (L) 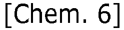 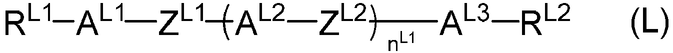
(where R^{L1} and R^{L2} each independently represent an alkyl group having 1 to 10 carbon atoms; in the alkyl group, one -CH₂- or at least two -CH₂-'s not adjoining each other are each independently optionally substituted with-CH=CH-, -C≡C-, -O-, -CO-, -COO-, or -OCO-;
n^{L1} represents 0, 1, 2, or 3;
A^{L1}, A^{L2}, and A^{L3} each independently represent a group selected from the group consisting of
(a) a 1,4-cyclohexylene group (in which one -CH₂- or at least two -CH₂-'s not adjoining each other are each optionally substituted with -O-),
(b) a 1,4-phenylene group (in which one -CH= or at least two -CH='s not adjoining each other are each optionally substituted with -N=), and
(c) a naphthalene-2,6-diyl group, a 1,2,3,4-tetrahydronaphthalene-2,6-diyl group, or a decahydronaphthalene-2,6-diyl group (in the naphthalene-2,6-diyl group or the 1,2,3,4-tetrahydronaphthalene-2,6-diyl group, one -CH= or at least two -CH='s not adjoining each other are each optionally substituted with -N=);
the groups (a) to (c) are each independently optionally substituted with a cyano group, a fluorine atom, or a chlorine atom;
Z^{L1} and Z^{L2} each independently represent a single bond, -CH₂CH₂-,-(CH₂)₄-, -OCH₂-, -CH₂O-, -COO-, -OCO-, -OCF₂-, -CF₂O-, -CH=N-N=CH-,-CH=CH-, -CF=CF-, or -C≡C-;
in the case where A^{L2} and Z^{L3} are multiple, the corresponding ones of them may be the same as or different from each other; the compound represented by General Formula (L) excludes the compounds represented by General Formulae (a), (L-1), (LC3), (LC4), and (LC5)).

6. The liquid crystal composition according to any one of Claims 1 to 5, wherein the compound represented by General Formula (L-1) is at least one compound represented by General Formula (L-1) in which R^{L11} and R^{L12} each independently represent a linear alkyl group having 1 to 10 carbon atoms, a linear alkoxy group having 1 to 9 carbon atoms, or a linear alkenyl group having 2 to 10 carbon atoms.

7. The liquid crystal composition according to any one of Claims 1 to 6, wherein at least one compound represented by General Formula (a) in which M^{a2} is an unsubstituted 1,4-phenylene group or an unsubstituted naphthalene-2,6-diyl group is used.

8. The liquid crystal composition according to any one of Claims 1 to 7, wherein the amount of the compound represented by General Formula (a) in the liquid crystal composition is in the range of 0.5 mass% to 35 mass%.

9. The liquid crystal composition according to any one of Claims 3 to 8, wherein the amount of the compound represented by General Formula (i) in the liquid crystal composition is in the range of 1 mass% to 25 mass%.

10. The liquid crystal composition according to any one of Claims 1 to 9, further comprising at least one polymerizable compound.

11. A liquid crystal display device comprising the liquid crystal composition according to any one of Claims 1 to 10.

## Patentansprüche

1. Flüssigkristallzusammensetzung umfassend
zumindest eine durch die allgemeine Formel (a) dargestellt Verbindung 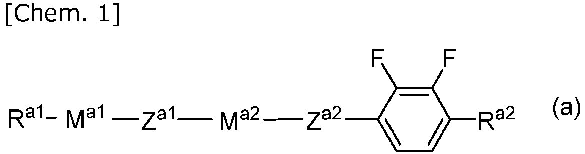
(wobei R^{a1} und R^{a2} jeweils unabhängig eine Alkylgruppe mit 1 bis 10 Kohlenstoffatomen oder eine Alkenylgruppe mit 2 bis 20 Kohlenstoffatomen darstellen; in der Alkylgruppe oder Alkenylgruppe, ein -CH₂- oder zumindest zwei -CH₂-'s, die nicht aneinandergrenzen, jeweils unabhängig optional mit -O- oder -S- substituiert sind, und ein oder mehrere Wasserstoffatome jeweils unabhängig optional mit einem Fluoratom oder einem Chloratom substituiert sind;
M^{a1} und M^{a2} jeweils unabhängig darstellen eine Gruppe ausgewählt aus der Gruppe bestehend aus
(b) einer 1,4-Phenylengrupppe (in welcher ein - CH = oder zwei oder mehrere - CH = 's, die nicht aneinandergrenzen, jeweils optional mit - N = substituiert sind),
(c) einer Naphthalengruppe-2,6-Diylgruppe (in welcher ein - CH = oder zwei oder mehrere - CH = 's, die nicht aneinandergrenzen, jeweils optional mit - N = substituiert sind);
die Gruppen (b) und (c) jeweils unabhängig optional mit einer Cyanogruppe, einem Fluoratom oder einem Chloratom substituiert sind,
wobei zumindest eine Verbindung dargestellte ist durch allgemeine Formel (a), in welcher M^{a1} und M^{a2} jeweils eine unsubstituierte 1,4-Phenylengruppe sind;
und Z^{a1} -CH₂CH₂- darstellt und Z^{a2} eine Einfachbindung oder -CH₂CH₂- darstellt) und zumindest eine durch allgemeine Formel (L-1) dargestellte Verbindung 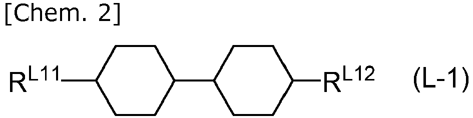 (wobei R^{L11} und R^{L12} jeweils unabhängig eine Alkylgruppe mit 1 bis 10 Kohlenstoffatomen darstellen; in der Alkylgruppe, ein -CH₂- oder zwei oder mehrere -CH₂-'s, die nicht aneinandergrenzen, jeweils optional mit -CH=CH-, -C≡C-, -O-, -CO-, -COO-, or -OCO-) substituiert sind.

2. Flüssigkristallzusammensetzung nach Anspruch 1, ferner umfassend zumindest eine durch allgemeine Formeln (LC3), (LC4) und (LC5) dargestellte Verbindung 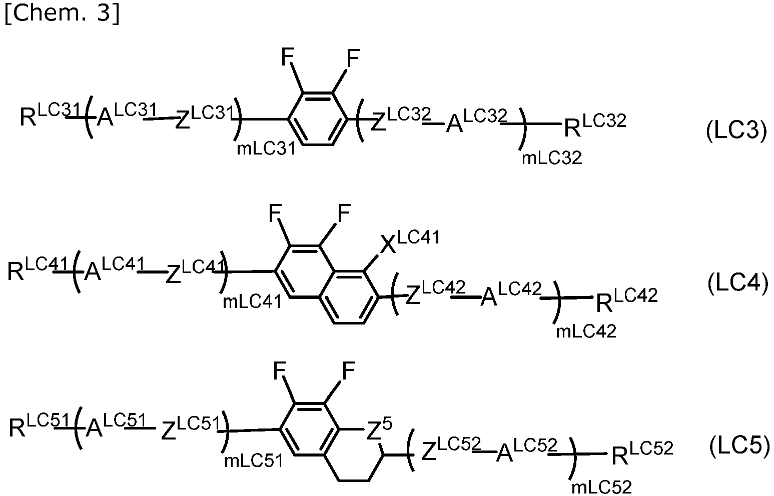
(wobei R^{LC31}, R^{LC32}, R^{LC41}, R^{LC42}, R^{LC51} und R^{LC52} jeweils unabhängig eine Alkylgruppe mit 1 bis 10 Kohlenstoffatomen darstellen; zumindest ein -CH₂- in der Alkylgruppe optional mit -O-, -S-, -CH=CH-, -CO-, -OCO-, COO-, -C≡C-, -CF₂O- oder -OCF₂- substituiert ist, so dass Sauerstoffatome nicht direkt aneinandergebunden sind; ein oder mehrere Wasserstoffatome in der Alkylgruppe jeweils unabhängig mit einem Fluoratom oder einem Chloratom substituiert sind; A^{LC31} , A^{LC32}, A^{LC41}, A^{LC42}, A^{LC51} und A^{LC52} jeweils unabhängig darstellen eine Gruppe ausgewählt aus der Gruppe bestehend aus
(a) einer 1,4-Cyclohexylengruppe (in welcher ein -CH₂- oder zwei oder mehrere -CH₂-'s, die nicht aneinandergrenzen, jeweils optional mit -O- substituiert sind),
(b) einer 1,4-Phenylengruppe (in welcher ein -CH= oder zwei oder mehrere -CH='s, die nicht aneinandergrenzen, jeweils optional mit -N= substituiert sind), und
(c) einer Naphthalen-2,6-Diylgruppe, einer 1,2,3,4-Tetrahydronaphthalen-2,6-Diylgruppe oder einer Decahydronaphthalen-2,6-Diylgruppe (in der Naphthalen-2,6-Diylgruppe oder der 1,2,3,4-Tetrahydronaphthalen-2,6-Diylgrupppe, ein -CH= oder zwei oder mehrere -CH='s, die nicht aneinandergrenzen, jeweils optional mit -N= substituiert sind);
die Gruppen (a) bis (c) jeweils unabhängig optional mit einer Cyanogruppe substituiert sind, einem Fluoratom oder einem Chloratom; Z^{LC31}, Z^{LC32}, Z^{LC41}, Z^{LC42}, Z^{LC51} und Z^{LC52} jeweils unabhängig eine Einfachbindung -CH=CH-,-C≡C-, -CH₂CH₂-, -(CH₂)₄-, -COO-, -OCO-, -OCH₂-, -CH₂O-, -OCF₂- oder-CF₂O- darstellen; Z⁵ -CH₂- oder ein Sauerstoffatom darstellt; X^{LC41} ein Wasserstoffatom oder ein Fluoratom darstellt; m^{LC31}, m^{LC32}, m^{LC41}, m^{LC42}, m^{LC51} und m^{LC52} jeweils unabhängig eine ganze Zahl von 0 bis 3 darstellt; m^{LC31} + m^{LC32}, m^{LC41} + m^{LC42} und m^{LC51} + m^{LC52} jeweils 1, 2 oder 3 sind; in dem Fall, wo A^{LC31} und Z^{LC31} vielfach sind, die entsprechenden von diesen die gleichen oder unterschiedlich voneinander sein können; in dem Fall, wo A^{LC32} und Z^{LC32} vielfach sind, können die entsprechenden von diesen gleich oder unterschiedlich voneinander sein; in dem Fall, wo A^{LC41} und Z^{LC41} vielfach sind, können die entsprechenden von diesen gleich oder unterschiedlich voneinander sein; in dem Fall, wo A^{LC42} und Z^{LC42} vielfach sind, können die entsprechenden von diesen gleich oder unterschiedlich voneinander sein; in dem Fall, wo A^{LC51} und Z^{LC51} vielfach sind, können die entsprechenden von diesen gleich oder unterschiedlich voneinander sein; in dem Fall, wo A^{LC52} und Z^{LC52} vielfach sind, können die entsprechenden von diesen gleich oder unterschiedlich voneinander sein; die durch allgemeine Formeln (LC3) bis (LC5) dargestellten Verbindungen die durch allgemeine Formel (a) dargestellt Verbindung ausschließen; die durch allgemeine Formeln (LC4) und (LC5) dargestellten Verbindungen die durch allgemeine Formel (LC3) dargestellte Verbindung ausschließen; und die durch die allgemeine Formel (LC5) dargestellte Verbindung die durch allgemeine Formel (LC4) dargestellte Verbindung ausschließt).

3. Flüssigkristallzusammensetzung nach Anspruch 2, wobei zumindest eine durch allgemeine Formel (i) dargestellte Verbindung als die durch allgemeine Formel (LC3) dargestellte Verbindung verwendet wird 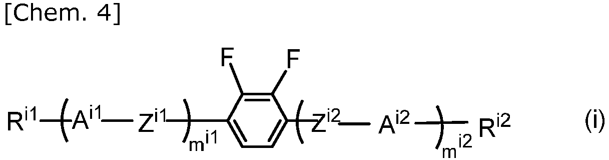
(wobei Rⁱ¹ und Rⁱ² jeweils unabhängig eine Alkylgruppe mit 1 bis 10 Kohlenstoffatomen oder eine Alkenylgruppe mit 2 bis 10 Kohlenstoffatomen darstellen; in jeder von diesen Gruppen sind zumindest eine -CH₂- oder zwei oder mehrere -CH₂-'s, die nicht aneinandergrenzen, jeweils unabhängig optional -O- oder -S- substituiert sind, und ein oder mehrere Wasserstoffatome sind jeweils unabhängig mit einem Fluoratom oder einem Chloratom substituiert sind; Aⁱ¹ und Aⁱ² jeweils unabhängig darstellen eine Gruppe ausgewählt aus der Gruppe bestehend aus
(a) einer 1,4-Cyclohexylengruppe (in welcher ein -CH₂- oder zwei oder mehrere -CH₂-'s, die nicht aneinandergrenzen, jeweils optional mit -O- substituiert sind),
(b) einer 1,4-Phenylengruppe (in welcher ein -CH= oder zwei oder mehrere -CH='s, die nicht aneinandergrenzen, jeweils optional mit -N= substituiert sind), und
(c) einer Naphthalen-2,6-Diylgruppe, einer 1,2,3,4-Tetrahydronaphthalen-2,6-Diylgruppe oder einer Decahydronaphthalen-2,6-Diylgruppe (in der Naphthalen-2,6-Diylgruppe oder der 1,2,3,4-Tetrahydronaphthalen-2,6-Diylgruppe, eine -CH= oder zwei oder mehrere -CH='s, die nicht aneinandergrenzen, jeweils optional mit -N= substituiert sind);
die Gruppen (a) bis (c) jeweils unabhängig optional mit einer Cyanogruppe, einem Fluoratom oder einem Chloratom substituiert sind; Zⁱ¹ und Zⁱ² jeweils unabhängig eine Einfachbindung, -OCH₂-, -CH₂O-, -OCF₂-, -CF₂O-, -CH₂CH₂-oder -CF₂CF₂- darstellen; und zumindest ein Zⁱ¹ -OCH₂-, -CH₂O-, -OCF₂-,-CF₂O-, -CH₂CH₂- oder -CF₂CF₂- darstellt; mⁱ¹ eine ganze Zahl von 1 bis 3 ist; mⁱ² eine ganze Zahl von 0 bis 3 ist; mⁱ¹ + mⁱ² 1, 2 oder 3 ist; in dem Fall, wo Aⁱ¹ und Zⁱ¹ vielfach sind, die entsprechenden von diesen dieselben oder unterschiedlich voneinander sein können; in dem Fall, wo Aⁱ² und Zⁱ² vielfach sind, sind die entsprechenden von diesen dieselben oder unterschiedlich voneinander sein können).

4. Flüssigkristallzusammensetzung nach einem der Ansprüche 2 und 3, wobei zumindest eine durch allgemeine Formel (ii) dargestellte Verbindung als die durch allgemeine Formel (LC3) dargestellte Verbindung verwendet wird 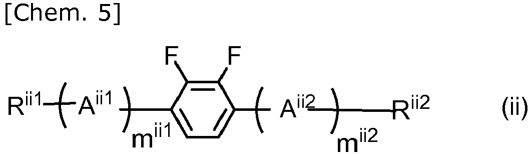
(wobei Rⁱⁱ¹ und Rⁱⁱ² jeweils unabhängig eine Alkylgruppe mit 1 bis 10 Kohlenstoffatom oder eine Alkenylgruppe mit 2 bis 10 Kohlenstoffatomen darstellen; in jeder von diesen Gruppen, zumindest ein -CH₂- oder zwei oder mehrere -CH₂-'s, die nicht aneinandergrenzen, jeweils unabhängig optional mit - O- oder -S- substituiert sind, und ein oder mehrere Wasserstoffatome jeweils unabhängig optional mit einem Fluoratom oder einem Chloratom substituiert sind; Aⁱⁱ¹ Und Aⁱⁱ² jeweils unabhängig darstellen eine Gruppe ausgewählt aus der Gruppe bestehend aus
(a) einer 1,4-Cyclohexylengruppe (in welcher ein -CH₂- oder zwei oder mehrere -CH₂-'s, die nicht aneinandergrenzen, jeweils optional mit -O- substituiert sind),
(b) einer 1,4-Phenylengruppe (in welcher ein -CH= oder zwei oder mehrere -CH='s, die nicht aneinandergrenzen, jeweils optional mit -N= substituiert sind), und
(c) einer Naphthalen-2,6-Diylgruppe, einer 1,2,3,4-Tetrahydronaphthalen-2,6-Diylgruppe oder einer Decahydronaphthalen-2,6-Diylgruppe (in der Naphthalen-2,6-Diylgruppe oder der 1,2,3,4-Tetrahydronaphthalen-2,6-Diylgruppe, ein -CH= oder zwei oder mehrere -CH='s, die nicht aneinandergrenzen, jeweils optional mit -N= substituiert sind);
die Gruppen (a) bis (c) jeweils optional mit einer Cyanogruppe, einem Fluoratom oder einem Chloratom substituiert sind; mⁱⁱ¹ eine ganze Zahl von 1 bis 3 ist; mⁱⁱ² eine ganze Zahl von 0 bis 3 ist; mⁱⁱ¹ + mⁱⁱ² 1, 2 oder 3 ist; und in dem Fall, wo Aⁱⁱ¹ und Aⁱⁱ² vielfach sind, die entsprechenden von diesen gleich oder unterschiedlich voneinander sein können).

5. Flüssigkristallzusammensetzung nach einem der Ansprüche 1 bis 4, ferner umfassend zumindest eine durch allgemeine Formel (L) dargestellte Verbindung 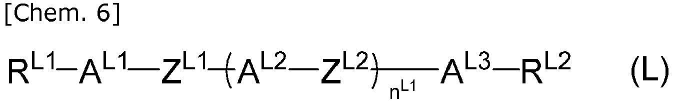
(wobei R^{L1} und R^{L2} jeweils unabhängig eine Alkylgruppe mit 1 bis 10 Kohlenstoffatomen darstellen; in der Alkylgruppe, ein -CH₂- oder zumindest zwei -CH₂-'s, die nicht aneinandergrenzen, jeweils optional mit CH=CH-, -C≡C-,-O-, -CO-, -COO-, oder -OCO- substituiert sind;
n^{L1} 0, 1, 2 oder 3 darstellt;
A^{L1}, A^{L2} und A^{L3} jeweils unabhängig darstellen eine Gruppe ausgewählt aus der Gruppe bestehend aus
(a) einer 1,4-Cyclohexylengruppe (in welcher ein -CH₂- oder zumindest zwei -CH₂-'s, die nicht aneinandergrenzen, jeweils optional mit -O- substituiert sind),
(b) einer 1,4-Phenylengruppe (in welcher ein -CH= oder zumindest zwei -CH='s, die nicht aneinandergrenzen, jeweils optional mit -N= substituiert sind), und
(c) einer Naphthalen-2,6-Diylgruppe, einer 1,2,3,4-Tetrahydronaphthalen-2,6-Diylgruppe oder einer Decahydronaphthalen-2,6-Diylgruppe (in der Naphthalen-2,6-Diylgruppe oder 1,2,3,4-Tetrahydronaphthalen-2,6-Diylgruppe, ein -CH= oder zumindest zwei -CH='s, die nicht aneinandergrenzen, jeweils optional-N= substituiert sind);
die Gruppen (a) bis (c) jeweils unabhängig optional mit einer Cyanogruppe, einem Fluoratom oder einem Chloratom substituiert sind;
Z^{L1} und Z^{L2} jeweils unabhängig eine Einfachbindung, -CH₂CH₂-,-(CH₂)₄-, -OCH₂-, -CH₂O-, -COO-, -OCO-, -OCF₂-, -CF₂O-, -CH=N-N=CH-, -CH=CH-, -CF=CF- oder -C≡C- darstellen;
in dem Fall, wo A^{L2} und Z^{L3} vielfach sind, die entsprechenden von diesen gleich oder unterschiedlich voneinander sein können; die durch allgemeine Formel (L) dargestellte Verbindung die durch allgemeine Formeln (a), (L-1), (LC3), (LC4) und (LC5) dargestellten Verbindungen ausschließt).

6. Flüssigkristallzusammensetzung nach einem der Ansprüche 1 bis 5, wobei die durch allgemeine Formel (L-1) dargestellte Verbindung zumindest eine durch allgemeine Formel (L-1) dargestellte Verbindung ist, in welcher R^{L11} und R^{L12} jeweils unabhängig eine lineare Alkylgruppe mit 1 bis 10 Kohlenstoffatomen, eine lineare Alkoxygruppe mit 1 bis 9 Kohlenstoffatomen oder eine lineare Alkenylgruppe mit 2 bis 10 Kohlenstoffatomen darstellen.

7. Flüssigkristallzusammensetzung nach einem der Ansprüche 1 bis 6, wobei zumindest eine Verbindung dargestellt durch allgemeine Formel (a), in welcher M^{a2} eine unsubstituierte 1,4-Phenylengruppe oder eine unsubstituierte Naphthalen-2,6-Diylgruppe ist, verwendet wird.

8. Flüssigkristallzusammensetzung nach einem der Ansprüche 1 bis 7, wobei die Menge der durch allgemeine Formel (a) dargestellten Verbindung in der Flüssigkristallzusammensetzung in dem Bereich von 0,5 Masse-% bis 35 Masse-% ist.

9. Flüssigkristallzusammensetzung nach einem der Ansprüche 3 bis 8, wobei die Menge der durch allgemeine Formel (i) dargestellten Verbindung in der Flüssigkristallzusammensetzung in dem Bereich von 1 Masse-% bis 25 Masse-% ist.

10. Flüssigkristallzusammensetzung nach einem der Ansprüche 1 bis 9, ferner umfassend zumindest eine polymerisierbare Verbindung.

11. Flüssigkristallanzeigeelement umfassend die Flüssigkristallzusammensetzung nach einem der Ansprüche 1 bis 10.

## Revendications

1. Composition de cristaux liquides comprenant
au moins un composé représenté par la formule générale (a) 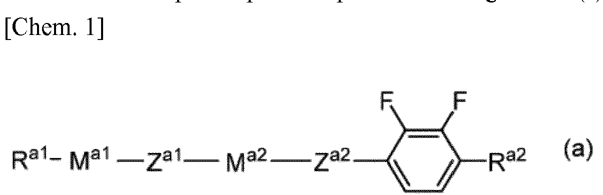
(où R^{a1} et R^{a2} représentent chacun indépendamment un groupe alkyle ayant 1 à 10 atomes de carbone ou un groupe alcényle ayant 2 à 10 atomes de carbone ; dans le groupe alkyle ou le groupe alcényle, un -CH₂- ou au moins deux -CH₂- non contigus l'un à l'autre sont éventuellement substitués chacun indépendamment avec -O- ou -S-, et un ou plusieurs atomes d'hydrogène sont éventuellement substitués chacun indépendamment avec un atome de fluor ou un atome de chlore ;
M^{a1} et M^{a2} représentent chacun indépendamment un groupe choisi dans le groupe consistant en
(b) un groupe 1,4-phénylène (dans lequel un -CH= ou deux ou plusieurs -CH= non contigus les uns aux autres sont éventuellement substitués chacun avec -N=),
(c) un groupe naphtalène-2,6-diyle (dans lequel un -CH= ou deux ou plusieurs -CH= non contigus les uns aux autres sont éventuellement substitués chacun avec -N=) ;
les groupes (b) et (c) sont éventuellement substitués chacun indépendamment avec un groupe cyano, un atome de fluor ou un atome de chlore,
où au moins un composé est représenté par la formule générale (a) dans laquelle M^{a1} et M^{a2} sont chacun un groupe 1,4-phénylène non substitué ;
et Z^{a1} représente -CH₂CH₂-, et Z^{a2} représente une simple liaison ou -CH₂CH₂-) et au moins un composé représenté par la formule générale (L-1) 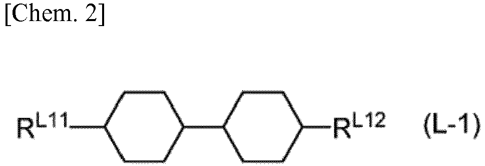 (où R^{L11} et R^{L12} représentent chacun indépendamment un groupe alkyle ayant 1 à 10 atomes de carbone ; dans le groupe alkyle, un -CH₂- ou deux ou plusieurs -CH₂- non contigus les uns aux autres sont éventuellement substitués chacun indépendamment avec -CH=CH-, -C≡C-, -O-, -CO-, -COO- ou -OCO-).

2. Composition de cristaux liquides selon la revendication 1, comprenant en outre au moins l'un de composés représentés par les formules générales (LC3), (LC4 et (LC5) 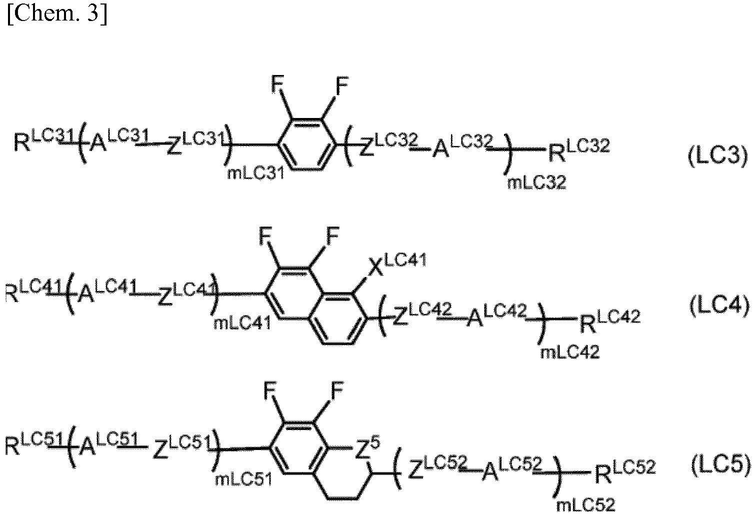
(où R^{LC31}, R^{LC32}, R^{LC41}, R^{LC42}, R^{LC51} et R^{LC52} représentent chacun indépendamment un groupe alkyle ayant 1 à 10 atomes de carbone ; au moins un-CH₂- dans le groupe alkyle est éventuellement substitué avec -O-, -S-, -CH=CH-, -CO-, -OCO-, -COO-, -C≡C-, -CF₂O- ou -OCF₂- de sorte que les atomes d'oxygène ne sont pas liés directement les uns aux autres ; un ou plusieurs atomes d'hydrogène dans le groupe alkyle sont éventuellement substitués chacun indépendamment avec un atome de fluor ou un atome de chlore ; A^{LC31}, A^{LC32}, A^{LC41}, A^{LC42}, A^{LC51} et A^{LC52} représentent chacun indépendamment un groupe choisi dans le groupe consistant en
(a) un groupe 1,4-cyclohexylène (dans lequel un -CH₂- ou deux ou plusieurs -CH₂- non contigus les uns aux autres sont éventuellement substitués chacun avec -O-),
(b) un groupe 1,4-phénylène (dans lequel un -CH= ou deux ou plusieurs -CH= non contigus les uns aux autres sont éventuellement substitués chacun avec -N=), et
(c) un groupe naphtalène-2,6-diyle, un groupe 1,2,3,4-tétrahydronaphtalène-2,6-diyle ou un groupe décahydronaphtalène-2,6-diyle (dans le groupe naphtalène-2,6-diyle ou le groupe 1,2,3,4-tétrahydronaphtalène-2,6-diyle, un -CH= ou deux ou plusieurs -CH= non contigus les uns aux autres sont éventuellement substitués chacun avec -N=) ;
les groupes (a) à (c) sont éventuellement substitués chacun indépendamment avec un groupe cyano, un atome de fluor ou un atome de chlore ; Z^{LC31}, Z^{LC32}, Z^{LC41}, Z^{LC42}, Z^{LC51} et Z^{LC52} représentent chacun indépendamment une simple liaison, -CH=CH-, -C≡C-, -CH₂CH₂-, -(CH₂)₄-, -COO-, -OCO-, -OCH₂-, -CH₂O-, -OCF₂-ou -CF₂O- ; Z⁵ représente -CH₂- ou un atome d'oxygène ; X^{LC41} représente un atome d'hydrogène ou un atome de fluor ; m^{LC31}, m^{LC32} , m^{LC41}, m^{LC42}, m^{LC51} et m^{LC52} représentent chacun indépendamment un entier de 0 à 3 ; m^{LC31} + m^{LC32}, m^{LC41} + m^{LC42} et m^{LC51} + m^{LC52} sont chacun 1, 2 ou 3 ; dans le cas où A^{LC31} et Z^{LC31} sont multiples, les correspondants d'entre eux peuvent être identiques ou différents les uns des autres ; dans le cas où A^{LC32} et Z^{LC32} sont multiples, les correspondants d'entre eux peuvent être identiques ou différents les uns des autres ; dans le cas où A^{LC41} et Z^{LC41} sont multiples, les correspondants d'entre eux peuvent être identiques ou différents les uns des autres ; dans le cas où A^{LC42} et Z^{LC42} sont multiples, les correspondants d'entre eux peuvent être identiques ou différents les uns des autres ; dans le cas où A^{LC51} et Z^{LC51} sont multiples, les correspondants d'entre eux peuvent être identiques ou différents les uns des autres ; dans le cas où A^{LC52} et Z^{LC52} sont multiples, les correspondants d'entre eux peuvent être identiques ou différents les uns des autres ; les composés représentés par les formules générales (LC3) à (LC5) excluent le composé représenté par la formule générale (a) ; les composés représentés par les formules générales (LC4) et (LC5) excluent le composé représenté par la formule générale (LC3) ; et le composé représenté par la formule générale (LC5) exclut le composé représenté par la formule générale (LC4)).

3. Composition de cristaux liquides selon la revendication 2, où au moins un composé représenté par la formule générale (i) est utilisé comme composé représenté par la formule (LC3) 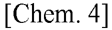 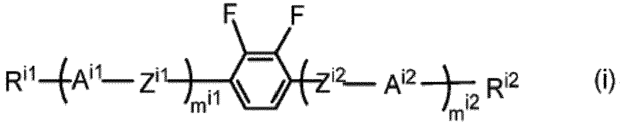
(où Rⁱ¹ et Rⁱ² représentent chacun indépendamment un groupe alkyle ayant 1 à 10 atomes de carbone ou un groupe alcényle ayant 2 à 10 atomes de carbone ; dans chacun de ces groupes, au moins un -CH₂- ou deux ou plusieurs -CH₂- non contigus les uns aux autres sont éventuellement substitués chacun indépendamment avec -O- ou -S-, et un ou plusieurs atomes d'hydrogène sont éventuellement substitués chacun indépendamment avec un atome de fluor ou un atome de chlore ; Aⁱ¹ et Aⁱ² représentent chacun indépendamment un groupe choisi dans le groupe consistant en
(a) un groupe 1,4-cyclohexylène (dans lequel un -CH₂- ou deux ou plusieurs -CH₂- non contigus les uns aux autres sont éventuellement substitués chacun avec -O-),
(b) un groupe 1,4-phénylène (dans lequel un -CH= ou deux ou plusieurs -CH= non contigus les uns aux autres sont éventuellement substitués chacun avec -N=), et
(c) un groupe naphtalène-2,6-diyle, un groupe 1,2,3,4-tétrahydronaphtalène-2,6-diyle ou un groupe décahydronaphtalène-2,6-diyle (dans le groupe naphtalène-2,6-diyle ou le groupe 1,2,3,4-tétrahydronaphtalène-2,6-diyle, un -CH= ou deux ou plusieurs -CH= non contigus les uns aux autres sont éventuellement substitués chacun avec -N=) ;
les groupes (a) à (c) sont éventuellement substitués chacun indépendamment avec un groupe cyano, un atome de fluor ou un atome de chlore ; Zⁱ¹ et Zⁱ² représentent chacun indépendamment une simple liaison, -OCH₂-, -CH₂O-, -OCF₂-, -CF₂O-, -CH₂CH₂- ou -CF₂CF₂- ; au moins un Zⁱ¹ représente -OCH₂-, -CH₂O-, -OCF₂-, -CF₂O-, -CH₂CH₂- ou -CF₂CF₂- ; mⁱ¹ est un entier de 1 à 3 ; mⁱ² est un entier de 0 à 3 ; mⁱ¹ + mⁱ² est 1, 2 ou 3 ; dans le cas où Aⁱ¹ et Zⁱ¹ sont multiples, les correspondants d'entre eux peuvent être identiques ou différents les uns des autres ; et dans le cas où Aⁱ² et Zⁱ² sont multiples, les correspondants d'entre eux peuvent être identiques ou différents les uns des autres).

4. Composition de cristaux liquides selon l'une quelconque des revendications 2 et 3, où au moins un composé représenté par la formule générale (ii) est utilisé comme composé représenté par la formule (LC3) 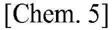 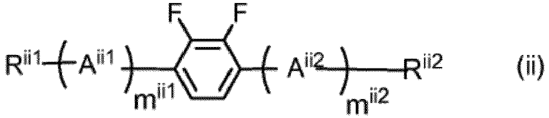
(où Rⁱⁱ¹ et Rⁱⁱ² représentent chacun indépendamment un groupe alkyle ayant 1 à 10 atomes de carbone ou un groupe alcényle ayant 2 à 10 atomes de carbone ; dans chacun de ces groupes, au moins un -CH₂- ou deux ou plusieurs -CH₂- non contigus les uns aux autres sont éventuellement substitués chacun indépendamment avec -O- ou -S-, et un ou plusieurs atomes d'hydrogène sont éventuellement substitués chacun indépendamment avec un atome de fluor ou un atome de chlore ; Aⁱⁱ¹ et Aⁱⁱ² représentent chacun indépendamment un groupe choisi dans le groupe consistant en
(a) un groupe 1,4-cyclohexylène (dans lequel un -CH₂- ou deux ou plusieurs -CH₂- non contigus les uns aux autres sont éventuellement substitués chacun avec -O-),
(b) un groupe 1,4-phénylène (dans lequel un -CH= ou deux ou plusieurs -CH= non contigus les uns aux autres sont éventuellement substitués chacun avec -N=), et
(c) un groupe naphtalène-2,6-diyle, un groupe 1,2,3,4-tétrahydronaphtalène-2,6-diyle ou un groupe décahydronaphtalène-2,6-diyle (dans le groupe naphtalène-2,6-diyle ou le groupe 1,2,3,4-tétrahydronaphtalène-2,6-diyle, un -CH= ou deux ou plusieurs -CH= non contigus les uns aux autres sont éventuellement substitués chacun avec -N=) ;
les groupes (a) à (c) sont éventuellement substitués chacun indépendamment avec un groupe cyano, un atome de fluor ou un atome de chlore ; mⁱⁱ¹ est un entier de 1 à 3 ; mⁱⁱ² est un entier de 0 à 3 ; mⁱⁱ¹ + mⁱⁱ² est 1, 2 ou 3 ; et dans le cas où Aⁱⁱ¹ et Aⁱⁱ² sont multiples, les correspondants d'entre eux peuvent être identiques ou différents les uns des autres).

5. Composition de cristaux liquides selon l'une quelconque des revendications 1 à 4, comprenant en outre au moins un composé représenté par la formule générale (L) 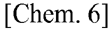 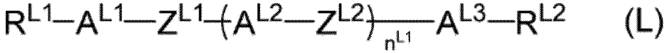
(où R^{L1} et R^{L2} représentent chacun indépendamment un groupe alkyle ayant 1 à 10 atomes de carbone ; dans le groupe alkyle, un -CH₂- ou au moins deux -CH₂- non contigus les uns aux autres sont éventuellement substitués chacun indépendamment avec -CH=CH-, -C≡C-, -O-, -CO-, -COO- ou -OCO- ;
n^{L1} représente 0, 1, 2 ou 3 ;
A^{L1}, A^{L2} et A^{L3} représentent chacun indépendamment un groupe choisi dans le groupe consistant en
(a) un groupe 1,4-cyclohexylène (dans lequel un -CH₂- ou au moins deux -CH₂-non contigus les uns aux autres sont éventuellement substitués chacun avec -O-),
(b) un groupe 1,4-phénylène (dans lequel un -CH= ou au moins deux -CH= non contigus les uns aux autres sont éventuellement substitués chacun avec -N=), et
(c) un groupe naphtalène-2,6-diyle, un groupe 1,2,3,4-tétrahydronaphtalène-2,6-diyle ou un groupe décahydronaphtalène-2,6-diyle (dans le groupe naphtalène-2,6-diyle ou le groupe 1,2,3,4-tétrahydronaphtalène-2,6-diyle, un -CH= ou au moins deux -CH= non contigus les uns aux autres sont éventuellement substitués chacun avec -N=) ;
les groupes (a) à (c) sont éventuellement substitués chacun indépendamment avec un groupe cyano, un atome de fluor ou un atome de chlore ;
Z^{L1} et Z^{L2} représentent chacun indépendamment une simple liaison, -CH₂CH₂-, -(CH₂)₄-, -OCH₂-, -CH₂O-, -COO-, -OCO-, -OCF₂-, -CF₂O-, -CH=N-N=CH-, -CH=CH-, -CF=CF- ou -C≡C- ;
dans le cas où A^{L2} et Z^{L3} sont multiples, les correspondants d'entre eux peuvent être identiques ou différents les uns des autres ; le composé représenté par la formule générale (L) exclut les composés représentés par les formules générales (a), (L-1), (LC3), (LC4) et (LC5)).

6. Composition de cristaux liquides selon l'une quelconque des revendications 1 à 5, où le composé représenté par la formule générale (L-1) est au moins un composé représenté par la formule générale (L-1) dans laquelle R^{L11} et R^{L12} représentent chacun indépendamment un groupe alkyle linéaire ayant 1 à 10 atomes de carbone, un groupe alcoxy linéaire ayant 1 à 9 atomes de carbone ou un groupe alcényle linéaire ayant 2 à 10 atomes de carbone.

7. Composition de cristaux liquides selon l'une quelconque des revendications 1 à 6, où au moins un composé représenté par la formule générale (a) dans laquelle M^{a2} est un groupe 1,4-phénylène non substitué ou un groupe naphtalène-2,6-diyle non substitué est utilisé.

8. Composition de cristaux liquides selon l'une quelconque des revendications 1 à 7, où la quantité du composé représenté par la formule générale (a) dans la composition de cristaux liquides est dans la plage de 0,5 % en masse à 35 % en masse.

9. Composition de cristaux liquides selon l'une quelconque des revendications 3 à 8, où la quantité du composé représenté par la formule générale (i) dans la composition de cristaux liquides est dans la plage de 1 % en masse à 25 % en masse.

10. Composition de cristaux liquides selon l'une quelconque des revendications 1 à 9, comprenant en outre au moins un composé polymérisable.

11. Dispositif d'affichage à cristaux liquides comprenant la composition de cristaux liquides selon l'une quelconque des revendications 1 à 10.
